(19) **Europäisches Patentamt / European Patent Office / Office européen des brevets**

(11) **EP 4 002 856 A1**

(12) **EUROPEAN PATENT APPLICATION**
published in accordance with Art. 153(4) EPC

(43) Date of publication:
**25.05.2022 Bulletin 2022/21**

(21) Application number: **20843493.6**

(22) Date of filing: **07.07.2020**

(51) International Patent Classification (IPC):
*H04N 21/2381* (2011.01)   *H04N 21/2343* (2011.01)
*H04N 21/236* (2011.01)   *H04N 21/235* (2011.01)
*H04N 21/438* (2011.01)   *H04N 21/4402* (2011.01)
*H04N 21/435* (2011.01)   *H04N 21/434* (2011.01)
*H04N 21/4725* (2011.01)

(52) Cooperative Patent Classification (CPC):
H04N 21/2343; H04N 21/235; H04N 21/236;
H04N 21/2381; H04N 21/434; H04N 21/435;
H04N 21/438; H04N 21/4402; H04N 21/4725

(86) International application number:
**PCT/KR2020/008840**

(87) International publication number:
**WO 2021/015450 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.07.2019 KR 20190087743**
**02.10.2019 KR 20190122581**

(71) Applicant: **LG Electronics Inc.**
**SEOUL 07336 (KR)**

(72) Inventors:
• **PARK, Jonghwan**
 **Seoul 06772 (KR)**
• **YOON, Joonhee**
 **Seoul 06772 (KR)**

(74) Representative: **Plasseraud IP**
**66, rue de la Chaussée d'Antin**
**75440 Paris Cedex 09 (FR)**

(54) **BROADCAST SIGNAL TRANSMISSION DEVICE, BROADCAST SIGNAL TRANSMISSION METHOD, BROADCAST SIGNAL RECEPTION METHOD, AND BROADCAST SIGNAL RECEPTION DEVICE**

(57) A broadcast signal reception method according to embodiments can comprise the steps of: receiving a broadcast signal, which includes service data for a broadcast network and service data for an Internet network and further including signaling information for signaling the service data; parsing the signaling information; and decoding the service data on the basis of the signaling information. A broadcast signal transmission method according to embodiments can comprise the steps of: encoding service data for a broadcast network; encoding service data for an Internet network; generating signaling information for signaling the service data; and transmitting the service data and the signaling information.

FIG. 1

**Description**

[Technical Field]

The present disclosure relates to a broadcast signal transmission device, a broadcast signal transmission method, a broadcast signal reception method, and a broadcast signal reception device.

[Background Art]

As analog broadcast signal transmission comes to an end, various technologies for transmitting/receiving digital broadcast signals have been developed. A digital broadcast signal may contain a larger amount of video/audio data than an analog broadcast signal. It may further contain various types of additional data other than the video/audio data.

[Disclosure]

[Technical Problem]

A broadcast signal transmission device and a broadcast signal reception device according to embodiments of the present disclosure implement an Internet protocol (IP) based TV service capable of providing the same user experience (UX) as a terrestrial, satellite, and/or cable linear channel.

The broadcast signal transmission device and the broadcast signal reception device according to embodiments of the present disclosure provide a channel guide aggregated with the terrestrial, satellite, and/or cable channel by receiving open Internet-based native code, rather than an application-based linear channel service.

The broadcast signal transmission device and the broadcast signal reception device according to embodiments of the present disclosure provide a seamless service of real time/non-real time media streaming in consideration of high unicast traffic and a situation in which a broadcast service is consumed through media such as an over-the-top (OTT) device, a personal computer (PC), and an internet protocol television (IP TV), which are IP-based devices, rather than through direct reception of a fixed terrestrial service.

[Technical Solution]

In accordance with the purpose of the disclosure, a broadcast signal reception method may include receiving a broadcast signal, the broadcast signal including service data for a broadcast network and service data for an Internet network, wherein the broadcast signal further includes signaling information for signaling the service data; parsing the signaling information; and decoding the service data based on the signaling information.

In another aspect of the present disclosure, a broadcast signal transmission method may include encoding service data for a broadcast network; encoding service data for an Internet network; generating signaling information for signaling the service data; and transmitting the service data and the signaling information.

[Advantageous Effects]

Internet-based broadcast service discovery and acquirement may be implemented over a broadband network by a receiver that is not equipped with an existing traditional tuner.

In receiving an aggregated service list, there is no need to receive the entire aggregated service list due to a versioning/expiration management method for each service and selective parsing and storage for each service.

In a hidden/selectable/inactive operation of the Internet linear channel, a better media service may be provided by blocking a logical channel service that fails to provide a broadcast signal and thus causes inconvenience to users, and providing an Internet return channel replacement service.

A device that supports an RF-based DVB tuner enables a service that is accessed through a UI in which the existing linear service and the OTT service are aggregated.

Without a set-top box (STB), a media service that provides the same UX as existing linear channels may be provided through the open Internet.

As the existing DVB network and Internet channels are aggregated, the resolution that may be provided within the same channel may be extended.

Signaling of DVB-I service list location may be enabled by uri_linkage_descriptor according to embodiments. A reception device according to embodiments may efficiently acquire a DVB-I service list. In addition, an end point according to the embodiments may allow the reception device to efficiently acquire a service list.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 shows a service scenario according to embodiments;
FIG. 2 is a flowchart of an operation according to embodiments from the perspective of a network operator/ISP according to embodiments;
FIG. 3 shows a stack of protocols for DVB channel services according to embodiments;
FIG. 4 shows various examples of DVB-I clients according to embodiments;
FIG. 5 shows query terms according to embodiments;
FIG. 6 shows an example of a DVB-I service discovery query request according to embodiments;
FIG. 7 shows example devices of embodiments implementing a service list UI based on SDLT according to the embodiments;
FIG. 8 is an exemplary flowchart of a service discovery operation according to embodiments;
FIG. 9 shows syntax of a service discovery list table (SDLT) according to embodiments;
FIG. 10 shows a service category according to embodiments;
FIG. 11 shows content formats according to embodiments;
FIG. 12 shows types of URLs according to embodiments;
FIG. 13 shows SDLT syntax to which SdltInetUrl is added according to embodiments;
FIG. 14 shows terms that may be used for the query term according to embodiments;
FIG. 15 shows a list of signaling object types according to embodiments;
FIG. 16 shows an example of use of the query term using SdltInetUrl according to embodiments;
FIG. 17 shows an example of a UI/UX provided by a method/device according to embodiments;
FIG. 18 shows a metadata envelope type according to embodiments;
FIG. 19 shows an example of an HTTP Response based on a metadata envelope according to embodiments;
FIG. 20 shows a DVB-I service signaling mechanism according to embodiments;
FIG. 21 shows an example of a USBD according to embodiments;
FIG. 22 shows RunningStatus according to embodiments;
FIG. 23 is a flowchart illustrating USBD and MPD acquisition of an Internet-based service according to embodiments;
FIG. 24 shows an example of a UI/UX based on RunningStatus according to embodiments;
FIG. 25 is a flowchart of a USBD signaling process according to embodiments;
FIG. 26 shows extended syntax of a service discovery list table according to embodiments;
FIG. 27 shows syntax of a reduced USBD according to embodiments;
FIG. 28 illustrates a UI/UX for providing a service list and a service using an extended SDLT according to embodiments;
FIG. 29 is a flowchart illustrating use of an extended SDLT and a reduced USBD according to embodiments;
FIG. 30 shows syntax of a LocationInfo element indicating location information according to embodiments;
FIG. 31 shows an SDLT including location information according to embodiments;
FIG. 32 illustrates an example of an SDLT providing area information and operation of a receiver according to embodiments;
FIG. 33 is a flowchart of a receiver through provision of region information according to embodiments;
FIG. 34 shows an example configuration of DVB components and interfaces related to an device according to embodiments;
FIG. 35 shows a metadata envelope for receiving a service list according to embodiments;
FIG. 36 specifically shows a metadata envelope according to embodiments;
FIG. 37 shows a DITS service discovery metadata envelop according to embodiments;
FIG. 38 shows an extension of an SDLT according to embodiments;
FIG. 39 shows an example of channel management according to embodiments;
FIG. 40 shows values of hidden (visible)_presentation according to embodiments;
FIG. 41 is a flowchart of hidden channel management according to embodiments;
FIG. 42 shows an example of an SDLT including RelatedMaterial according to embodiments;
FIG. 43 shows an example of use of the Related Material according to embodiments;
FIG. 44 shows an example of use of an inactive banner according to embodiments;
FIG. 45 shows a hierarchical structure of a service list according to embodiments;
FIG. 46 shows a DVB-I service list type according to embodiments;
FIG. 47 is a table representation of a DVB-I service list type according to embodiments;

FIG. 48 shows a DVB-I service type according to embodiments;

FIG. 49 shows a DVB-I service type according to embodiments;

FIG. 50 shows a DVB-I service type according to embodiments;

FIG. 51 shows a table representation of a service instance type according to embodiments;

FIG. 52 shows an extension of DASH delivery parameters for simulcast according to embodiments;

FIG. 53 shows a table representation of the DASH delivery parameters for simulcast according to embodiments;

FIG. 54 shows a DASH delivery parameters type according to embodiments;

FIG. 55 shows a DASH delivery parameters type according to embodiments;

FIG. 56 illustrates signaling of a DVB-I service instance according to embodiments;

FIG. 57 shows simulcast UI/UX according to embodiments;

FIG. 58 shows the structure of a reception device according to embodiments;

FIG. 59 shows a configuration of a network information table (NIT) according to embodiments;

FIG. 60 shows a configuration of a bouquet association table (BAT) according to embodiments;

FIG. 61 shows a configuration of a service description table (SDT) according to embodiments;

FIG. 62 illustrates a process of parsing signaling information by a broadcast signal reception device according to embodiments;

FIG. 63 shows types of networks according to embodiments;

FIG. 64 shows a configuration of a URI descriptor (URI_linkage_descriptor) according to embodiments;

FIG. 65 shows a configuration of URI linkage type information (uri_linkage_type) according to embodiments;

FIG. 66 shows a configuration of private data according to embodiments;

FIG. 67 shows a configuration of private data according to the embodiments;

FIG. 68 shows the configuration of an IP channel ID descriptor (IP_channel_ID_descriptor) according to embodiments;

FIG. 69 illustrates a process of service discovery based on a bouquet according to embodiments;

FIG. 70 illustrates a DVB-I bootstrapping method over a DVB network according to embodiments;

FIG. 71 shows a URI linkage descriptor according to embodiments;

FIG. 72 shows end point types (end_point_type) according to embodiments;

FIG. 73 shows a configuration of linkage-type private data byte according to embodiments;

FIG. 74 shows a URI linkage descriptor of the BAT according to embodiments;

FIG. 75 shows a reference relationship of a reception device according to embodiments;

FIG. 76 shows elements to provide a hybrid service on one channel according to embodiments;

FIG. 77 shows a configuration of a signal reception device according to embodiments;

FIG. 78 shows a linkage descriptor according to embodiments;

FIG. 79 shows extended event linkage according to embodiments;

FIG. 80 shows private_data_byte according to embodiments;

FIG. 81 shows use-cases of an extended event linkage descriptor according to embodiments;

FIG. 82 shows a supplementary video descriptor according to embodiments;

FIG. 83 illustrates an alternate service according to embodiments;

FIG. 84 shows an SDLT according to embodiments;

FIG. 85 shows a UI/UX for a channel list according to embodiments;

FIG. 86 shows an ABR stream and linkage service for dynamic resolution support according to embodiments;

FIG. 87 shows an EPG view according to embodiments;

FIG. 88 shows a configuration of a transmission device according to embodiments;

FIG. 89 shows a configuration of a reception device according to embodiments;

FIG. 90 illustrates a broadcast signal transmission method according to embodiments; and

FIG. 91 illustrates a broadcast signal reception method according to embodiments.

[Best Mode]

Hereinafter, embodiments disclosed in this specification will be described in detail with reference to the accompanying drawings. The same or similar components are given the same reference numbers and redundant description thereof is omitted. The suffixes "module" and "unit" of elements herein are used for convenience of description and thus are used interchangeably and do not have any distinguishable meanings or functions. Further, in describing the embodiments disclosed in this specification, if a detailed description of related known techniques would unnecessarily obscure the gist of the embodiments disclosed in this specification, detailed description thereof will be omitted. In addition, the attached drawings are provided for easy understanding of the embodiments disclosed in this specification and do not limit technical idea disclosed in this specification, and the embodiments should be construed as including all modifications, equivalents, and alternatives falling within the spirit and scope of the present disclosure.

It is apparent that the following embodiments are intended to embody the present disclosure and are not intended to limit or restrict the scope of the present disclosure. All techniques easily conceivable by those skilled in the art from the detailed description and embodiments of the present disclosure are interpreted as belonging to the scope of the present disclosure.

The following detailed description is to be construed in all aspects as illustrative and not restrictive. The scope of the present disclosure should be determined by reasonable interpretation of the appended claims and all changes which come within the equivalent scope of the present disclosure are within the scope of the present disclosure.

Reference will now be made in detail to the exemplary embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the accompanying drawings and the detailed description should not be construed as limiting the embodiments set forth herein and should be interpreted as covering all equivalents to the embodiments disclosed in the accompanying drawings and the detailed description or other substitutions.

Operations of methods/devices for transmitting and receiving broadcast signals according to embodiments will be described. The methods/devices for transmitting and receiving broadcast signals may be referred to as a method/device according to embodiments.

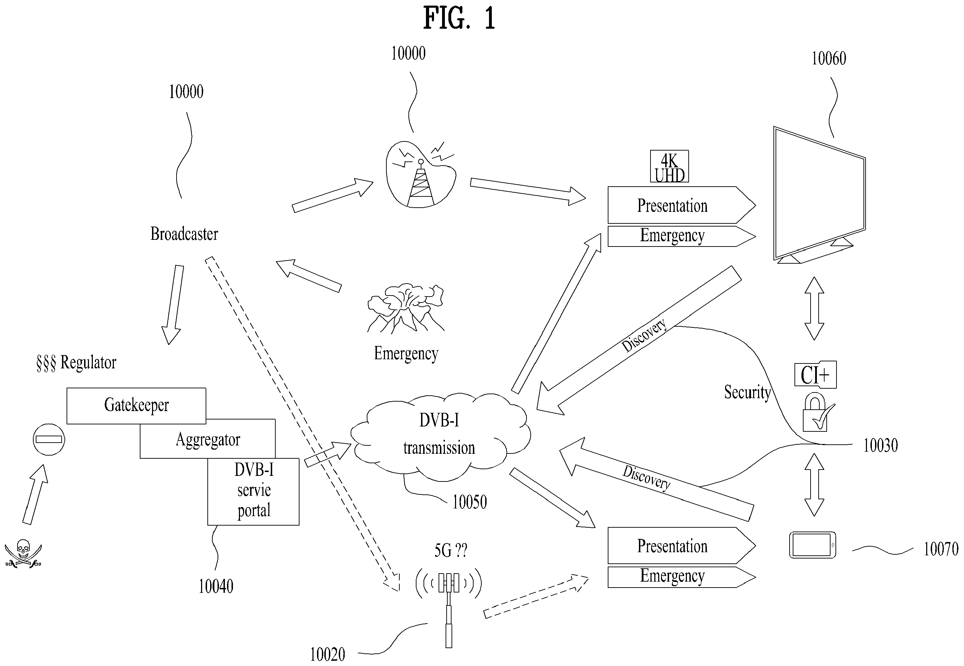

FIG. 1 shows a service scenario according to embodiments.

The embodiments described in this specification relate to a method/device for the signaling method to provide discovery and acquirement of Internet-based broadcast services based on the scenario of FIG. 1, and embodiments that provide a signaling scheme for such operation will be described.

Specifically, embodiments provide a method of implementing an IP-based TV service capable of providing the same user UX as terrestrial, satellite, and cable linear channels.

Embodiments provide a method of providing a channel guide aggregated with terrestrial, satellite, and cable channels through reception of an open Internet-based native code, not an application-based linear channel service.

Embodiments provide an aggregated broadcast system protocol based on all of terrestrial wave, satellite, cable, and Internet.

Embodiments provide a method of acquiring Internet broadcast service signaling by a receiver without a terrestrial, satellite, or cable tuner.

Embodiments provide a service discovery system for acquiring a broadcast service based on Internet transmission.

Embodiments provide an Internet-based broadcast service signaling mechanism.

Embodiments provide a service discovery scheme for providing an Internet-based broadcast service.

Embodiments propose additional information that should be defined for Internet-based broadcast service identification.

Embodiments provide a system mechanism for acquiring Internet-based broadcast service signaling.

Embodiments propose a versioning/expiration management method for each service and a selective parsing and storage method for each service in receiving an aggregated service list.

Embodiments propose a channel management method in a hidden/selectable/inactive state of an Internet linear channel.

Embodiments propose a service discovery signaling scheme for providing an Internet-based broadcast service.

Embodiments propose a structure of a service list metadata envelope configured when a service list fragmented for each unique service is transmitted in a multipart/related container.

Embodiments propose a method of displaying a current channel status or providing an alternative channel for a user in a hidden/selectable/inactive case of an Internet linear logical channel when the user directly accesses the current channel.

Embodiments may enable a receiver not equipped with a traditional tuner to perform Internet-based broadcast service discovery and acquirement over a broadband network.

According to embodiments, as a versioning/expiration management method for each service and selective parsing and storage for each service are provided, there is no need to receive an entire aggregated service list in receiving an aggregated service list.

According to embodiments, when the Internet linear channel is in the hidden/selectable/inactive state, a better media service may be provided by blocking a logical channel service that fails to provide a broadcast signal and thus causes inconvenience to users, and providing an Internet return channel replacement service.

The traditional IP-based linear channel service is operated in a manner that authentication is granted through the subscription of a specific provider (e.g., an ISP, a network operator) and an IP linear service is received through the set-top box (STB) provided by the provider. In addition, recently, connectivity TVs have been introduced, thereby making a set-top boxless (STB-less) IP linear service available. Representative standard technologies are ATSC 3.0, IBB, and HbbTV. Clients may be provided with various linear rich-media services by operating an application on the OS platform inside the TV. Various operators provide their own developed service application to be installed on the TV platform, and the application defines a server that may receive data for the service and APIs that enable request/reception. On the basis of the life cycle, the client may access the app through the TV UI and receive various services through the app.

In North America and Europe, the popularity of OTT channels is as high as watching linear TV worldwide, and the OTT has become an essential media application for IP-based devices with the expansion of the OTT market. However, the influential form of OTT has become an exclusive service through its own platform and a service eco-system dedicated to the OTT. In other words, the OTT forms its own app-ecosystem consumption pattern in terms of codec, protocol stack, application, browser, and the like that only each OTT provides.

In this regard, embodiments propose a method and an device that may address issues such as the exclusive platform of OTTs and dependency on the operation of applications.

Embodiments propose a service that discovers a service by which a service is discovered at a receiver native level and a client accesses a accessible service server and receives a linear service, in contrast with conventional technology that requires an App to be executed to provide a channel UX similar to the terrestrial (T), satellite (S), or cable (C) linear channel service.

In addition, embodiments propose a service scenario in which the OTT's own platform is integrated into a single unified TV native platform to allow users to receive and view OTT content on a channel without executing an OTT app.

Referring to FIG. 1, a broadcaster 10000 may transmit a service on a terrestrial (T), satellite (S), or cable (C) channel 10010 and an Internet channel 10020 simultaneously. Service providers and manufacturers of devices capable of receiving a DVB-I service 10050 may obtain authentication of a service channel through regulation and provide Internet channels through existing linear services and channel aggregators.

In order to present a list of existing linear broadcasting channels (for example, terrestrial, satellite, and cable channels) and an Internet channel list in an aggregated form, bootstrap 10030 may be operated based on service discovery information provided over the existing linear network.

On the broadcaster side, the existing traditional service provision type may be extended, and additional services may be provided in the form of an on-demand/multicast service along with the existing linear channel network. In addition, a personalization service may be provided through a connection-based usage report of an Internet channel.

From the perspective of TV/STB manufacturers, by providing a channel list 10040 aggregating OTT services with traditional T/S/C channels, opportunities to provide various services and expand the functions of the terminal may be obtained.

In the case of the network/ISP, OTT contents may be aggregated through their network infrastructure to expand service provision. In addition, through dynamic allocation of unicast/multicast, delivery performance enhanced compared to that of a terminal providing a non-management network-based service may be provided.

In other words, the broadcaster 10000 may transmit broadcast data over the traditional broadcast network 10010 and the Internet network 10020. A reception device according to embodiments, for example, a TV 10060 or a second device 10070 may make a request for the service discovery 10030 of the broadcast data to the DVB-I provider or server 10050, and receive the aggregated DVB-I service list 10040. Thus, service signaling may be performed on both the traditional linear channel and the Internet channel without the process of installing and executing a separate app at the native level.

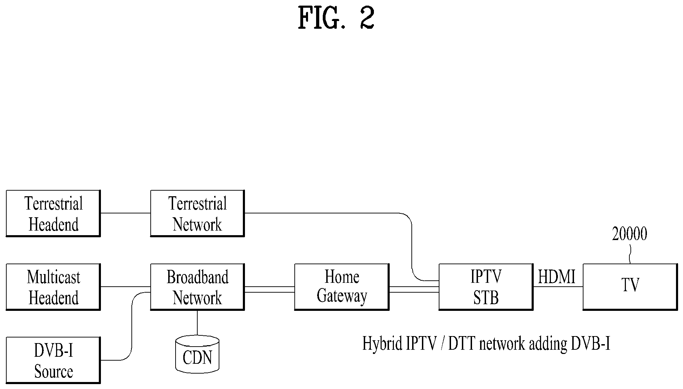

FIG. 2 is a flowchart of an operation according to embodiments from the perspective of a network operator/ISP according to embodiments.

The device 20000 according to the embodiments may be a TV receiver. That is, it may be a device according to a hybrid IPTV/DTT network that supports DVB-I service. The reception device 20000 may be connected to an STB. The connection may be established by, for example, HDMI. The IPTV STB may receive a terrestrial broadcast signal from a terrestrial headend over a terrestrial network, and may receive various services and/or data from a multicast headend, which provides multicast services, a DVB-I source, which provides DVB-I services, and/or a content delivery network (CDN), which provides Internet content or the like, through a home gateway and a broadband network.

In particular, in the case of OTT, an OTT application suitable for a different OS environment is separately provided for each existing terminal. However, the method/device according to the embodiments may use a service through an industry standard based ecosystem without such a separate application. This provides a common service interface, thereby providing a convenient and efficient service access.

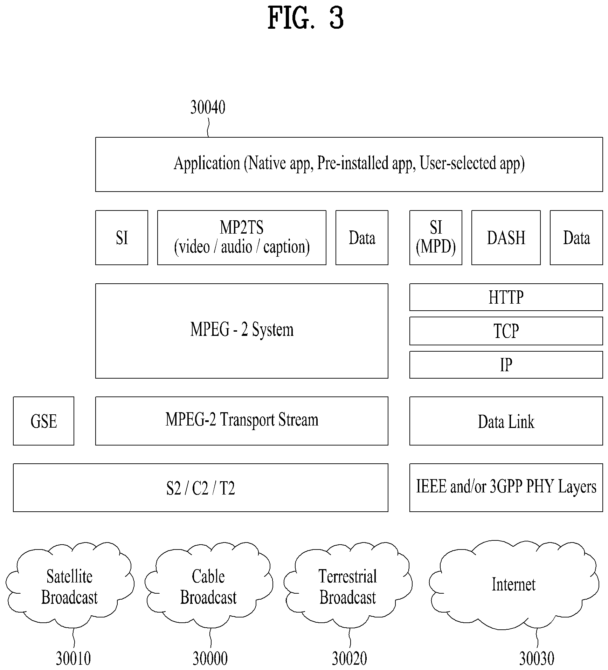

FIG. 3 shows a stack of protocols for DVB channel services according to embodiments.

The TV device 20000 of FIG. 2 may perform the scenario of FIG. 1 based on the protocol structure of FIG. 3.

Services according to embodiments include DVB C/S/T/I services. Based on the protocol stack structure constituting the DVB-C (30000)/S (30010)/T (30020)/I (30030) service of FIG. 3, the embodiments propose a mechanism for discovering a DVB-I service transmitted through the Internet and a signaling scheme therefor. The method/device according to the embodiments may drive an application through service discovery, and an application 30040 according to the embodiments may include a native application, a pre-installed application, and a user-selected application.

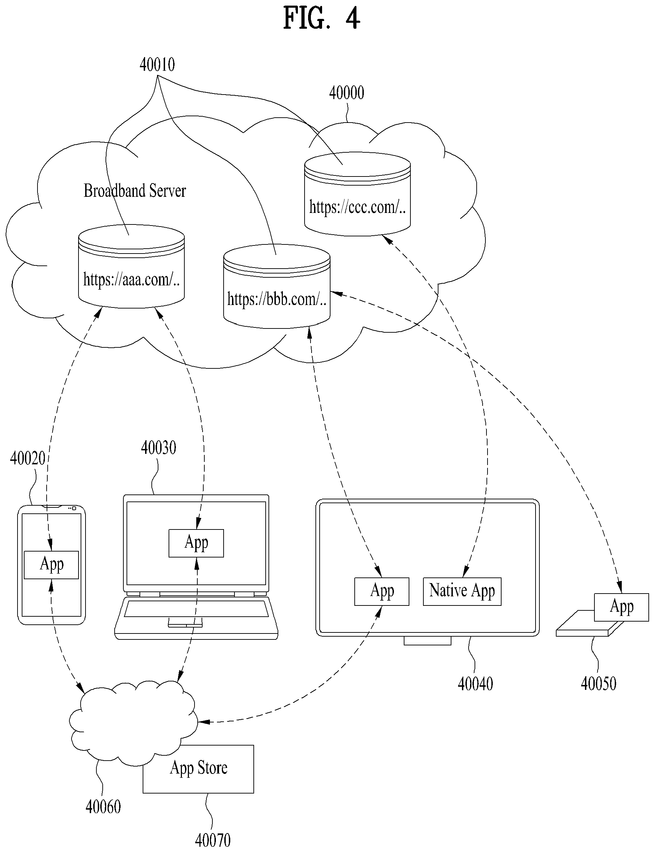

FIG. 4 shows various examples of DVB-I clients according to embodiments.

A mobile device 40020, a computer 40030, a TV 40040, and a set-top box or second device 40050 of FIG. 4 may correspond to/be compatible with the TV 20000 of FIG. 2.

A method of performing DVB-I service discovery by a reception device even when the reception method/device according to the embodiments is not connected to a tuner for DVB-C/S/T is proposed.

In other words, even when the DVB-C/S/T tuner is not installed (connected), the reception device may be connected to a broadband network and a receiver including (connected to) an A/V player module may perform DVB-I service discovery. A receiver equipped with (connected to) the DVB-C/S/T tuner may perform a channel scan using a conventional method (e.g., devices with a broadband Internet connection and no DVB-C/ S/T tuner, devices with a broadband internet connection and a DVB-C/S/T tuner).

FIG. 4 shows various locations of DVB-I clients including a pre-provisioned URL.

The broadband server 40000 may store URLs 40010 for various applications in a database.

Reception devices according to the embodiments which are connected to the broadband server 40000 may include the mobile device 40020, the computer 40030, the TV 40040, the set-top box or second device 40050.

Each reception device may be connected to an app store 40070 through a cloud 40060.

The flow of service discovery according to the embodiments may be configured as follows.

1. A service discovery list table is retrieved/acquired over the broadband network based on a pre-provisioned URL.

2. The pre-provisioned URL may be used in various modules as follows: A. a DVB-I client module provided by a receiver manufacturer; B. a DVB-I client module mounted on a set-top box provided by the network operator (The module may be an app implemented separately inside the device or may be an HbbTV app); C. a mobile receiver or a DVB-I client module installed in an app downloaded from the App Store and installed by the receiver where apps can be installed.

3. The pre-provisioned URL may be in the form of a query template. The query template is completed as a template in an app (including a DVB-I client) installed on the receiver, and the receiver may transmit an HTTP request to the broadband server. The query template form may be defined as follows:

http[s]://{Recovery Base URL} / [?query] / sdlt,

where:

[string]          items in square brackets [..] indicate an optional string and

{element}          items in curly brackets {..} indicate a named element.

{Recovery Base URL} is pre-installed in each app or native app and released, and

a different URL value for each receiver on which each app is installed or each

ovided by a manufacturer.

There is no restriction on the values of {Recovery Base URL}. They should allow access to a broadband server using the URL as a base.

The [?query] string may be produced in the form of a template in the app according to the device capability to configure a request string.

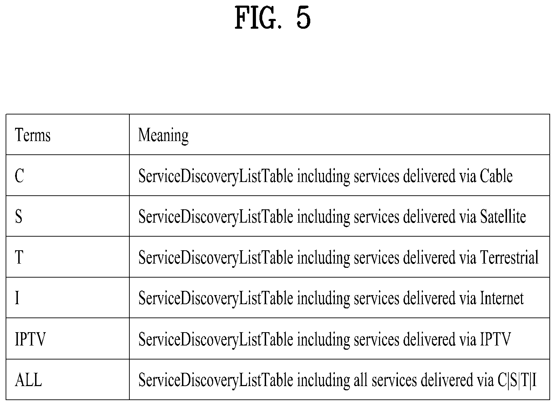

For query terms according to embodiments, refer to FIG. 5.

4. The service discovery list table includes a DVB service list, and includes a URL by which signaling of each service may be received. It also includes valid information for each service.

FIG. 5 shows query terms according to embodiments.

FIG. 5 shows examples of query terms used by a reception device according to embodiments in the service discovery process of FIG. 4.

The query term C represents ServiceDiscoveryListTable including services delivered via Cable.

The query term S represents ServiceDiscoveryListTable including services delivered via Satellite.

The query term T represents ServiceDiscoveryListTable including services delivered via Terrestrial.

The query term I represents ServiceDiscoveryListTable including services delivered via Internet.

The query term IPTV represents ServiceDiscoveryListTable including services delivered via IPTV.

The query term ALL represents ServiceDiscoveryListTable including all services delivered via C|S|T|I.

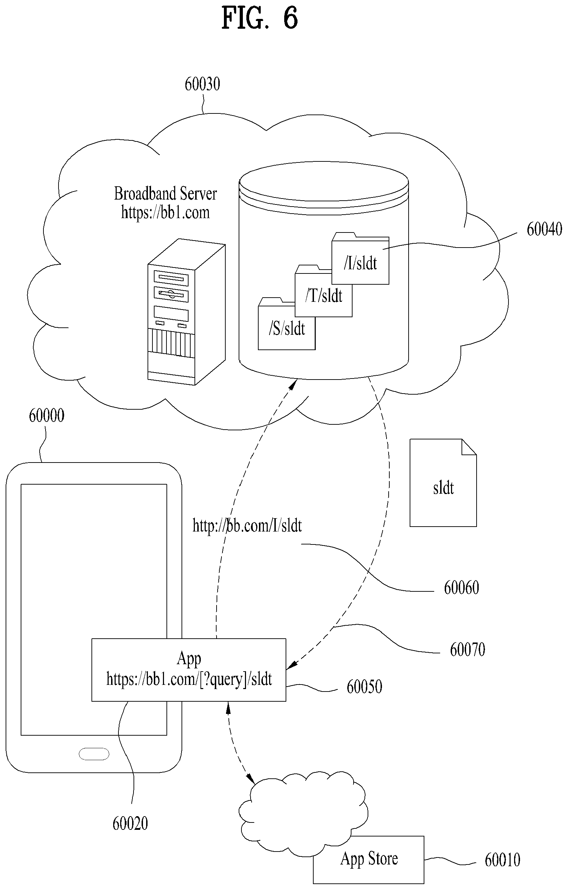

FIG. 6 shows an example of a DVB-I service discovery query request according to embodiments.

FIG. 6 shows a process of performing a query request by a reception device 60000 according to the embodiments based on the query of FIG. 5. The reception device 60000 of FIG. 6 includes the device 20000 of FIG. 2 and the terminals 40020, 40030, 40040, and 40050 of FIG. 4

The reception device according to the embodiments may perform the following operations based on a pre-provisioned URL and a query template, and the transmission device according to the embodiments supports processing for the operation of the reception device.

1. A mobile receiver supporting only the broadband network (or the reception device 60000 according to the embodiments) may download an app 60020 enabling discovery of a DVB-I service from the app store 60010 and install the same.

2. The downloaded app includes a DVB-I client module. The module has a pre-provisioned URL.

3. In order to perform DVB-I service discovery, the mobile receiver 60000 configures a query form 60050 using the embedded pre-provisioned URL.

4. Since the receiver does not contain a DVB-S/C/T tuner, it desires to discover a DVB-I service obtainable over the broadband network 60030. Here, the broadband network or server 60030 is considered to include, for example, an address of https://bb1.com.

5. The query template 60060 may be configured in a query form 60050 requesting a service discovery list table (SDLT or SLDT, service list discovery table) 60040 including a list in which only DVB-I services may be discovered. Here, the SDLT may include a list table in which services (channels) such as DVB-I/T/S may be discovered. For example, the query may be expressed as https://bb1.com/[?query]/sldt based on the address 60030 of the broadband network, and may have a form making a request for sldt to a specific server.

6. Upon receiving the query 60060, the broadband server 60030 parses the query 60060, and then provides a response 60070 to the receiver 60000, which has made the request 60060, through a response scenario implemented in the server 60030. Here, the query 60060 may be expressed as, for example, http://bb&.com/i/sldt based on the address of the server, and may have a form making a request to a specific server for an SDLT for the I content (service).

7. An sdlt file 60070 that responds (or corresponds) to the request 60060 may be configured in any file format is supportable in an XML or Json-format web environment.

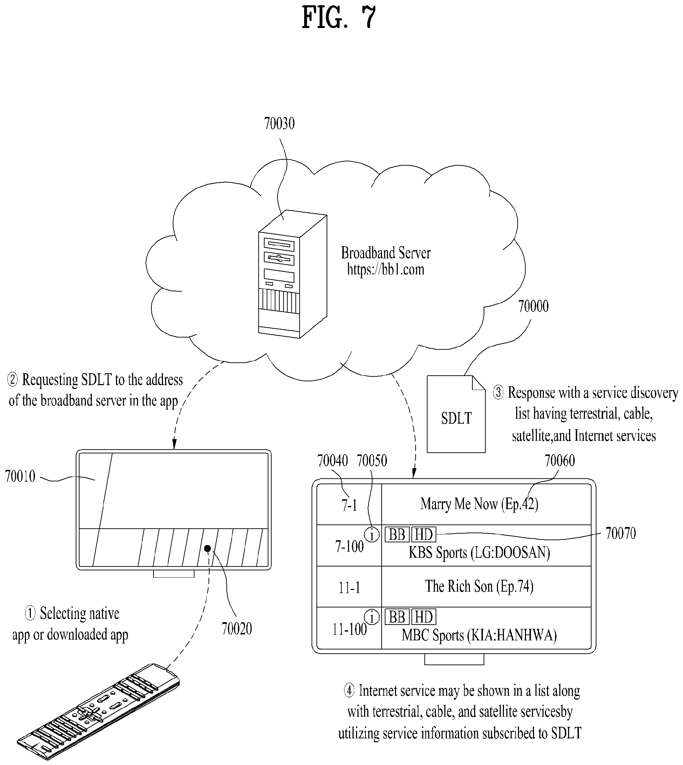

FIG. 7 shows example devices of embodiments implementing a service list UI based on SDLT according to the embodiments.

FIG. 7 illustrates a detailed implementation operation of the SDLT-based service discovery process of FIG. 6 from a UI perspective.

The reception device of the embodiments may provide a service UI/UX for user convenience. As an SDLT 70000 proposed in the embodiments is provided, the receiver may list Internet-based services together with traditional terrestrial, satellite, and cable services in a service list that may be selected by a user. FIG. 7 shows a UI on a TV through a specific app, and an icon may be generated and displayed for each receiver to show whether or not each service is transmitted on the Internet according to the characteristics of each service. In addition, the receiver may additionally provide information. For example, when the receiver is not connected to a broadband, it may indicate that Internet-based services cannot be selected.

In other words, the reception device 70010 of the embodiments may receive a selection signal from a user through voice/electric signal/various inputs (No. 1). Here, the user may select a native app and/or a downloaded app 70020. For convenience of user selection, the reception device 70010 may express UI/UX-related information in various configurations/types on the display (70020).

The reception device 70010 may request (request) an SDLT to a broadband server address (e.g., https://bb1.com, 70030) embedded in the app (No. 2).

The server 70030 may send a service discovery list including all terrestrial, cable, satellite, and Internet services to the reception device 70010 in response (No. 3).

The reception device 70010 may present, on the display, an Internet service together with terrestrial, cable, and satellite services in the form of a UI/UX list based on service information written in the SDLT. A logical channel number 70040, a terrestrial/cable/satellite/Internet channel indicator 70050, program/service related information (title, content, episode number, etc.) 70060, capability/resolution information and the like 70070 may be displayed on the display through a UI/UX.

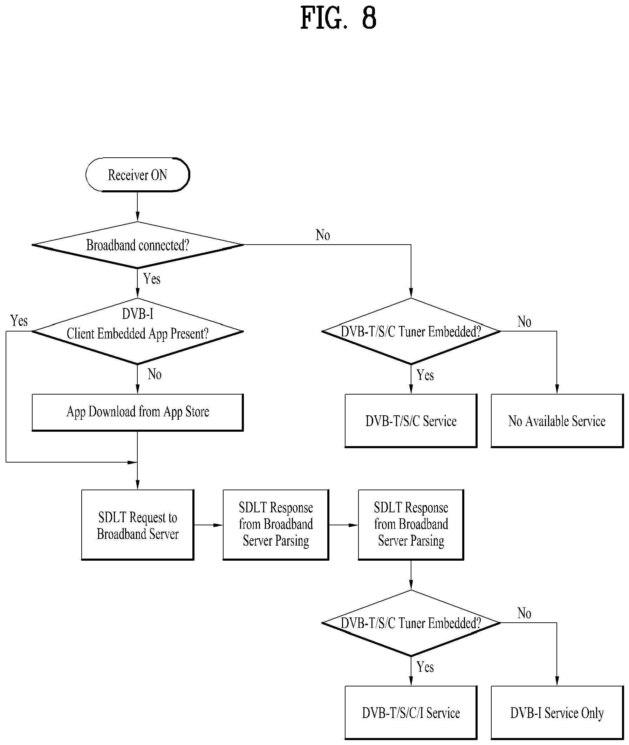

FIG. 8 is an exemplary flowchart of a service discovery operation according to embodiments.

FIG. 8 is a flowchart of the service discovery described with reference to in FIGS. 6 and 7.

1. The reception device according to the embodiments is activated.

2-1. When the reception device is connected to a broadband network

2-1-1. When an app with a DVB-I client is present in the reception device

2-1-1-1. The reception device transmits an SDLT request to the broadband network.

2-1-1-2. the reception device parses SDLT response information received from the broadband network.

2-1-1-3. The reception device checks whether there is a DVB-T/S/C tuner. When there is a tuner, a DVB-T/S/C/I service is provided to users based on the SDLT. When there is no tuner, only the DVB-T service is provided to users based on the SDLT.

2-1-2. When there is no app on which the DVB-I client is installed in the reception device, the reception device may download the app from the app store.

2-2. When the reception device is not connected to the broadband network, but has a DVB-T/S/C tuner, it receives DVB T/S/C service and provides the same to the user. When there is no DVB-T/S/C tuner, it notifies the user through the UI/UX that there is no service available.

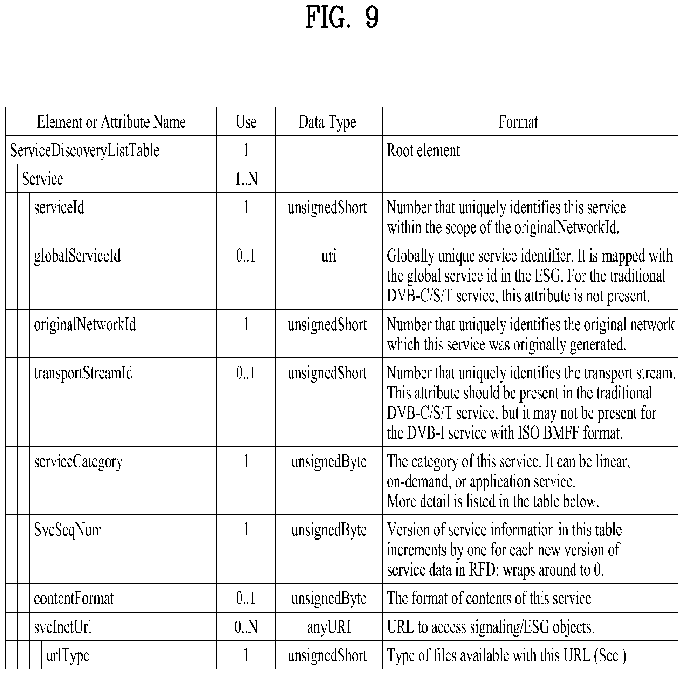

FIG. 9 shows syntax of a service discovery list table (SDLT) according to embodiments.

FIG. 9 shows the syntax of the SDLT according to the embodiments described in FIG. 8 and the like.

The ServiceDiscoveryListTable of FIG. 9 may be generated/encoded by a service provider, an encoder (BICM), the signaling generator, and the like in the transmission device according to the embodiments, and may be parsed/acquired by a signaling parser, a signaling parser, and the like in the reception device.

The ServiceDiscoveryListTable (SDLT) according to the embodiments may take the form of an HTTP response provided by the broadband server through an HTTP request configured in a query form according to the pre-provisioned URL embedded in the DVB-I client module and the receiver capability.

FIG. 9 shows definitions of elements and attribute values of the SDLT in XML format according to embodiments.

ServiceDiscoveryListTable represents the root element of the table and includes a service list necessary for service discovery.

Service represents a service included in the list.

serviceId is an identifier of the service. For DVB-C/S/T, the serviceId has a unique value within the range of serviceId + transportStreamId + originalNetworkId. For DVB-I, the serviceId has a unique value within the range of the original network.

For DVB-I, globalServiceId has a value in the form of a globally unique URI that is mapped to one service in the Electronic Service Guide (ESG).

originalNetworkId indicates an identifier of the original network.

transportStreamId indicates an identifier of a transport stream.

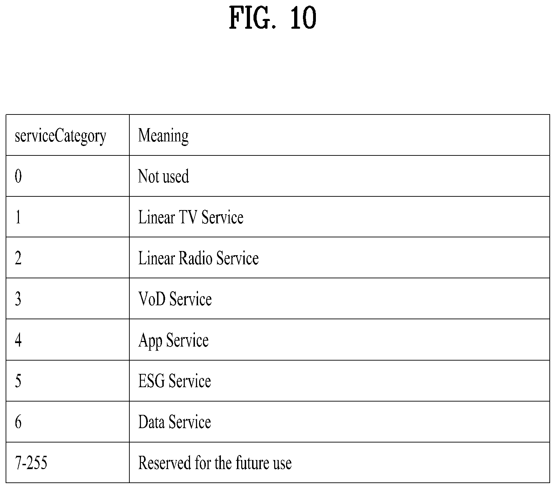

serviceCategory indicates the category of a service, and may be defined as shown in FIG. 10.

FIG. 10 shows service categories according to embodiments.

FIG. 10 shows a detailed configuration of a service category element of the SDLT of FIG. 9;

For example, the values of the service category may be expressed as follows: 1: Linear TV Service; 2: Linear Radio Service; 3: VoD Service; 4: App Service; 5: ESG Service; 6: Data Service.

SvcSeqNum is a sequence number indicating whether a value inside the service element has changed. When this value has not changed, this means that the value inside the service element has not changed. When a service with the same ServiceId has already been received, the receiver does not need to perform reanalysis.

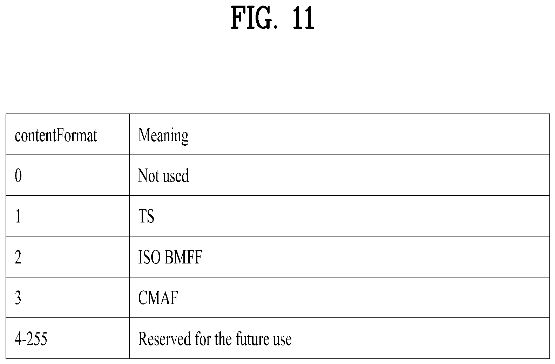

contentFormat indicates a format of contents constituting a service. Content formats will be described with reference to FIG. 11,.

FIG. 11 shows content formats according to embodiments.

FIG. 11 shows content formats that the services for the respective categories described with reference to FIG. 10 have.

For example, the values of content formats may be expressed as follows: 1: TS (contents according to the MPEG-2 TS format); 2: ISO BMFF (contents according to the ISO BMFF file structure); 3: CMAF (contents according to the common media applications format).

SvcInetUrl indicates the URL value of a broadband server that may receive service signaling or ESG.

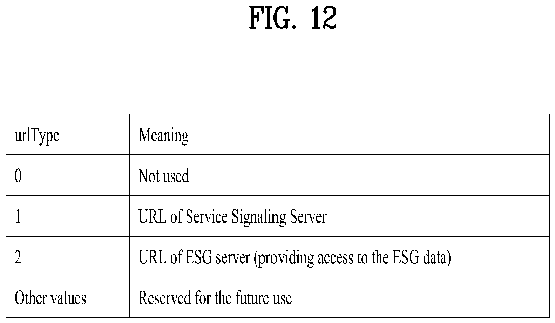

urlType indicates the type of the broadband server URL, and may indicate signaling data or ESG data as shown in FIG. 12.

FIG. 12 shows types of URLs according to embodiments.

FIG. 12 shows a URL type element of the SDLT of FIG. 9;

For example, the type values of the URL may be expressed as follows: 1: URL of Service Signaling Server; 2:

URL of ESG server (providing access to the ESG data).

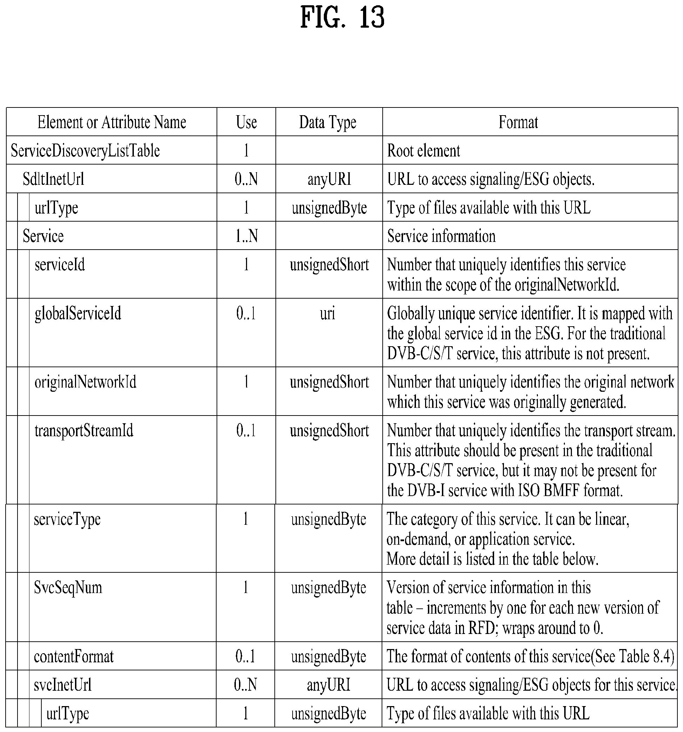

FIG. 13 shows SDLT syntax to which SdltInetUrl is added according to embodiments.

FIG. 13 is an example corresponding to or additionally extended from the SDLT of FIG. 9.

A method/device according to embodiments may configure a query form using SdltInetUrl and svcInetUrl.

Embodiments may generate a query term accessible to the service signaling and ESG using SdltInetUrl or SvcInetUrl of each service provided in the SDLT.

Embodiments propose a method of signaling a broadband URL of an SDLT level. SdltInetUrl represents a broadband server address accessible by a receiver to acquire information that may correspond to a certain service included in the SDLT, and may be included in the SDLT as shown in FIG. 13.

SdltInetUrl indicates a URL value of the broadband server from which signaling or ESG related to any service listed in the SDLT may be acquired.

urlType may indicate a type of the broadband server URL, and may indicate signaling data or ESG data according to each defined type.

In the present disclosure, the URL according to the embodiments may be referred to as address information or the like.

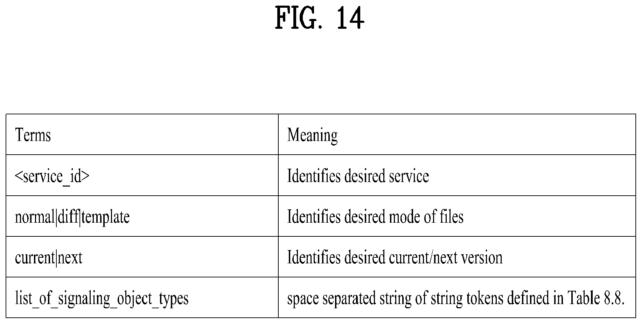

FIG. 14 shows terms that may be used for the query term according to embodiments.

FIG. 14 shows terms used in configuring a query term based on the SDLT of FIG. 13 and/or FIG. 9.

The embodiments propose a method of configuring an HTTP query term that may request service-related information using SdltInetUrl as follows. FGI. 14 defines terms applicable in configuring an HTTP request query.

service_id identifies a desired service.
normal|diff|template identifies a desired mode of files.
current|next identifies a desired current/next version.
list_of_signaling_object_types indicates the type of a signaling object, and may be expressed on a space basis.

When SdltInetUrl having urlType equal to "1" is signaled in the SDLT, the term <service_id> may be used. This means a query that the URL is signaled at the SDLT level, but the receiver desires to acquire only signaling information for a specific required service. When the value of <service_id> is not included in the query term, this means that signaling for all services signaled in the SDLT is requested. The reception device according to the embodiments may request and acquire signaling information for a specific service by configuring a query based on the service ID.

As for the term normal/diff/template, when a request for a DVB-I service is made, the corresponding term may be applied when the signaling objects are in XML format.

The term current/next indicates whether the requested signaling object is signaling of the current service or signaling of next version. According to embodiments, when a signaling object of the current version is requested, the corresponding term may be omitted.

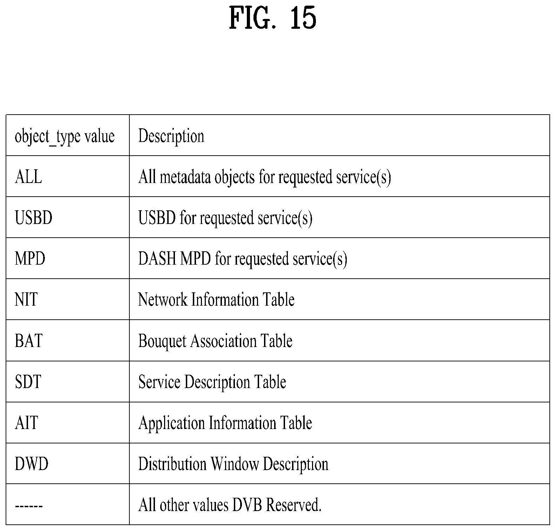

The term list_of_signaling_object_types indicates the types of requested signaling objects (see FIG. 15), which may be separated into spaces. When all signaling objects are requested, ALL may be applied to the query term.

FIG. 15 shows a list of signaling object types according to embodiments.

FIG. 15 shows an example of object(s) signaled by the method/device according to the embodiments in FIGS. 1, 4, 6, 7 and the like.

For example, the values of the signaling object and information indicated by the values may be configured as follows: ALL: All metadata objects for requested service(s); USBD: USBD for requested service(s); MPD: DASH MPD for requested service(s); NIT: Network Information Table; BAT: Bouquet Association Table; SDT : Service Description Table; AIT: Application Information Table; DWD: Distribution Window Description.

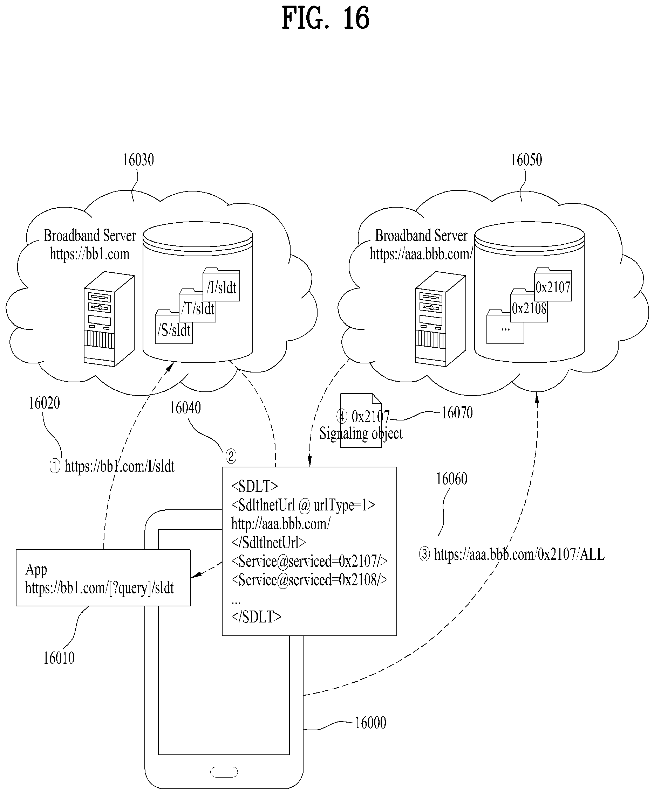

FIG. 16 shows an example of use of the query term using SdltInetUrl according to embodiments.

FIG.16 is an additional example related to the service discovery process of FIGS. 4, 6, and 7.

The method/device according to the embodiments may generate a query term using sdltInetUrl as follows.

1. When the receiver acquires an SDLT through <sdltInetUrl urlType="1">http://aaa.bbb.com/</sdltInetUrl>, the receiver configures the query term with the value of http://aaa.bbb.com/0x2107/ALL. When such an HTTP request is made, the broadband server returns all signaling objects for service (having @serviceId equal to 0x2107) in a current normal version.

2. When the receiver acquires an SDLT through <sdltInetUrl urlType="1">http://xxx.yyy.com/</sdltInetUrl>, the receiver configures the query term with a value of http://xxx.yyy.com/0x2103/next/MPD. When such an HTTP request is made, the broadband server returns the MPD signaling object for service with the @serviceId equal to 0x2103 in the next normal version.

A reception device 16000 according to the embodiments corresponds to the reception device of the above-described embodiments. The reception device 16000 generates a query term 16010. The query term 16010 may transmit a query (?query) requesting an SDLT for the broadband server address to the server based on an app (16020).

A server 16030 according to the embodiments corresponds to the broadband server according to the above-described embodiments. The server 16030 contains the address of the server, for example, https://bb1.com, and the database of the server contains an SDLT for services such as I/T/S.

In response to the query 16020, the reception device 16000 receives an SDLT 16040 from the server 16030.

The SDLT 16040 may include the address of the server for signaling, for which the URL TYPE is 1, may identify information of the service signaling such as, for example, 2107, 2107, for, for example, http://aaa.bbb.com or each service ID.

The reception device 16000 may generate a query term 16060 to be sent to the signaling server 16050 based on the SDLT 16040 and transmit the query term 16060 to the signaling server 16050. The query term 16060 may include the signaling server 16050, include an identifier of a service requesting signaling information, and include information that requests all signaling information about an identifier of a specific service. The signaling server 16050 may store, in a database, the signaling information about the service for each service identifier. The reception device 16000 may receive, from the signaling server 16050, a signaling object 16070 as response information corresponding to the request. The signaling object 16070 includes signaling information about an identifier of a specific service. According to embodiments, the server may include a server 16030 containing an SDLT and/or a server 16020 containing signaling objects for each service. The server may be referred to as various terms such as a broadband server, an Internet server, a communication network server, and a signaling server. In addition, the servers may be classified into the two servers described above, or may be integrated into one server.

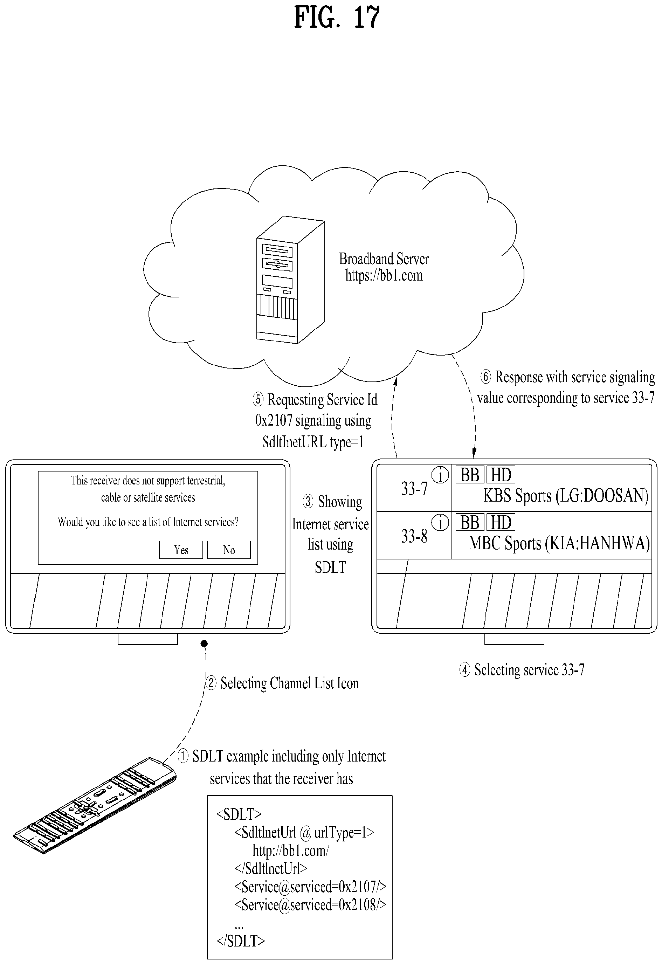

FIG. 17 shows an example of a UI/UX provided by a method/device according to embodiments.

FIG. 17 shows an additional related example of the UI/UX examples for FIGS. 4, 6, 7, 16, and the like.

A flowchart of the UI/UX operation according to the embodiments may be configured as follows.

1. The reception device (including the reception devices according to the above-described embodiments) may acquire the SDLT from a broadcast signal or from a network, or may have an SDLT stored. The SDLT contains an SDLT internet url based on the url type value, and contains one or more service IDs.

2. The reception device may receive an input signal from a user. The reception device may display a service list to the user based on the UI/UX. The input signal may be information on an object the user desires to view. The reception device may provide the user with notification information (audible or visual menu/icon, etc.) to indicate whether the reception device supports terrestrial, cable, or satellite services. Also, through notification information, the reception device may ask the user whether to check the list of Internet services (DVB-I contents).

3. When the reception device receives a channel list icon selection signal from the user, the reception device provides an Internet service list to the user based on the SDLT. As in the above-described embodiments, the reception device may display, on the display, channel numbers for services, a channel type (terrestrial, cable, satellite, Internet, etc.), the name of a program belonging to the service, a summary of the program, the resolution the service, capability information, and the like.

4. The reception device may receive a signal for selecting a channel number for a specific service 33-7 from the user.

5. In response to the user's selection, the reception device makes a request to the signaling server for signaling corresponding to a URL type equal to 1 and a service ID equal to 0X2107.

6. In response to the request from the reception device to the signaling server, the reception device may receive service signaling information about a service corresponding to 33-7 from the signaling server.

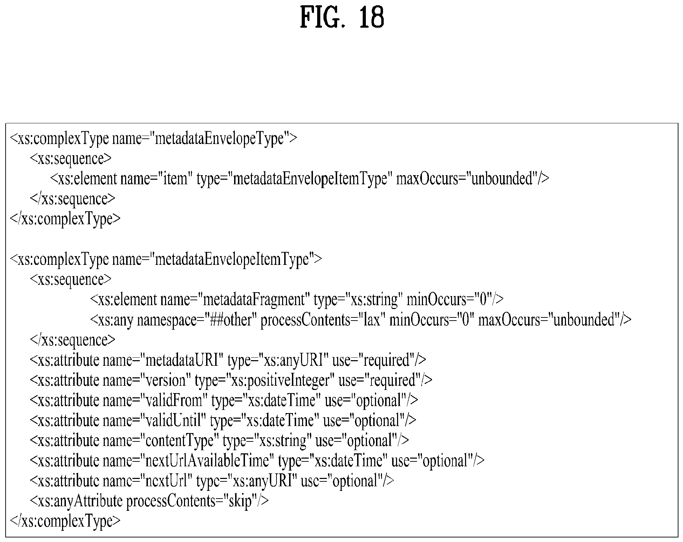

FIG. 18 shows a metadata envelope type according to embodiments.

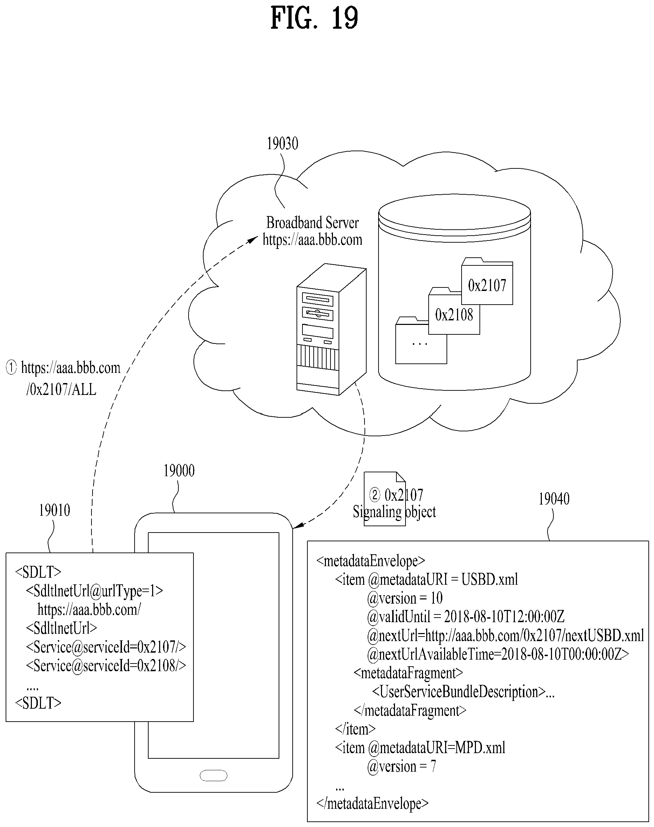

The metadata envelope of FIG. 18 may be one of signaling objects that is signaling information about a service (see FIG. 19).

The method/device according to the embodiments may execute an HTTP response signaling scheme for the DVB-I service.

Hereinafter, a DVB-I HTTP response signaling scheme used in receiving an HTTP response for a DVB-I service signaling HTTP request that is made over a broadband network will be described.

Upon receiving an HTTP response for an HTTP request that the receiver has made to the broadband server using SdltInetUrl or SvcInetUrl, the receiver should be allowed to check whether the response meets the request made by the receiver. In addition, embodiments may perform the following operations such that the latest information may be acquired in the fastest time.

The HTTP response containing a DVB-I service signaling object is carried in a metadataEnvelope structure. The metadataEnvelope of the DVB-I service signaling according to the embodiments is configured as metadataEnvelopeType as shown in FIG. 18.

The metadataEnvelope is composed of a sequence of item elements, and each item represents a respective signaling object. The item element is defined by metadataEnvelopItemType, as shown in FIG. 18.

nextUrlAvailableTime indicates a possible start time for making an HTTP request to the broadband server with nextUrl indicating signaling of the next version. This attribute value is proposed to reduce the request errors of receivers that acquire a signaling object through a request/response process over a broadband network. The receiver may calculate the best time in the time between this attribute value and the attribute value of validUntil according to the implementation algorithm, to reduce the probability that receiver requests are concentrated and the receiver fail to receive a response.

nextUrl specifies a broadband URL address value indicating a signaling object of the next version.

metadataEnvelopeType is included in the response information received by the receiver.

The element name is indicated as item, and the type indicates metadataEnvelopeItemType. metadataEnvelopeItemType represents the type of the metadata envelope item.

The element name may be metadataFragment, and the type may be string.

The attribute name may be metadataURI, and the type may be anyURI.

The attribute name may be version, and the type may be positiveInteger.

The attribute name may be validFrom, and the type may be dateTime (date/time).

The attribute name may be validUntil, and the type may be dateTime (date/time). Based on validFrom and validUntil, metadata may indicate the validity time of the response information.

The attribute name may be contentType, and the type may be string.

The attribute name may be nextUrlAvailableTime, and the type may be dateTime (date/time). This attribute indicates the next available time.

The attribute name may be nextUrl, and the type may be anyURI.

As shown in FIG. 18, the above-described attribute may be present essentially or optionally or may be omitted.

FIG. 19 shows an example of an HTTP Response based on a metadata envelope according to embodiments.

FIG. 19 shows a service signaling based on the metadata envelope of FIG. 18 and the SDLT of FIGS. 9, 13, and the like;

The receiver receives signaling of the DVB-I service as a response from the broadband server according to the HTTP request made by the receiver using the metadataEnvelope according to the embodiments.

In the embodiments, nextUrl and nextUrlAvailableTime of the USBD are signaled. Thus, the current USBD is valid until, for example, 12 o'clock on August 10 and the USBD of the next version is downloadable on the next URL address from, for example, 0 o'clock on August 10. Accordingly, the receiver is allowed to download the next version of the USBD for 12 hours available outside the time when there is a lot of traffic.

A reception device 19000 (corresponding to the reception devices according to the above-described embodiments) checks an SDLT 19010. The SDLT 19010 includes URL TYPE and SERVICE ID.

The reception device 19000 may make a request to a signaling server 19030 for all information (ALL) of signaling corresponding to a specific service, for example, a service having service ID equal to 0X2107.

The reception device 19000 may receive, from the signaling server 19030, signaling object(s) 19040 corresponding to a response to the request. The signaling object 19040 includes signaling information about a service corresponding to the requested service identifier. As described above, the signaling object 1940 may be expressed in the form of a metadata envelope. The signaling object 1940 may include an item for USDB and an item for MPD. For each item, the signaling object 1940 may include, based on a metadata fragment, version information, validUntil, an address (nextUrl) for the next information, and available time for the next information (nextUrlAvailableTime).

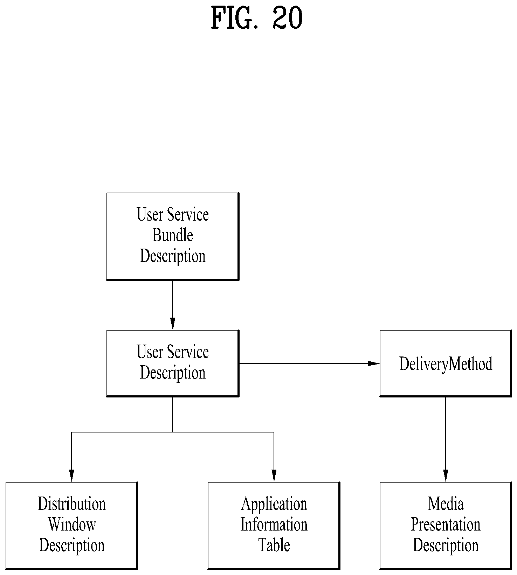

FIG. 20 shows a DVB-I service signaling mechanism according to embodiments.

FIG. 20 shows types of DVB-I service signaling that may be additionally applied to FIGS. 1, 4, 6, 7, 8, 16, 17, 19, and the like, and a mechanism thereof.

The method/device according to the embodiments generates/configures service signaling of an Internet-based service in a certain type of metadata, and proposes a definition of service information included in each metadata. The transmission method/device according to the embodiments may generate and transmit such signaling information, and the reception method/device according to the embodiments may receive the signaling information and perform service discovery.

In the case of the DVB-I service, the receiver connected to the broadband server should be able to play audio (A)/video (V)/caption contentsregardless of whether the DVB-C/S/T tuner is installed or not. A service signaling configuration of a DVB-I service provided by the broadband server in response to a request for signaling of the service made by the receiver is proposed.

Information included in the service signaling of the DVB-I service depends on the role and configuration of each metadata signaling object, as shown in FIG. 20. Embodiments propose a DVB-I service signaling scheme composed of four types of signaling metadata.

The following signaling information may be referred to as various terms such as first information, second information, first signaling information, and second signaling information.

UserServiceBundleDescription (USBD): signals information about the DVB-I service, and includes URL information about the MPD in the case of a DVB-I linear service.

MediaPresentationDescription (MPD): Signaling metadata used in DVB-DASH. The usage and signaling information of the corresponding metadata are as defined in MPEG-DASH.

Application Information Table (AIT): When the DVB-I service is a service driven by an application, the USBD may announce the URL for AIT signaling for connecting the application.

Distribution Window Description (DWD): The DVB-I service may provide a user with information about the service as it starts to show still images or normal files. In this case, the USBD may announce a URL linking a DWD that signals schedule information about when to distribute a still image.

In addition, the above-described metadata may have the following reference relationship. The USBD may reference the USD. The USBD may reference the DWD and/or the AIT. Furthermore, the USBD may reference the MPD according to the service/signaling delivery method.

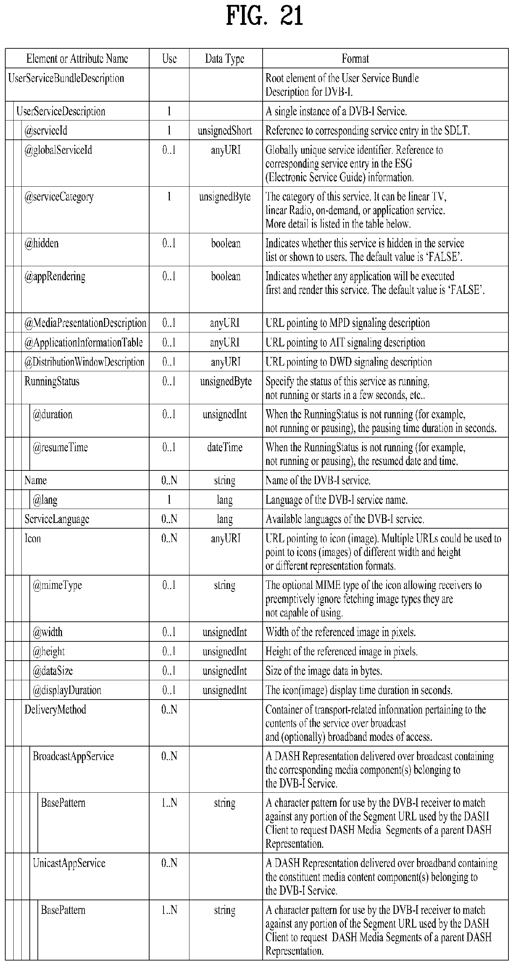

FIG. 21 shows an example of a USBD according to embodiments.

FIG. 21 corresponds to the USBD of FIG. 20.

The transmission method/device according to the embodiments may transmit the USBD, or the reception method/device according to the embodiments may acquire the USBD based on service discovery signaling from the transmission device and/or the server.

The configuration of the UserServiceBundleDescription of the DVB-I service according to the embodiments will be described.

The USBD according to the embodiments may describe comprehensive information of the DVB-I service, and provide a service signaling system that serves as a starting point for connecting other signaling metadata needed for the USBD/USD to provide each service to the user.

The USBD according to the embodiments may be configured to include only one user service description (USD). The USD contains comprehensive information on the user service and information on how and when the service can be provided to the user. FIG. 21 describes the syntax of the USBD/USD.

UserServiceBundleDescription: is a root element of the USBD for DVB-I.

UserServiceDescription: indicates a single instance of the DVB-I service.

@serviceId: is a service identifier of the unsignedShort type, and has the same value as the value described in the SDLT signaling table for discovering Internet-based services. This value may reference a corresponding service entry in the SDLT.

@globalServiceId: has a globally unique service identifier value of the anyURI type. This value matches the value of global service ID that is used in the ESG, and may be used as information for mapping to a specific type of service. In some service categories, this value may not be used. This value may reference a corresponding service entry in the ESG (Electronic Service Guide) information.

@serviceCategory: is distinguished by an integer value of the unsignedByte type and represents a service category. That is, @serviceCategory may represent a category of a service, and the category may include linear TV, linear radio, on-demand, or application service. For specific categories, refer to the figure.

@hidden: indicates whether this service is hidden in the service list or shown to users. This field has an attribute value of the Boolean type, and indicates whether the service should be shown to the user in the service list. When this value is not indicated, the default value is FALSE, which means that the service is shown to the user.

@appRendering: indicates whether any application will be executed first and render this service. It has an attribute value of the Boolean type, and indicates whether the service is provided through a module embedded in the receiver or through a specific app in showing the service to the user. When the value is TRUE, the receiver may plays a role of waiting for the app to be driven, and this information may be provided to the user. When the value is not presented, this means FALSE, and that the application does not perform the rendering. Thus, the receiver performs the function of rendering the service immediately.

@MediaPresentationDescription: indicates a URL pointing to the MPD signaling description. It has an attribute value of the anyURI type that may be indicated as optional, and specifies a URL where an MPD file is downloadable through broadband.

@ApplicationInformationTable: indicates a URL pointing to the AIT signaling description. It has an attribute value of the anyURI type that may be indicated as optional, and specifies a URL where the AIT table describing application information is downloadable through broadband.

@DistributionWindowDescription: indicates a URL pointing to the DWD signaling description. It has an attribute value of the anyURI type that may be indicated as optional, and specifies an URL where the DWD, a signaling table describing a time for which files related to the service may be received, is downloadable over a broadband network.

RunningStatus: indicates the status of this service. For example, the status may include running, not running, or starting in a few seconds. This value represents an element value of the unsignedByte type, and may specify the running status of the current service.

@duration: may indicate the pausing duration in seconds when the RunningStatus is not running or is pausing. It has an attribute value having an integer value of the unsignedInt type. When the RunningStatus has a value different from 1, that is, when the RunningStatus is not running, it may specify a duration in seconds.
@resumeTime may indicate a resume date/time when the RunningStatus is not running or is pausing. It has an attribute value of the dateTime type. When RunningStatus has a value different from 1, @resumeTime may specify the date/time when the service is resumed.

Name: indicates the name of the DVB-I service. It has an element value of the string type.
@lang: indicates a language of the DVB-I service name. It has an attribute value of the lang type.
ServiceLanguage: indicates available languages of the DVB-I service.
Icon: indicates a URL pointing to an icon (or image). Multiple URLs may be used to point to icons or images. In this case, icons/images of different widths, heights, or resolution formats may be signaled. The Icon has an element value that may be indicated as optional, and may have one or more values. It may be a URL of the anyURI type, and may be a broadband URL indicating each file. Each file may point to a still image or icon that should be displayed on the screen before the service is provided. The Icon element has the following attribute values to provide information on whether the receiver can render the file.

@mimeType: may indicate the optional MIME type of the icon allowing receivers to ignore image types unsuitable to use. It has an attribute value of the string type and is configured in the MIME type form.
@width: may indicate the width of the referenced image in pixels. It has an attribute value of the unsignedInt type and specifies the width in pixels.
@height: may indicate the height of the referenced image in pixels. It has an attribute value of the unsignedInt type and specifies the height in pixels.
@dataSize: may indicate the size of image data in bytes. It has an attribute value of the unsignedInt type and specifies the size in bytes.
@displayDuration: may indicate the icon (image) display time duration in seconds. It has an attribute value of the unsignedInt type, and specifies the duration in seconds in which an icon or image is displayed on the screen.

DeliveryMethod: may indicate whether a container of transport-related information including contents of a service is broadcast or optionally transmitted/accessed in a broadband. This field is signaling information related to transmission information of data constituting the corresponding service, and may not be indicated according to @serviceCategory or may be indicated as multiple element values. Information on whether the container is transmitted over a broadcast network or a broadband network is indicated through a sub-element value.
BroadcastAppService: indicates a DASH representation delivered over broadcast containing corresponding media component(s) belonging to the DVB-I service. In the case of linear A/V service or linear audio service, the DASH representation may be transmitted over the broadcast network to configure the service. In this case, multiple element values may be indicated.
BasePattern: indicates a character pattern used by the DVB-I receiver to match against any portion of a segment URL used by the DASH client to request DASH media segments of a parent DASH representation. This value is used to indicate the base URL of the DASH representation transmitted over the broadcast network, may be composed of one or more values. It should match the BaseURL value described in the MPD.
UnicastAppService: indicates a DASH representation delivered over a broadband containing media content component(s) belonging to the DVB-I service. In the case of the linear A/V service or linear audio service, the service may be configured by transmitting the DASH representation over the broadband network. In this case, multiple element values may be indicated.
BasePattern: used to indicate the base URL of the DASH representation transmitted over the broadband network, may be composed of one or more values. It should match the BaseURL value described in the MPD.
In addition, the configuration of the USBD may depend on the values of @serviceCategory as defined in FIG. 10.
In the case of Linear TV Service and Linear Radio Service, the USBD/USD essentially contains MPD URL (@MediaPresentationDescription). The MPD URL value means a URL where the receiver may directly access the broadband server and acquire a file. Since Application may be included, the AIT URL (@ApplicationInformationTable) may be optionally included.
In the case of VOD Service, the MPD URL (@MediaPresentationDescription) may not be included. In the case of rendering the application first to show the VoD list, the attribute value of @appRendering is set to TRUE, and the AIT URL must be included.

In the case of App Service, the AIT URL is essentially present no matter what value @appRendering has, and the MPD URL may appear optionally.

ESG Service indicates a special service that transmits ESG data. In this case, the AIT URL (@ApplicationInformationTable) and MPD URL (@MediaPresentationDescription) are not signaled in the USBD/USD.

Data Service indicates a service that transmits data. In this case, the AIT URL and MPD URL are not signaled in the USBD/USD.

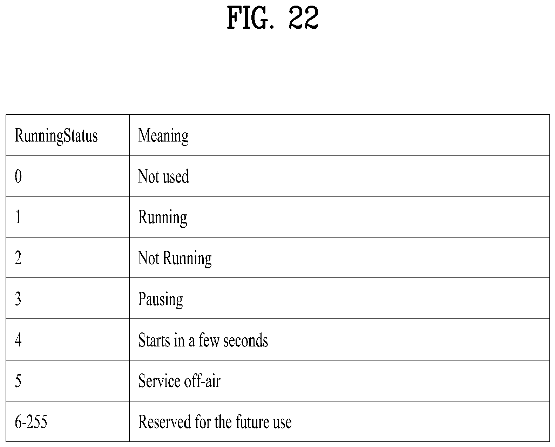

FIG. 22 shows RunningStatus according to embodiments.

FIG. 22 shows specific values of the running status of FIG. 21.

When the above-described RunningStatus is not running, that is, when it has a value of 2, 3, 4, or 5, it has a sub-attribute value of @duration or @resumedTime depending on the case. When the values are not given, the value infinite may be indicated as a default value.

RunningStatus may include Running, Not Running, Pausing, Starts in a few seconds, and Service off-air.

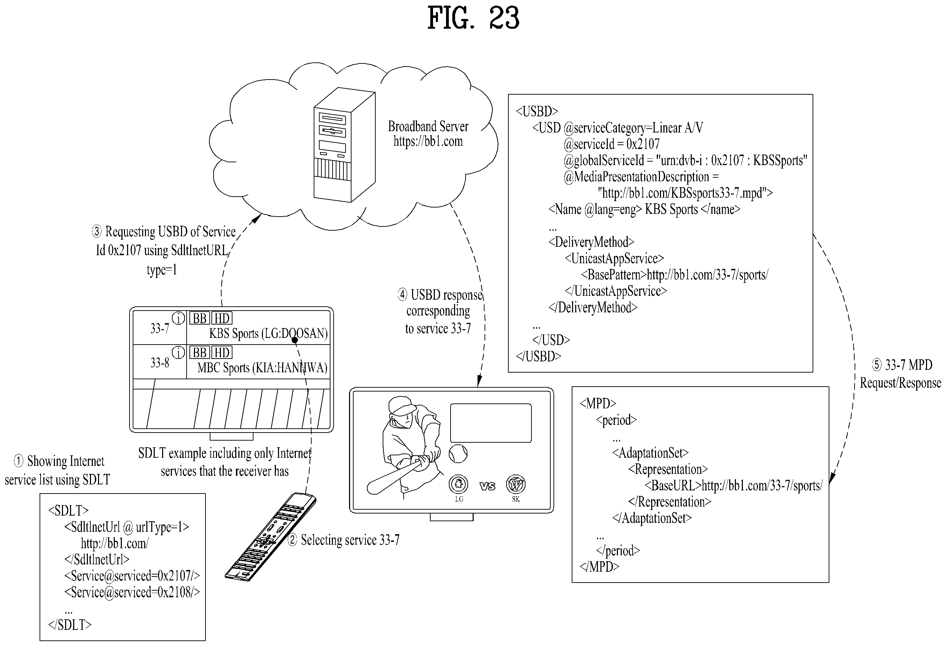

FIG. 23 is a flowchart illustrating USBD and MPD acquisition of an Internet-based service according to embodiments.

FIG. 23 is a flowchart illustrating a flow in which a reception device according to embodiments acquires service signaling based on signaling information related to FIG. 20 and the like. FIG. 23 may be an example combined with the service acquisition/discovery process of FIGS. 4, 6, 7, 16, 17, and 19 described above.

A flowchart of providing a service to a user by acquiring signaling of the service from signaling data acquired through service discovery by the receiver according to a service signaling mechanism method for the Internet-based service according to embodiments will be described.

Regarding the method/device according to the embodiments, this example shows that a URL indicating MPD is inserted in the USBD when the linear A/V service is an Internet-based service, and the URL value of USBD/USD/DeliveryMethod/BasePattern must match the value of BaseURL signaled in the MPD.

The details described in the above-mentioned drawings and above paragraphs will be omitted or briefly described in the description of FIG. 23, and reference may be made to the embodiments described above.

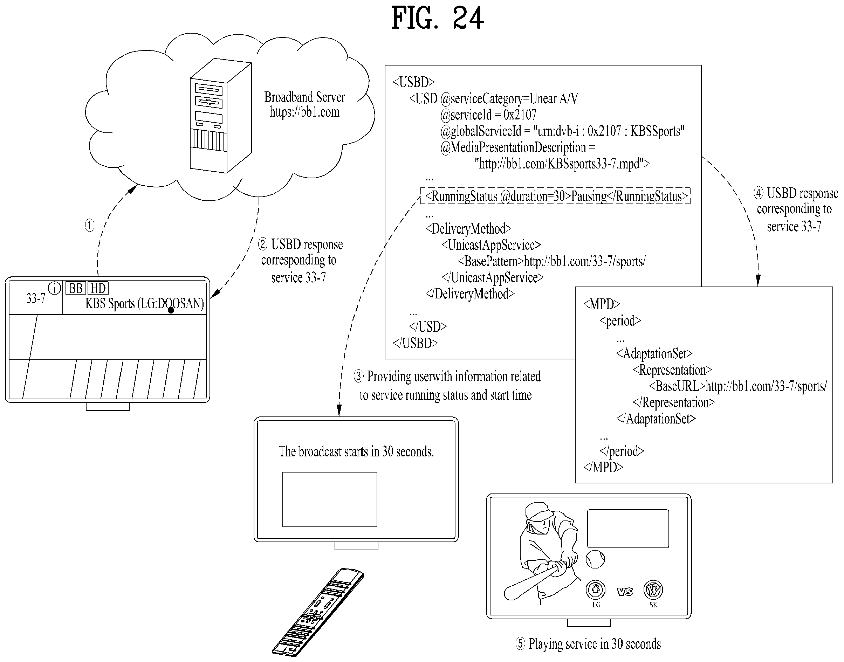

1. The reception device may display a list of Internet services using an SDLT. The SDLT may include information as shown in FIG. 24.

2. The reception device receives a signal for selecting a service (DVB-I) corresponding to 33-7 from a user.

3. The reception device makes a request for signaling information corresponding to a specific service ID, for example, USBD, to the broadband server using the values of URL TYPE and SERVICE ID.

4. The reception device receives a USBD corresponding to the service 33-7 from the server as a response.

5. The reception device may determine that there is an MPD corresponding to the service 33-7 from the USBD, make a request for an MPD to the server, and receive a response therefrom.

The reception device determines that the service with the ID of OX2107 is KBS Sports through the global service ID of the USBD, and determines the MPD for the service through the media presentation description of the USBD. The reception device may check the base URL for the sports of the service corresponding to 33-7 for the server address through the acquired MPD. The reception device may display a service desired by the user based on the above-described service discovery signaling.

FIG. 24 shows an example of a UI/UX based on RunningStatus according to embodiments.

FIG. 24 illustrates an operation based on the RunningStatus of FIG. 22 in relation to FIG. 23 and the like.

FIG. 24 shows a UX/UI that the receiver may implement to provide information to the user in relation to the RunningStatus element value for indicating the status of the service among the signaling schemes of USBD/USD according to embodiments.

The example of the embodiments shows that when RunningStatus is Pausing, the receiver determines that the app does not perform rendering after checking the attribute value of @appRendering, provides the pausing duration to the user using the receiver UI, and displays the score of a sporting event up to the present time on the screen using a receiver app.

In FIG. 24, operations 1 and 2 are the same as/similar to the above-described embodiments. Referring to operation 3 and subsequent processes, the reception device receiving the USBD may recognize that the running status is pausing at a duration of 30 seconds based on the information of the USBD, and display related information on the display in the form of UI/UX. For example, based on the image/icon/sound information, it may deliver information that "broadcast starts in 30 seconds" to the user. Regarding operation 4, the reception device makes a request to the server for an MPD for service 33-7, and receives the requested information as a response. Regarding the MPD, the period element contains an adaptation set, and the adaptation set element contains a representation. The representation element contains a base URL. The base URL may be composed of information such as a server address, a service ID, service category (sports), and the like. The reception device may play the sports service after 30 seconds based on the USBD and/or MPD.

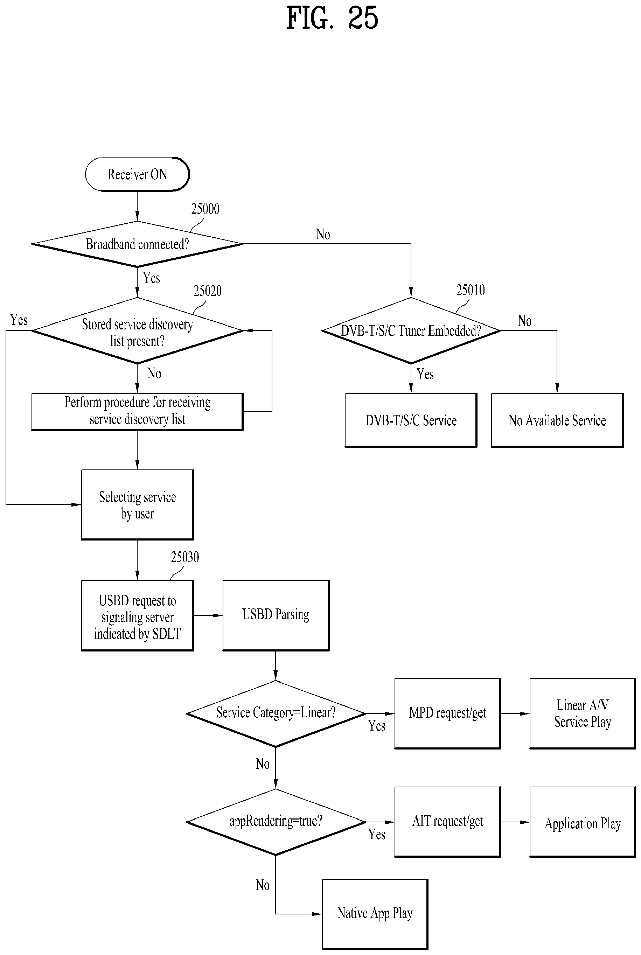

FIG. 25 is a flowchart of a USBD signaling process according to embodiments.

FIG. illustrates a flow in which a reception device according to embodiments acquires and plays various types of services based on the service signaling information described with reference to FIGS. 20 to 25. FIG. 25 may be combined with the flowchart of FIG. 8 and the like.

The signaling flowchart of the method/device according to the embodiments is configured as follows.

In operation 2500, the device according to the embodiments turns on the power. The reception device checks whether the device is connected to a broadband or communication network.

In operation 25010, when the reception device is not connected to the communication network such as the Internet, it checks the DVB-T/S/C tuner in the reception device or checks whether a DVB-T/S/C service can be received. When the reception device cannot receive the DVB-T/S/C service or the like, the reception device may display or notify the user that there is no available service. When a DVB-T/S/C service or the like can be received, the reception device provides the DVB-T/S/C service or the like to the user.

In operation 25020, when the reception device is connected to an Internet network or the like, it is checked whether there is a service discovery list (or information) stored in the reception device. When there no service discovery information is present in the reception device, the reception device performs an operation to acquire a service discovery list. When service discovery information is present in the reception device, the reception device receives a signal (information) for selection of a service from the user.

In operation 25030, the reception device may transmit a USBD request to the signaling server signaled (indicated) by the SDLT. The USBD request may include a case where the service category is Linear. When the service category is Linear, the reception device may make a request for an MPD to the signaling server and acquire the MPD. The reception device may play the linear A/V service based on this signaling process. When the service category is not Linear, the service signaling process may vary depending on whether the value of appRendering is TRUE or FALSE. When the appRendering is TRUE, the reception device may make a request for the AIT to the signaling server and acquire the AIT to play an application. When the appRendering is FALSE, the reception device may play a native app.

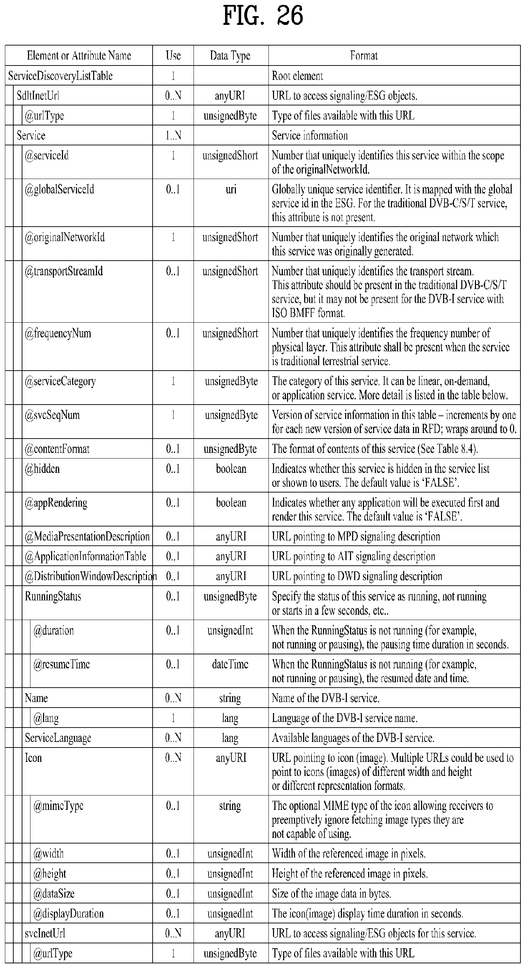

FIG. 26 shows extended syntax of a service discovery list table according to embodiments.

The SDLT of FIG. 26 may correspond to the SDLT of FIGS. 5, 6, 7, 8, 9, 13, 16, 17, 19, 23, 25, etc.

The method/device according to the embodiments may configure an SDLT for faster service discovery and service acquisition of the DVB-I service.

The embodiments propose a service discovery list table (SDLT) and USBD configuration scheme as shown in FIG. 26 in order to more quickly provide a service selected by the user from among the services that may be provided to the user through the service discovery process.

The SDLT may be essential information that the receiver must have first for service discovery. Through this signaling data, the receiver may provide service list information allowing the user to select a service. In this case, the SDLT may be configured to include more information. This configuration information has may enable a rich amount of service to be provided and enable a service to be played more quickly when a user selects the service.

When the SDLT is configured in this way, USBD in the signaling metadata of an Internet-based service may include a DeliveryMethod element value that provides information mapped to the MPD, and @serviceId and @globalServiceId information may be used as information for mapping to the SDLT and information for mapping to the ESG.

Each element of the SDLT will be described with reference to the figure.

ServiceDiscoveryListTable represents a root element.

SdltInetUrl indicates a URL for accessing signaling/ESG objects.

@urlType indicates the type of files available with this URL.

Service represents service information.

@serviceId indicates a number that uniquely identifies this service within the scope of originalNetworkId.

@globalServiceId indicates a globally unique service identifier. It is mapped to the global service ID in the ESG. For the traditional DVB/T/S/C services, this attribute may not be present.

@originalNetworkId indicates a number that uniquely identifies the original network from which this service was originally generated.

@transportStreamId indicates a number that uniquely identifies the transport stream. This attribute is present in the traditional DVB-T/S/C services. However, this attribute may not be present for the DVB-T service in ISO BMFF format.

@frequencyNum indicates a number that uniquely identifies the frequency number of the physical layer. This attribute may be present when the service is the traditional terrestrial service.

@serviceCategory indicates the category of this service. The category may be linear, on-demand, or application service.

@svcSeqNum indicates the version of service information. It may be incremented by 1 for each new version of service data in RFG.

@contentFormat indicates the format of contents of this service.

@hidden indicates whether this service is hidden in the service list or shown to users. The default value of @hidden is FALSE.

@appRendering indicates whether any application will be executed first or render this service. The default value is FALSE.

@MediaPresentationDescription is a URL pointing to MPD signaling description.

@ApplicationInformationTable is a URL pointing to AIT signaling description.

@DistributionWindowDescription is a URL pointing to DWD signaling description.

RunningStatus indicates the status of this service.

Description of attributes previously described will be omitted.

The syntax of USBD applied when an extended SDLT is used will be described below.

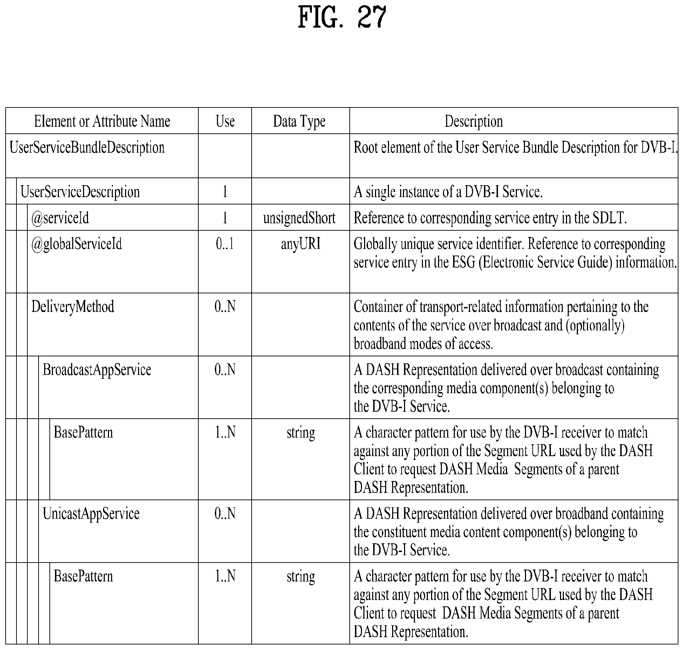

FIG. 27 shows syntax of a reduced USBD according to embodiments.

The USDB of FIG. 27 may correspond to the USBD of FIGS. 20, 21, 23, 24, 25, and the like.

UserServiceBundleDescription is a root element of the user service bundle description for DVB-I.

UserServiceDescription is a single instance of a DVB-I service.

The configuration of the USBD may be reduced as shown in FIG. 27. For details of each element, refers to the description above.

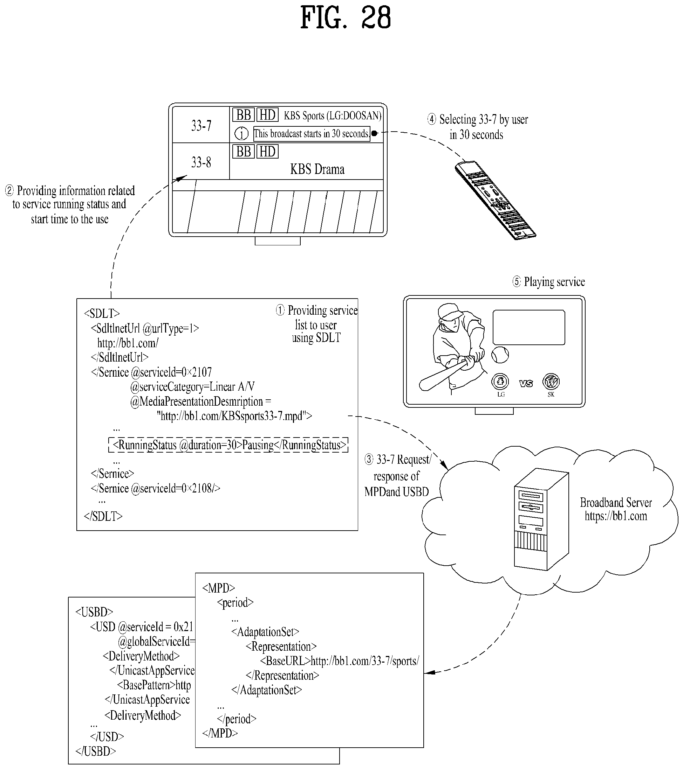

FIG. 28 illustrates a UI/UX for providing a service list and a service using an extended SDLT according to embodiments.

The SDLT, USBD, and MPD of FIG. 28 may correspond to the SDLT, USBD and MPD of FIGS. 5, 6, 7, 8, 9, 13, 16, 17, 19, 20, 21, 23, 24, 25, 26, 27, etc., respectively. In addition, FIG. 28 may be combined with the UI/UX implementation of FIGS. 7, 17, 23, 24, and the like.

A flowchart of service discovery using an extended SDLT by a method/device according to embodiments will be described below.

1. The reception device (corresponding to the reception device according to the above-described embodiments) provides a service list to the user using the SDLT. As described above, the SDLT includes a URL type, a service category for each service ID, media presentation description, and a running status.

2. The reception device may display service running status and start time related information on the display. The display of the reception device may display the ESG and service related information through UI/UX. For example, for channel number 33-7, information such as DVB-I content display, HD, BB, KBS SPORTS (LG vs. Doosan), "This broadcast starts in 30 seconds," and the like may be displayed.

3. The reception device may make a request for MPD and USBD for service 33-7 to the server and receive a response from the server.

4. The reception device may receive, from the user, a signal for selection of service 33-7 by the user after 30 seconds.

5. The reception device may display the service desired by the user.

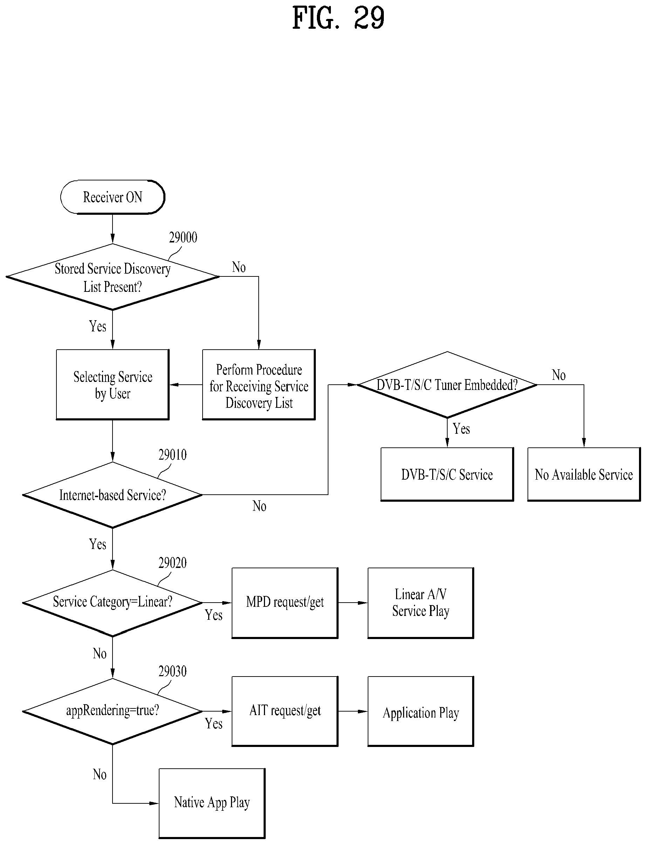

FIG. 29 is a flowchart illustrating use of an extended SDLT and a reduced USBD according to embodiments.

FIG. 29 is a flowchart illustrating a method of acquiring and playing service data by a reception device according to the embodiments using SDLT and USBD according to the above-described embodiments. FIG. 29 may be combined with the flowchart of FIG. 25 and the like.

In operation 29000, the method/device according to the embodiments checks whether there is a service discovery list stored in the reception device after the power of the receiver is turned on. When there is no stored list, an operation for receiving a service discovery list is performed. The reception device may acquire a service discovery list contained in a broadcast signal or may acquire a service discovery list from the server. When there is a stored list (including the service discovery information according to the above-described embodiments), the reception device receives a signal/information about a service selected by the user.

In operation 29010, the reception device checks whether the service selected by the user is an Internet-based service. When the selected service is not an Internet-based service, the device checks whether there is a DVB-T/S/C tuner in the reception device. When there is no tuner, the device informs the user that there is no service available. When there is a tuner, the reception device provides a DVB-T/S/C service.

In operation 29020, when the service is an Internet-based service, the reception device checks whether the service category is linear. When the service category is linear, the reception device transmits an MPD request to the server and receives an MPD response. The reception device plays the linear A/V service based on the MPD.

In operation 29030, when the service category is not linear, the device checks whether appRendering is true. When the appRendering is not true, the reception device plays the native app. When the appRendering is true, the reception device transmits an AIT request to the server and receives an AIT response. The reception device plays the application based on the AIT.

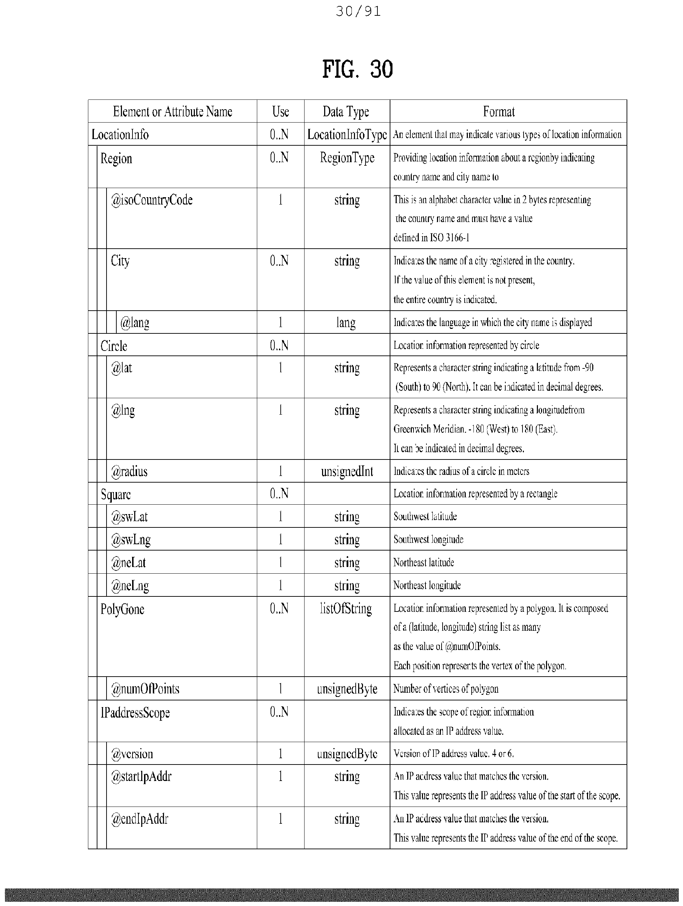

FIG. 30 shows syntax of a LocationInfo element indicating location information according to embodiments.

FIG. 30 shows location information that may be additionally delivered in the SDLT according to the above-described embodiments. FIG. 30 may be an example of the SDLT related to FIG. 26 and the like.

The method/device according to the embodiments may additionally signal location information for which a service may be provided.

Embodiments propose a method of including location information in service discovery signaling in order to filter a service or a service list according to a location of a receiver.

Embodiments propose a method of displaying location information as shown in FIG. 30. The location information may be indicated by various methods.

1. The LocationInfo according to the embodiments may provide region information using a registered country code and city name. Since region information recognizable by humans is provided in text, it may be provided to the user after receiver parsing even when the location information is not recognized by the receiver,.

2. The LocationInfo according to the embodiments allows the information about a region in which the service is provided to be drawn in a circular shape. This allows comprehensive region information to be included by providing three kinds of simple information.

3. The LocationInfo according to the embodiments provides 4 kinds of location information by providing the latitude and longitude of the southwest end point and the northeast end point such that a rectangle may be drawn.

4. The LocationInfo according to the embodiments may provide more accurate location information by providing polygon location information allowing a polygon to be constructed.

5. The LocationInfo according to the embodiments may allow the IP of a receiver connected to the Internet to be known, and allow a corresponding service to be provided in a region of a category to which the IP address belongs.

The LocationInfo information as described above may be signaled through an SDLT according to embodiments, and may be positioned at two levels. When it is positioned under the SDLT, location information about all services belonging to the SDLT may be provided. When the LocationInfo is positioned under the Service, it may provide information about a location at which the corresponding service may be provided. When different information is provided in the region information presented in the SDLT and the Service, the location information provided in the Service takes precedence.

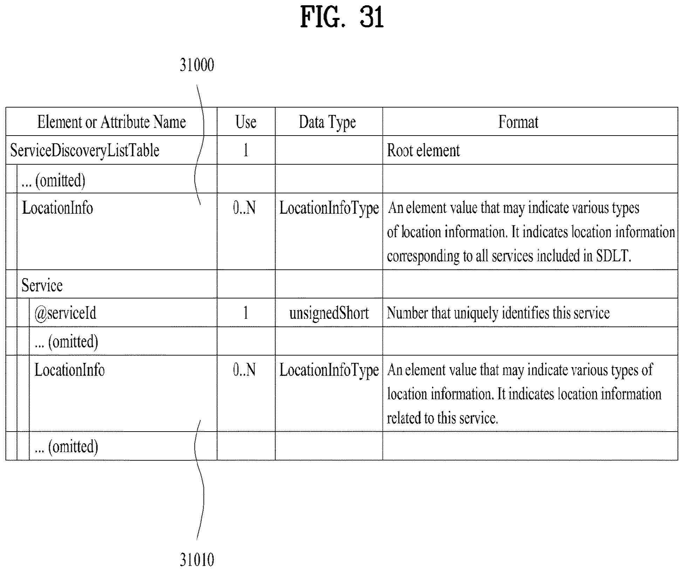

FIG. 31 shows an SDLT including location information according to embodiments.

FIG. 31 shows a specific example of the SDLT of FIG. 30 and the like.

LocationInfo: an element that may indicate various types of location information. It indicates location information corresponding to all services included in the SDLT.

The LocationInfo 31000 may be signaled as information common to the entire service list signaled by the SDLT.

The LocationInfo 31000 may be provided for each service signaled by the SDLT.

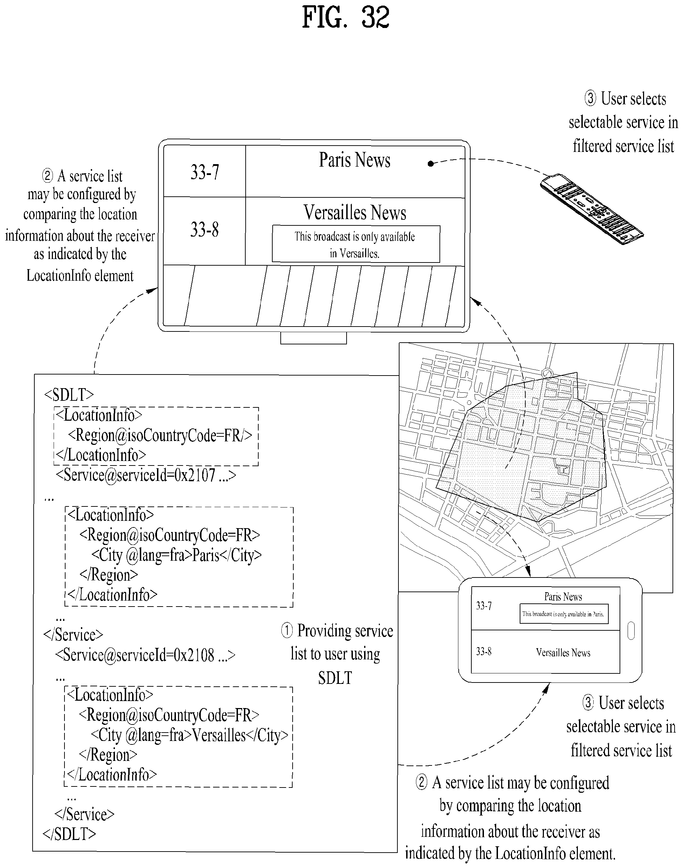

FIG. 32 illustrates an example of an SDLT providing area information and operation of a receiver according to embodiments.

FIG. 32 illustrates a UI/UX operation implemented based on the SDLT related to FIG. 31 and the like.

FIG. 32 shows a flow in which a reception device provides a region-based service using an SDLT including LocationInfo (which may be referred to as location information, region information, or the like).

A method of configuring the UX/UI and SDLT according to the embodiments is described below.

FIG. 32 shows an example of the configuration of an SDLT including region information. For example, when two services provided in France by broadcast are services provided only in different cities, the respective pieces of region information are signaled under the SDLT and the Service. The receiver having acquired the SDLT may show a service list to the user according to the information provided. In this case, the receiver capable of extracting information on which the receiver is located may show a filtered service list to the user according to the location information provided by the SDLT.

The operation of the method/device according to the embodiments is performed in a flowchart as follows.

1. The reception device (including the reception device of the above-described embodiments) provides a service list to the user using the SDLT. The SDLT according to embodiments may further provide LocationInfo.

2. The reception device may check information on which the receiver is located based on the LocationInfo element, configure a service list through comparison and display the configured service list on the display. For example, service 33-7 is Paris News, and service 33-8 is Versailles News. Here, the Versailles news may be news that may be viewed only in the Versailles region. Based on the SDLT, the reception device may provide the user with "this broadcast is available only in the Versailles region" as 33-8 service guide information.

The reception device includes a TV or a mobile device. In this case, the reception device may compare the location of the mobile device (or TV) with the location information of the LocationInfo based on the information indicated by the LocationInfo element, and may display a service list reflecting the comparison result.

3. The reception device may receive, from the user, a signal for a service selected by the user in the filtered service list. The user may select a selectable service in the filtered service lists.

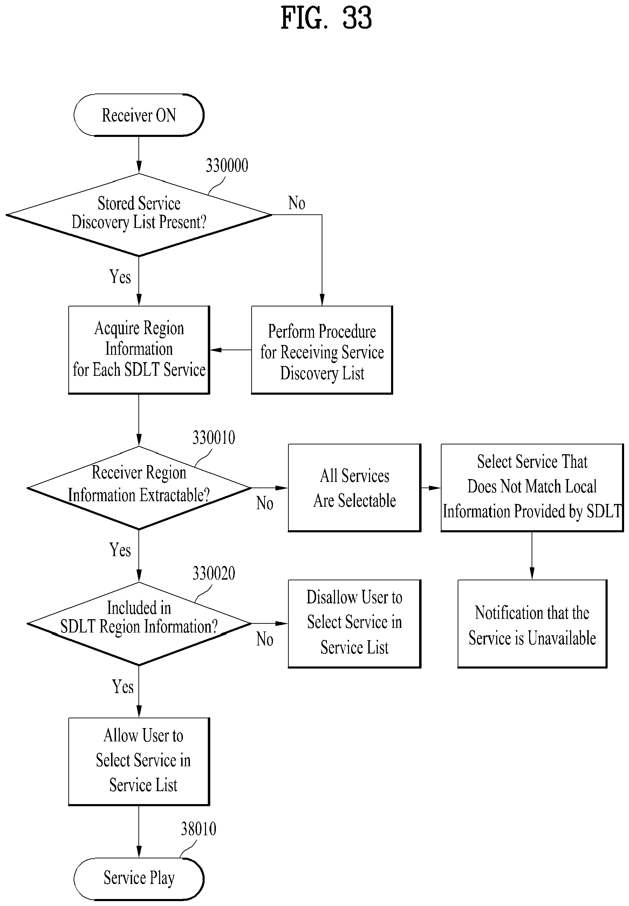

FIG. 33 is a flowchart of a receiver through provision of region information according to embodiments.

FIG. 33 is a flowchart of a receiver providing service information based on the SDLT related to FIG. 31 and the like. FIG. 33 may be combined with flowcharts related to FIG. 29 and the like.

Operations in this flowchart that are the same as/similar to the above-described operations may be omitted or briefly described, and reference may be made to the description of the operations disclosed above.

In operation 33000, when the power of the receiver (reception device) is turned on, the receiver checks whether there is a stored service discovery list. When there is a stored service discovery list, the receiver acquires region information for each SDLT service.

In operation 330010, the receiver checks whether receiver region information can be extracted. When the region information cannot be extracted, the receiver may select any services. When the user selects a service that does not match the local information provided by the SDLT, the receiver notifies the user that the service is not available.

In operation 330020, the receiver extracts the receiver region information, and checks whether the receiver region is included in the SDLT region information. When the location is not included, the receiver notifies the user such that the user cannot select a service in the service list. When the location is included, the receiver notifies the user that the user can select a service in the service list, and plays a service corresponding to the user selection.

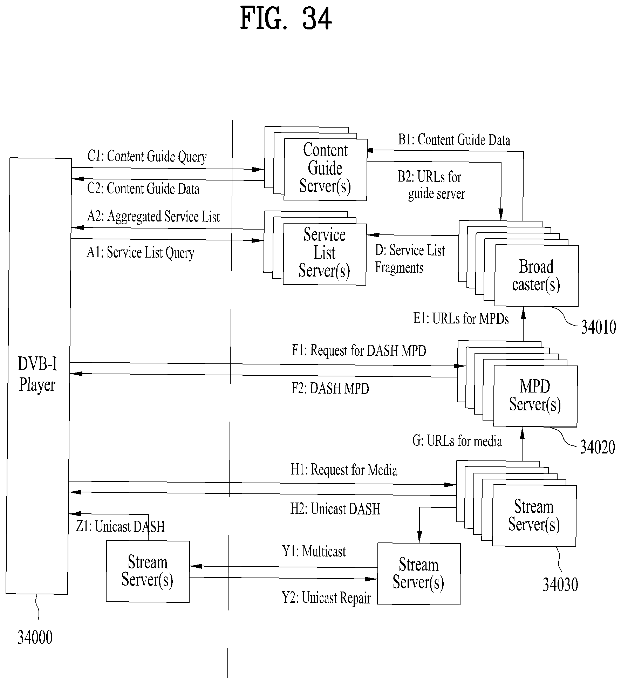

FIG. 34 shows an example configuration of DVB components and interfaces related to a device according to embodiments.

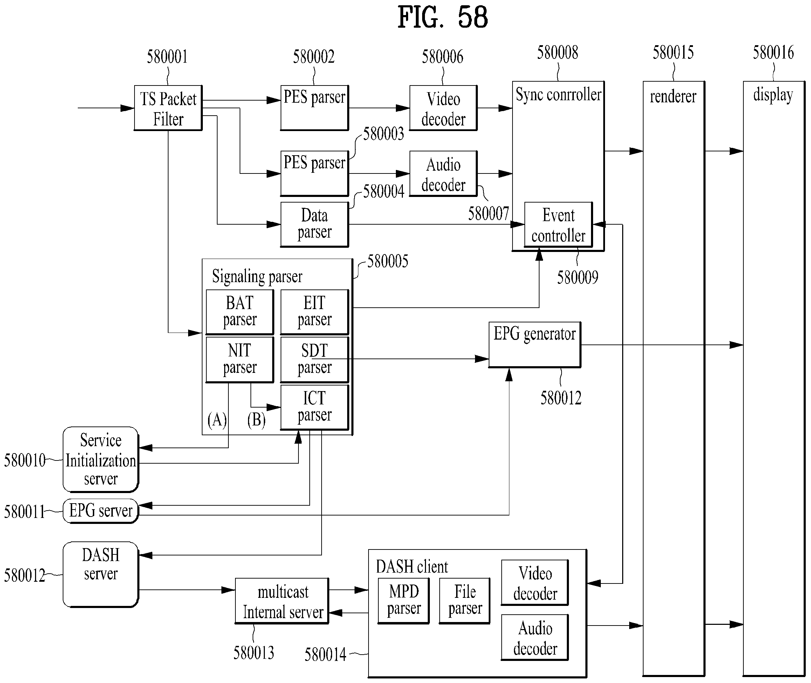

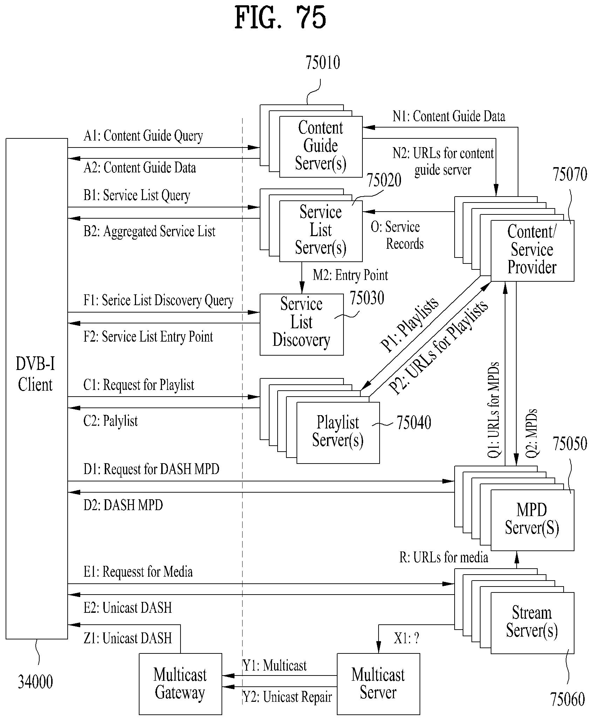

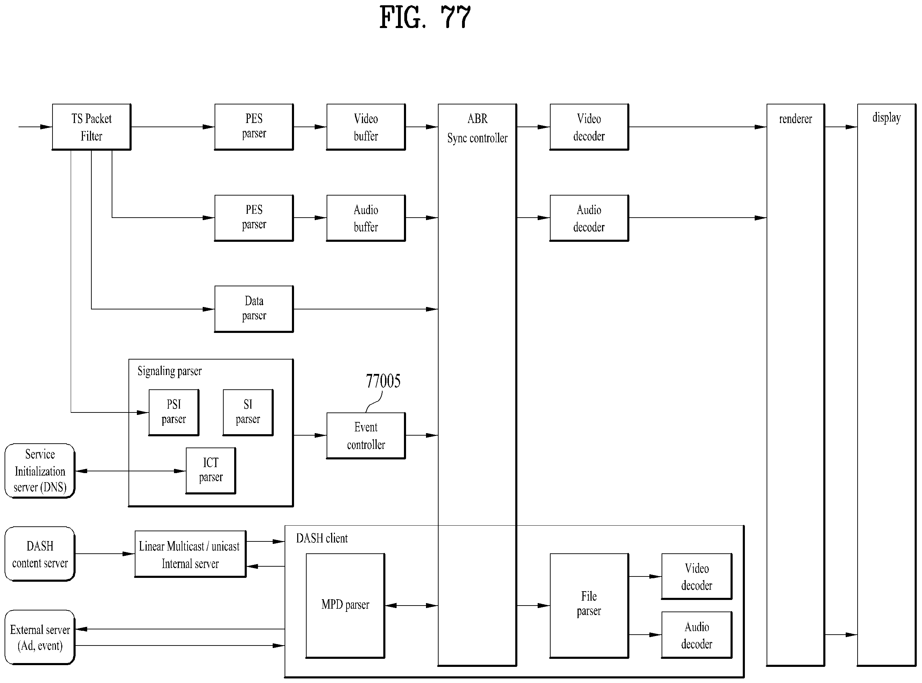

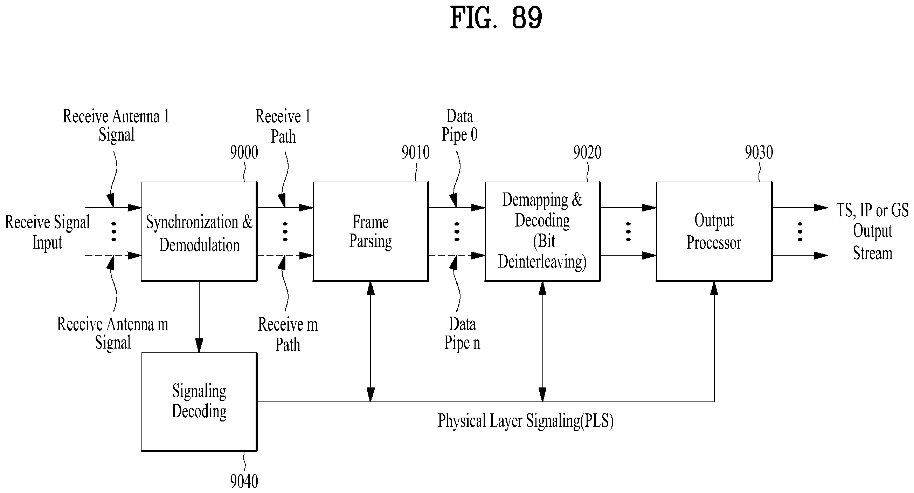

The DVB-I player 34000 of FIG. 34 may correspond to the reception device according to the embodiments. FIG. 34 shows a flowchart in which a reception device acquires service signaling information and the like from servers. The DVB-I player 34000 may correspond to is a reception device corresponding to the DVB-I transmission of FIG. 1, the TV 20000 of FIG. 2, the mobile device 40020 of FIG. 4, the computer 40030 of FIG. 4, the TV 40040 of FIG. 4, the set-top box or second device 40050 of FIG. 4, the mobile device 60000 of FIG. 6, the TV of FIGS. 7, 17, 23, 24, 28, 32, 57, 86, and 87, the mobile device of FIGS. 16 and 19, the reception device of FIG. 58 , the device for the DVB-I client 75000 in FIG. 75, the reception device of FIGS. 77 and 89, and the like.

The method/device according to the embodiments may implement a method of receiving DVB-I aggregated service list signaling.

In the above, a query form for requesting a DVB-I service description over the broadband network has been defined. A DVB-I terminal sends a query through a pre-provisioned URL and receives an aggregated service list including all DVB-I service lists.

FIG. 34 is a diagram illustrating a process of performing DVB-I service discovery and receiving content. On the interface B, a service list query is sent at regular intervals and a service list is received. For example, a broadcaster 3410 or a transmission device 34010 corresponding to a reception device 34000 according to embodiments may transmit content guide data B1 and/or URLs B2 for the content guide server to the content guide server(s). The transmission device 34010 may transmit service list fragments D to the service list server(s). The reception device 34000 (DVB-I player) may transmit a content guide query C1 to the content guide server(s) and receive content guide data C2 from the content guide server(s). The reception device 34000 may transmit a service list query A1 to the service list server(s) and receive an aggregated service list A2 from the service list server(s).

The interface C is a process in which the reception device 34000 receives a content guide through SdltInetUrl or SvcInetUrl defined in the aggregated service list table, or through a pre-provisioned URL. The received content guide is aggregated with the existing broadcast channel into a specific logical channel to show a service. The content/service provider provides content guide data to allow the DVB-I terminal 34000 to access the content guide server. In addition, a service list fragment is periodically provided through the interface D at regular intervals to allow the DVB-I terminal to receive the aggregated service list. The reception device 35000 requests an MPD through an MPD URL defined in the received aggregated service list table and receives a desired linear service.

The broadcaster/transmission device 34010 receives URLs for MPDs from the MPD server(s) 34020 (E1). The MPD servers 34020 receive (G) URLs for media from the stream server(s) 34030. The reception device 34000 transmits a request F1 for DASH MPD to the MPD server 34020 and receives DASH MPD F2 from the MPD server 34020.

The stream server 34030 receives a request HI for media from the reception device 34000 and transmits unicast DASH H2 to the reception device 34000. The stream server 34030 may be connected to a multicast server. The reception device 34000 may be connected to a multicast gateway. The multicast gateway and the multicast server are used to transmit multicast Y1 and to exchange unicast repair Y2. The reception device 34000 receives unicast DASH Z1 from the multicast gateway.

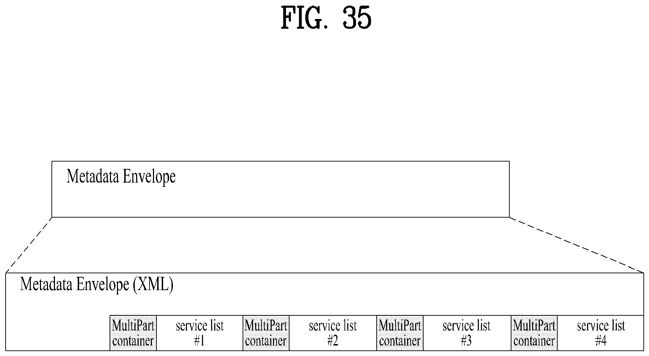

FIG. 35 shows a metadata envelope for receiving a service list according to embodiments.

FIG. 35 shows a configuration of the metadata envelope of FIGS. 18 and 19.

In FIG. 35, the DVB-I terminal should periodically send an HTTP request query for requesting an aggregated service list through the interface A, and should check whether the received response information is the latest information. However, there is no information for determining whether the response according to the query is the latest version information. Thus, embodiments additionally proposed a method of quickly checking whether the response information is the latest information and determining whether to receive and parse the information.

Metadata Envelop: When the method/device according to the embodiments sends an HTTP request and receives an HTTP response thereto, it must be allowed to check whether the returned response meets the sent request. Second, the embodiments intend to ensure that the latest information may be acquired in the fastest time. Third, the aggregated service list should have multiple service lists, such that only the latest information is identified.

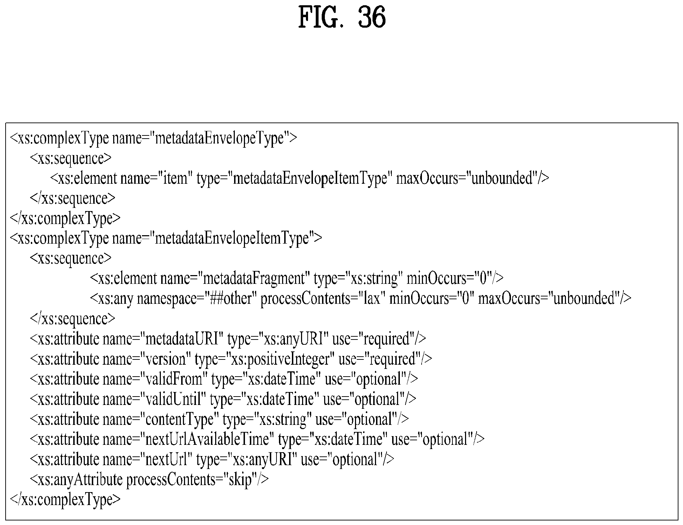

An HTTP response including a DVB-I service aggregated service list signaling object is carried in the metadataEnvelope structure, and each service list is transmitted for each multipart/related container of RFC 2387, for example. The metadataEnvelope is not attached to each service list, but is positioned at the top and references each fragmented service list. The metadataEnvelope of DVB-I service signaling according to the embodiments is composed of metadataEnvelopeType as shown in FIG. 36, and the type is defined by the following schema.

For example, the metadataEnvelope may have an XML format, and a service list may be transmitted for each multipart container.

FIG. 36 specifically shows a metadata envelope according to embodiments.

FIG. 36 corresponds to the metadata envelope described in FIGS. 18, 19, 35, and the like.

Through the interface A1 of FIG. 34, a query in the form of an HTTP request is sent to the service list server, and a service list aggregated in the form of a metadata envelop as shown in FIG. 35 is received as received data

The metadataEnvelope is composed of a sequence of item elements. Each item represents a respective signaling object. The item element is defined by metadataEnvelopItemType.

metadataURI indicates the address of the aggregated service list, and "version" and "validfrom"/"validUntil" indicate the valid time of the document/information. ContentType specifies an identifier of a specific service in the currently included aggregated service list.

The string of ContentType has a template form as shown below, and the information has a unique value for each service:

$$\text{ContentType} = \text{"Application/DITS-(OriginalNetworkID)-(TransportStreamID)-(serviceID)+xml"}$$

Through this information, the version information of a service changed in the aggregated service list may be checked, and then updated information may be acquired. Accordingly, the reception method/device according to the embodiments may search for and update only a changed value of a specific service without receiving the entire service list.

nextUrlAvailableTime: indicates a possible start time for making an HTTP request to the broadband server through nextUrl pointing to signaling of the next version. This attribute is proposed to reduce the request error of receivers that acquire a signaling object through the request/response process over the broadband network. The best time is calculated according to an implementation algorithm of the receiver in the duration between the value of this attribute and the attribute value of validUntil to reduce the probability that a response fails to be received due to concentration of receiver requests.

nextUrl: indicates a broadband URL address value pointing to a signaling object of the next version.

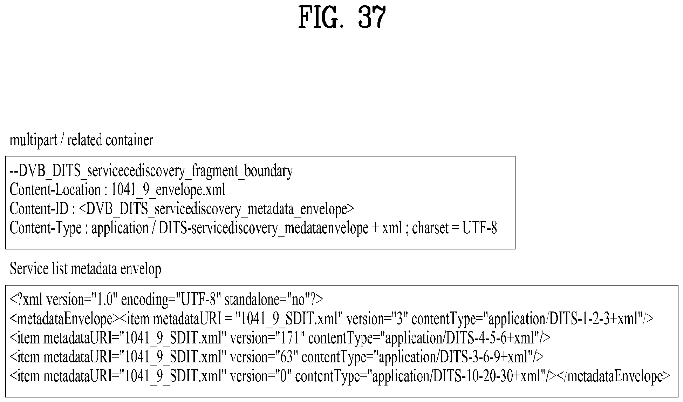

FIG. 37 shows a DITS service discovery metadata envelop according to embodiments.

FIG. 37 shows a configuration in which a container of a metadata envelope related to FIGS. 18, 19, 35, 36, etc. has an identifier, a type, a content type, and a metadata URI.

The metadata envelope of FIG. 37 is a service list metadata envelope configured when a service list fragmented for each unique service is carried in a multipart/related container. contentType of each service is encoded and transmitted as (OriginalNetworkID)-(TransportStreamID)-(serviceID), which is unique information in DITS. Versioning and expiration management including the information and version information may be performed. When necessary, the multipart/related container content ID/content-type value may be checked and only corresponding information may be received.

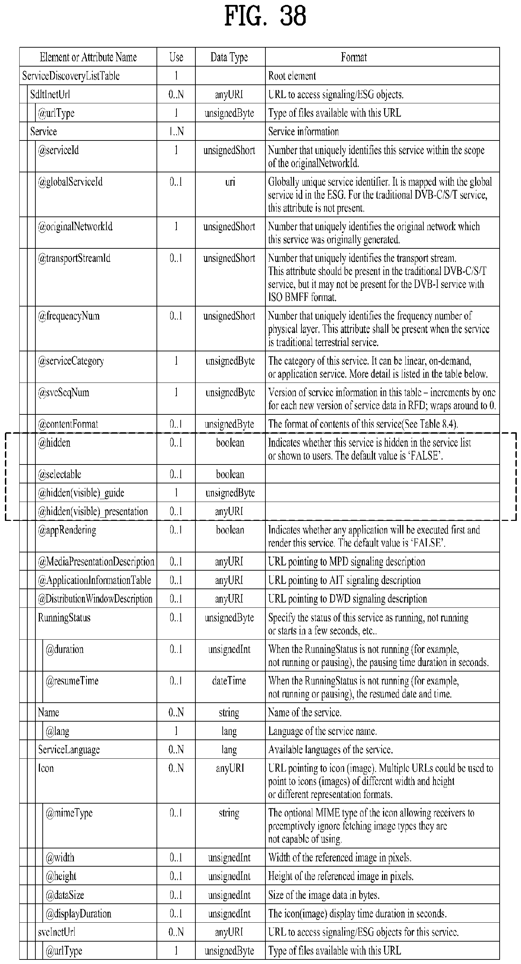

FIG. 38 shows an extension of an SDLT according to embodiments.

FIG. 38 shows an example extended syntax of the SDLT according to the above-described embodiments (FIG. 26, etc.). For details of elements described above, refer to the above description.

In the method/device according to the embodiments, a service discovery list table (SDLT) and USBD configuration scheme is proposed in order to more quickly provide a service selected by the user from among the services that may be provided to the user through the service discovery process.

The SDLT may be essential information that the receiver must have first for service discovery. Through this signaling data, the receiver may provide service list information allowing the user to select a service. In this case, the SDLT may be configured to include more information. This configuration information has may enable a rich amount of service to be provided and enable a service to be played more quickly when a user selects the service.

There are two ways to select a linear channel in providing DVB-I service. The user may directly select a channel number or select a channel through channel surfing. Considering the characteristics of the DVB internet channel, unicast may be received based on an HTTP network, or a linear channel service may be provided in the form of multicast. DVB-I is a subscription/streaming type on the Internet, unlike the reception of a channel, which is a DVB broadcast, for an unspecified number of users through a dedicated frequency and logical channel, and thus it requires channel management through the hidden/inactive modes of the channel.

The extended syntax of the SDLT according to the embodiments further includes the following values: @hidden (indicating whether the service is hidden or shown to users, and has FALSE as a default value), @selectable (indicating selection possibility), @hidden(visible)_guide, @hidden(visible)_presentation (a hidden channels may be signaled through a combination).

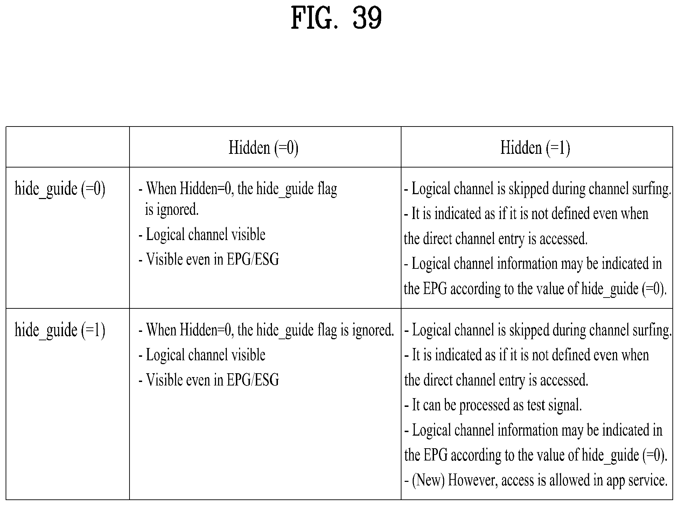

FIG. 39 shows an example of channel management according to embodiments.

FIG. 39 shows the hidden element of FIG. 38;

For example, the broadcast network ATSC 1.0 may define channel management as follows.

@hidden: A boolean value indicating whether a logical channel is visible or hidden. It indicates the visible or hidden attribute when a user searches for the logical channel or directly selects a channel entry.

@hide_guide: A boolean value indicating whether a logical channel is visible or hidden in the EPG. It indicates the visible or hidden attribute of a channel guide for the user.

This method is an RF broadcasting environment-based channel management method, and channel management should be manually performed based on only the information in the service list. However, in the DVB-I environment, a return channel exists, and thus there may be various channel management methods.

In embodiments, when a channel is hidden/inactive in a DVB-I environment, a user may determine the existence/status of the corresponding channel using the return channel, and the hidden/inactive channel of an existing broadcast may be easily managed through an alternative service.

In the case of hide_guide (=1) and Hidden (=1), an indication that that the app service is accessible may be additionally signaled.

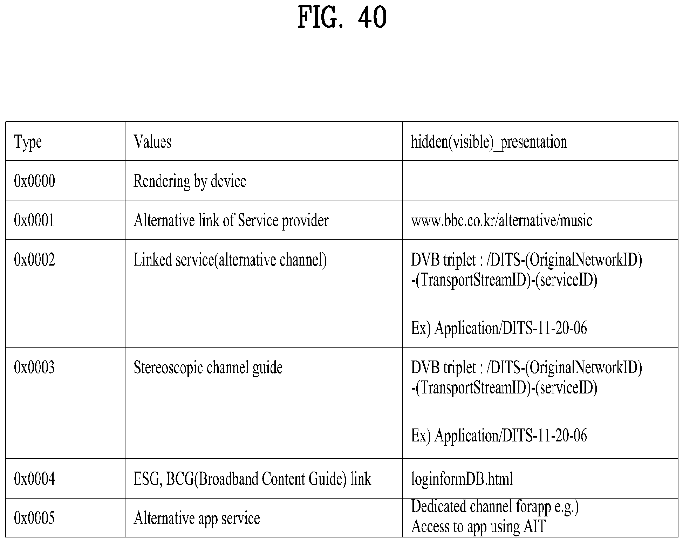

FIG. 40 shows values of hidden (visible)_presentation according to embodiments.

Regarding the technical issue described in FIG. 39, the following added elements may be used.

@Hidden(visible): A boolean value indicating whether a logical channel is visible or hidden. It indicates the visible or hidden attribute when a user searches for the logical channel or directly selects a channel entry.

@selectable: When this is set, a hidden service may be selected by direct input to the logical channel number. When the value is false, the hidden service cannot be selected even when the user directly inputs the hidden service.

@hidden_guide: When a channel is directly accessed in a hidden channel state, @hidden_guid may guide the state in the channel or display an alternative screen through a link. There may be type values indicating various types of channel guide methods.

@hidden(visible)_presentation: defines corresponding anyURI information according to a type value defined through hidden_guide.

FIG. 40 shows types of hidden guides related to hidden presentation.

When the type is 0x0001, it indicates an alternative link of a service provider, and the hidden presentation may provide a connection address, for example, www.bbc.co.kr/alternative/music.

When the type is 0x0002, it indicates a linked service of an alternative channel, and the hidden presentation may signal a DVB triplet, for example, DITS-(OriginalNetworkID)-(TransportStreamID)-(serviceID).

When the type is 0x0003, it indicates a stereoscopic channel guide, and the hidden presentation may signal a DVB triplet, for example, DITS-(OriginalNetworkID)-(TransportStreamID)-(serviceID).

When the type is 0x0004, it indicates an ESG or broadband content guide (BCG) link, and a hidden presentation may signal loginformDB.html.

When the type is 0x0005, it indicates an alternative app service, and the hidden presentation may signal an app dedicated channel. Thus, the reception device may access the app using the AIT.

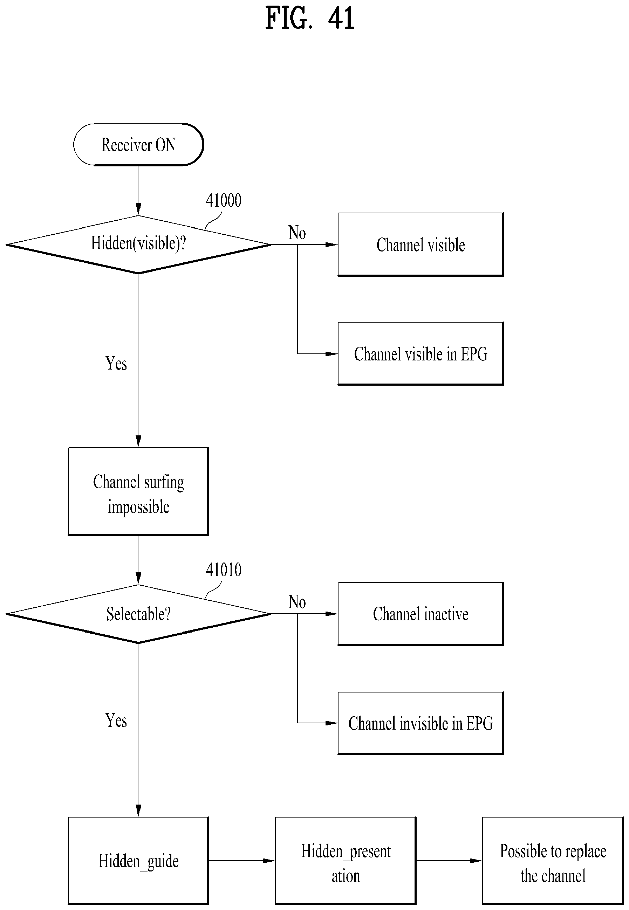

FIG. 41 is a flowchart of hidden channel management according to embodiments.

FIG. 41 is a flowchart illustrating processing of a channel based on the hidden channel related to FIGS. 38 to 40.

The operation of the above-described embodiments will be described with reference to the flowchart as follows.

In operation 41000, when the power of the reception device is turned on, the reception device checks whether the channel/service is hidden. When the channel/service is not hidden, the reception device indicates a visible channel and a visible channel guide on the display.

In operation 41010, when there is a hidden channel/service and channel surfing is impossible, the reception device checks whether the channel is selectable. When the channel is not selectable, the reception device notifies the user that the channel is inactive and the channel guide is not visible. In the case of YES for selection possibility, the reception device may generally process/display the hidden channel based on the hidden guide and the hidden presentation.

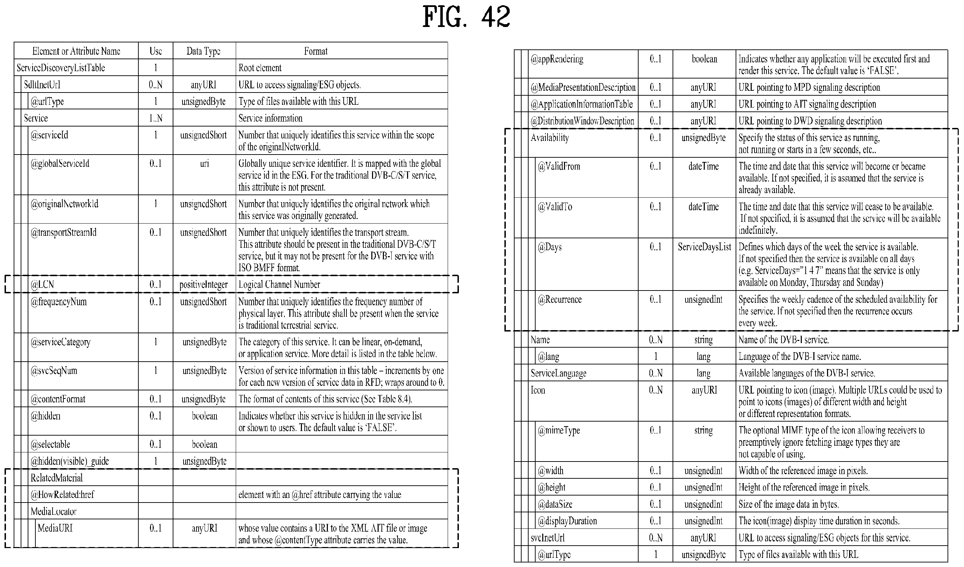

FIG. 42 shows an example of an SDLT including RelatedMaterial according to embodiments.

FIG. 42 shows the syntax of an SDLT related to FIG. 38 and the like.

A method of providing a service related material when a DVB-I part-time service is provided and the service is inactive will be described with reference to FIG. 42.

As described above, the DVB-I service may provide an Internet linear channel, and in a service discovery process, a service may be provided in a part-time form in a specific LCN. In order not to cause confusion when the user selects directly a service through a channel number in the outside of service state, channel change API may be executed through an inactive service banner image or an additional application, or additional VoD service may be provided. In this regard, a hierarchy that fits the real practice is proposed by applying a datatype value that is actually used in the industry.

The SDLT of FIG. 42 may correspond to the SDLT according to the above-described embodiments, and added elements/fields will be described as follows.

@LCN indicates a logical channel number.

RelatedMaterial may further include the following elements.

@HowRelated:href may be delivered together with an @href element carrying a value.

MediaLocator may carry information about the location of the media. Specifically, MediaURI may be a value containing a URI for an XML AIT file or image, and @contentType may carry the value.

Availability indicates the status of this service (running, not running or starts in a few seconds, etc.).

@ValidFrom indicates the time/date when this service becomes valid. When this value is not specified, it may be assumed that the service is already available.

@ValidTo indicates the time/date when this service will expire. When this value is not described, it may be assumed that this service is available indefinitely.

@Days indicates days of the week on which the service is available. When not specified, the service is available on all days. For example, ServiceDays="1 4 7" indicates that the service is only available on Monday, Thursday and Saturday.

@Recurrence indicates the weekly cadence of the scheduled availability for the service. When not specified, the recurrence occurs every week.

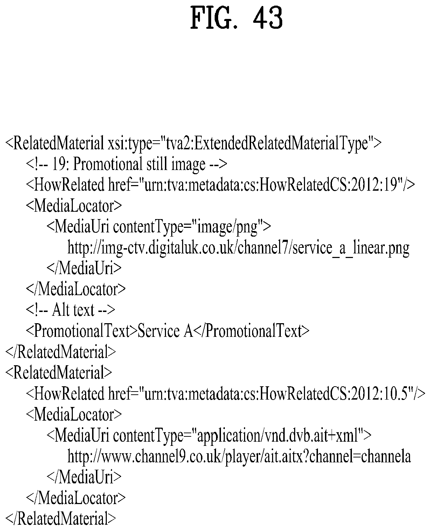

FIG. 43 shows an example of use of the Related Material according to embodiments.

FIG. 43 shows a detailed syntax of the related material of FIG. 42.

The receiver according to the embodiments signals an actual valid time of the part-time service through the attributes in the <Availability> element, and checks the inactive period. The screen displayed on the LCN during the period may show the inactive state as an attribute defined in the element of <RelatedMaterial>. @MediaURI is the same attribute as the above-described hidden(visible)_presentation URI and conforms to HbbTV(AIT) app signaling and app life-cycle. When it is omitted, an inactive alternative service may be provided through the URI defined in @Application-InformationTable. When the content_type of @MediaURI is "image/png", the inactive service banner may be indicated. An inactive service may be provided through an image and app signaling according to content_type in the @MediaURI attribute.

For example, according to @MediaURI, the reception device may provide an inactive state based on the image (image/png) (banner) of http://img- ctv.digitaluk.co.uk/channel7/service_a_linear.png.

According to @MediaURI, the reception device may provide an inactive state based on application/vnd.dvb.ait+xml(application) of http://www.channel9.co.uk/player/ait.aitx?channel=channela.

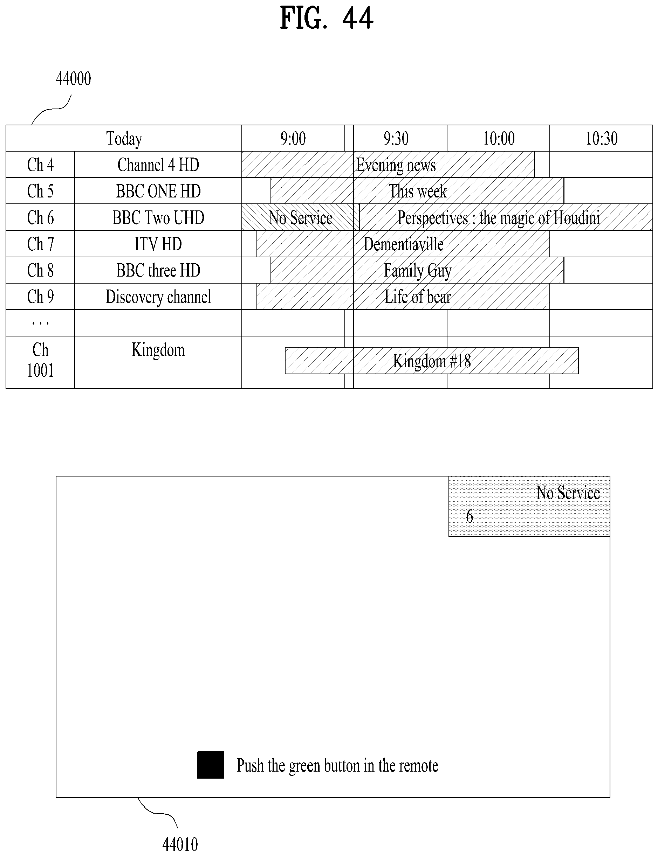

FIG. 44 shows an example of use of an inactive banner according to embodiments.

FIG. 44 may be included in the example of channel management in FIG. 41 and the like.

FIG. 44 shows a UI/UX that may be applied on a specific logical channel number (LCN) in an inactive service. The reception device may display an ESG 44000 on the display. In the case of LCN 6 on the UI/UX of the ESG 44000, the reception device may provide an alternative application such as a "No service" banner indicating "No service" as a current state (44010). The alternative application may be executed on the blank screen, or the reception device may receive a signal for selecting an alternative application by a user through a remote controller, and execute an operation related thereto.

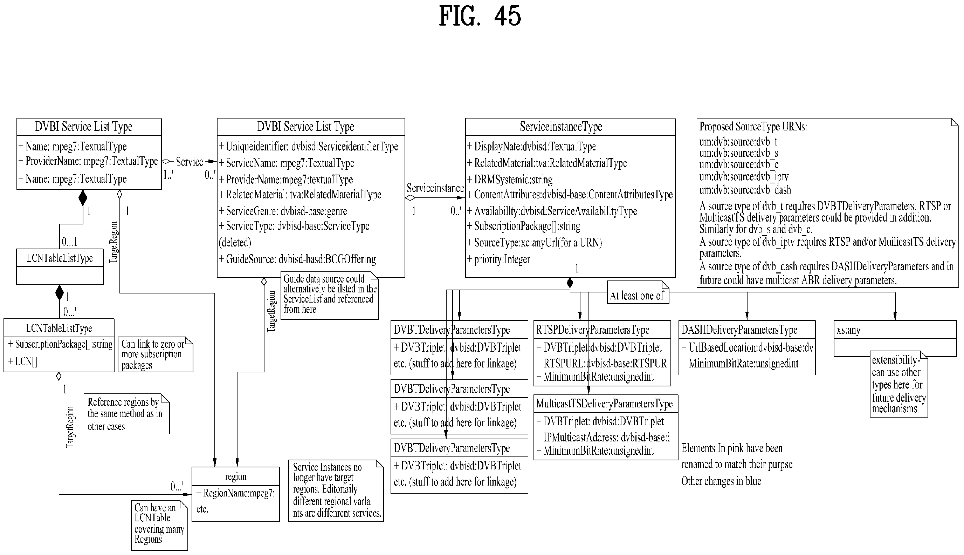

FIG. 45 shows a hierarchical structure of a service list according to embodiments.

The service list hierarchical structure of FIG. 45 is for the service scenario of FIG. 1.

The DVB-I service list may contain respective services, and each service may contain service instances. Multiple service instances may be defined according to each delivery network, and uniqueness may be distinguished according to the URN of source_type.

The DVB service list type 45000 may reference the DVB-I service type 45010 for each service. The DVB-I service type 45010 signals a related material and a guide source. The DVB-I service type 45010 may reference the service instance type 45020 for each service instance. The service instance type 45020 signals a subscription package for the related material and a source type for URN. The service instance type may reference at least one of a delivery parameter type for DVB T/S/C, an RTSP delivery parameter type, a multicast delivery parameter type, or a DASH delivery parameter type.

The proposed source type URNs 45030 provide URNs for DVB T/S/C/IPTV/DASH, etc.).

The DVB service list type 45000 references the LCN table list type, and the LCN table list type references the LCN table type. The LCN table type, the DVB service list type 46000, and the DVB-I service type 45010 may reference REGION. Related region information may vary among services.

Details of the elements of FIG. 45 will be described with reference to each of the subsequent drawings.

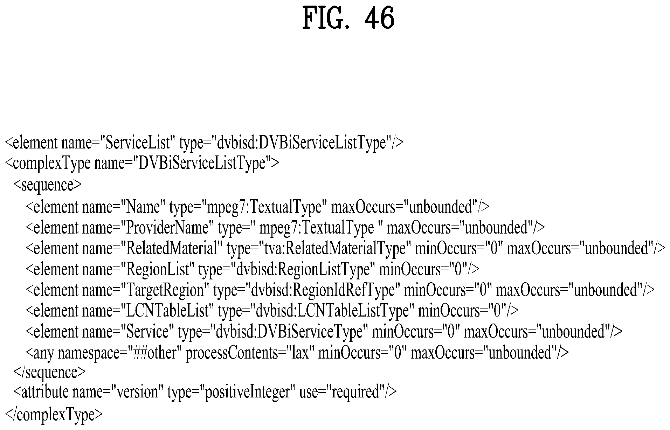

FIG. 46 shows a DVB-I service list type according to embodiments.

The DVB-I service list type 45010 hierarchically expressed in FIG. 45, will be described in detail.

The DVB-I service list has a type of "dvbisd:DVBiServiceListType", and has attributes for each sequence.

TextualType, RelatedMaterialType, which is additionally signaled, RegionListType for region information, LCNTableListType for a logical channel number, and the like may be signaled for each sequence.

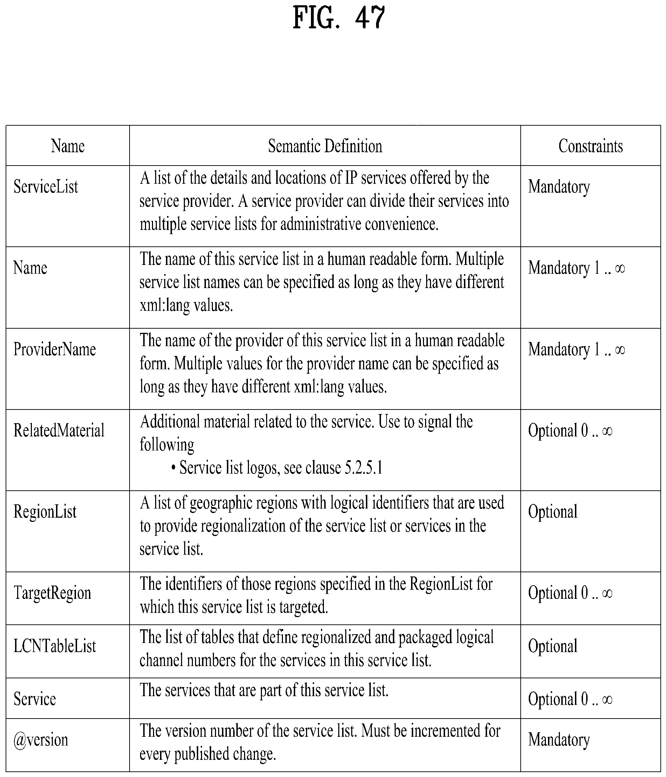

FIG. 47 is a table representation of a DVB-I service list type according to embodiments.

In FIG. 47, ServiceList, which corresponds to the ServiceList shown in FIGS. 45 and 46, is a list of details and locations of IP services offered by the service provider. The service provider may divide their services into multiple service lists. This attribute is mandatory.

Name is the name of a service list in a readable form. Multiple service list names may be expressed in different languages. This attribute is mandatory.

ProviderName is the name of the provider of the readable service list. Multiple values for the provider name may be described in different languages. This attribute is mandatory.

RelatedMaterial indicates an additional material related to the service. This attribute is optional.

RegionList is a list of geographic regions with logical identifiers that are used to provide regional information of services in the service list or the service list. This attribute is optional.

TargetRegion represent the identifiers of the regions specified in the RegionList for which this service list is targeted. This attribute is optional.

LCNTableList is a list of tables that define regionalized and packaged logical channel numbers for the respective services. This attribute is optional.

Service represent services that are part of the service list. This attribute is optional.

@version is the version number of the service list. The value is incremented for every published change. This attribute is mandatory.

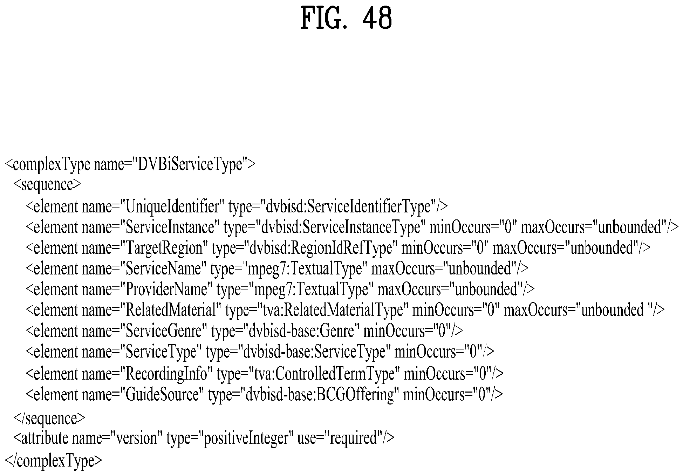

FIG. 48 shows a DVB-I service type according to embodiments.

The DVB-I service type described above may be expressed as shown in FIG. 48.

For each sequence, The DVB-I service type may have UniqueIdentifier and ServiceInstance, and proivde TargetRegion, a name for a signaled service (ServiceName), a service provider (ServiceName), RelatedMaterial, which is additional information, genre about this service (ServiceGenre), a specific type of this service (ServiceType), recording related information about this service (RecordingInfo), and a guide source of this service (GuideSource).

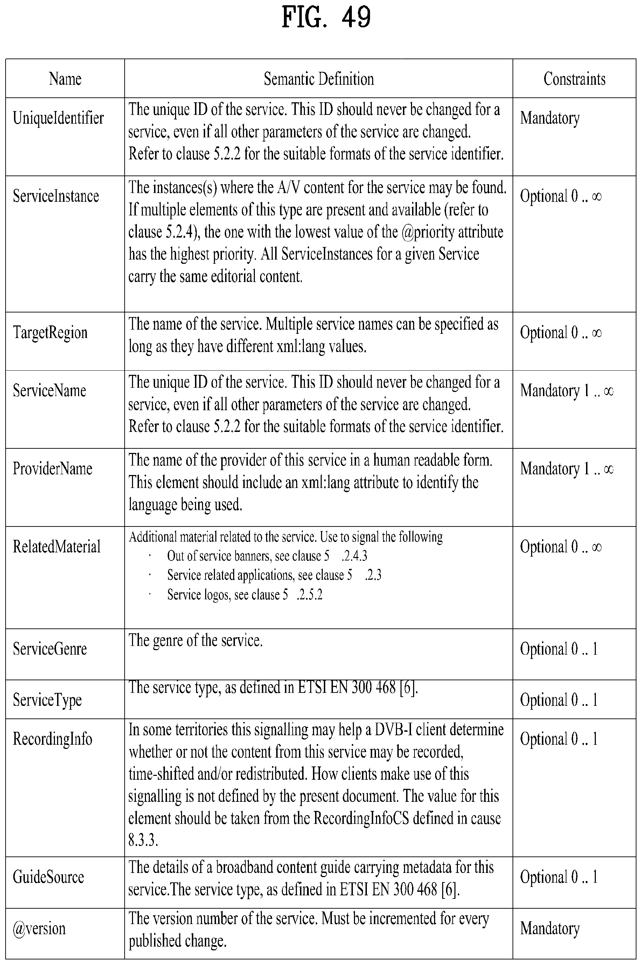

FIG. 49 shows a DVB-I service type according to embodiments.

The DVB-I service type of FIG. 49 describes the service type of FIG. 48 in the form of a table.

UniqueIdentifier is the unique ID of the service. This ID may never be changed for a service. Other parameters of this service may be changed. This attribute is mandatory.

Service Instance is an instance having A/V content for this service. When multiple elements of the type of this attribute are present and available, the one with a lower value of the @priority attribute may have a higher priority (or vice versa). All service instances for a given service may have the same content. This attribute is optional.

TargetRegion is the regions where the service is received. When not specified, no region constraints exist. This attribute is optional.

ServiceName is the name of the service. Service names may be specified in various languages. This attribute is mandatory.

ProviderName is the readable provider name of this service. This element may be specified in various languages and is mandatory.

RelatedMaterial is an additional material related to the service. The material may include, for example, out of service banners, service related applications, and service logos. This attribute is optional.

ServiceGenre is the genre of the service. ServiceGenre is optional.

ServiceType is the type of service (refer to the description in ETSI EN 300 468). ServiceType is optional.

RecordingInfo is information allow a DVB-I client to determine whether or not the content from this service is recorded, time-shifted, or redistributed. RecordingInfo is optional.

GuideSource is the details of a broadband content guide carrying metadata for this service. GuideSource is optional.

@version is the version number of this service. It is incremented for every published change. @version is mandatory.

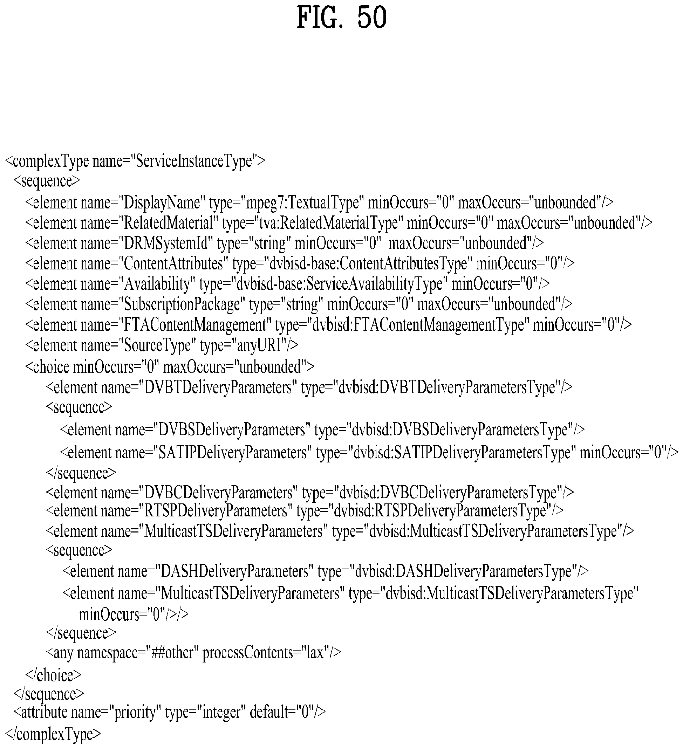

FIG. 50 shows a DVB-I service type according to embodiments.

FIG. 50 shows a detailed form of the service instance type 45020 of FIG. 45.

For example, for each service instance type, DisplayName, RelatedMaterial, DRMSystemId, ContentAttribute, Availability, SubscriptionPackage, FTAContentManagement, and various parameters as shown in FIG. 45 may be carried.

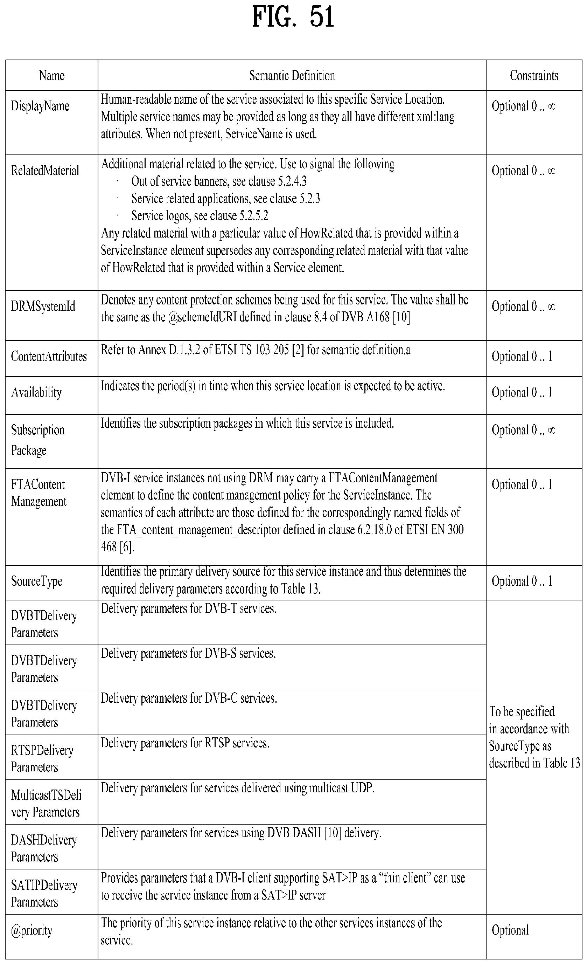

FIG. 51 shows a table representation of a service instance type according to embodiments.

Elements of the service instance type will be described with reference to FIGS. 50 and 51.

DisplayName is a readable name of the service associated with a specific service location. Multiple service names may be specified in various languages. When not present, the ServiceName field may be used. This attribute is optional. In the present disclosure, an attribute may correspond to an element, a field, information, or a value according to a level, and may be referred to by various terms.

RelatedMaterial is an additional material related to the service. Specifically, it may include a no-service banner, service related applications, service logos, and the like. A related material with a specific value of the attribute HowRelated, which is provided within a ServiceInstance element, supercedes any corresponding related material with the value of HowRelated provided within a Service element. This element is optional.

DRMSystemId indicates any content projection schemes used for the service. The value may be the same as the @schemeIdURI defined in document DVB A168. This value is optional.

ContentAttributes may refer to Annex D.1.3.2 of ETSI TS 103 205. This value is optional.

Availability indicates the period in time when this service location is expected to be active. This value is optional.

SubscriptionPackage specifies a subscription package in which this service is included. This value is optional.

FTAContentManagement: DVB-I service instances that do not use DRM may carry an FTAContentManagement element to define the content management policy for the ServiceInstance. The semantics of each attribute may be specified in the corresponding fields of FTA_content_management_descriptor, which is a descriptor in document ETSI EN 300 468. This value is optional.

SourceType identifies the primary delivery source for this service instance. SourceType determines the required delivery parameters. This value is optional.

DVBTDeliveryParameters provides delivery parameters for DVB-T services.

DVBSDeliveryParameters provides delivery parameters for DVB-S services.

DVBCDeliveryParameters provides delivery parameters for DVB-C services.

RTSPDeliveryParameters provides delivery parameters for RTSP-based services.

MulticastTSDeliveryParameters provides delivery parameters for services delivered using multicast UDP.

DASHDeliveryParameters() provides delivery parameters for services using DVB DASH delivery.

SATIPDeliveryParameters provides parameters that a DVB-I client supporting SATIP may use to receive a service instance from an SATIP server.

The above-mentioned parameters may be described according to the SourceType.

@priority indicates the priority of this service instance relative to the other service instances of the service. This value is optional.

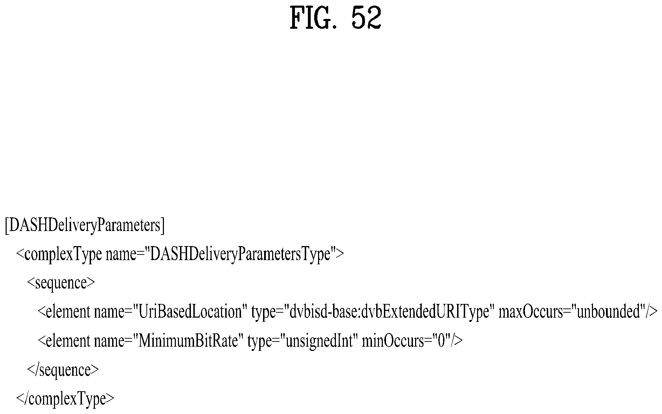

FIG. 52 shows an extension of DASH delivery parameters for simulcast according to embodiments.

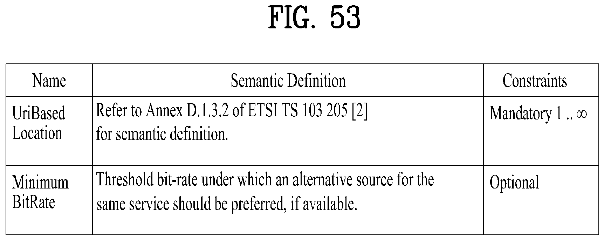

FIG. 53 shows a table representation of the DASH delivery parameters for simulcast according to embodiments.

FIGS. 52 and 53 show a detailed syntax of the DASH delivery parameters of FIG. 51;

DASHDeliveryParameters according to the embodiments may be additionally extended for simulcast.

UriBasedLocation may refer to Annex D.1.3.2 of document ETSI TS 103 205. It is mandatory. When the DASH service is simulcast, this value may provide location information based on the URI.

MinimumBitRate indicates a threshold bit-rate under which an alternative service for the same service should be preferred. This value is optional.

As a child element of the DVB-I service type, a service interface may be provided according to the delivery network. The reception device May determine a service instance as a client in consideration of each @priority and device capability.

Here, @minimumBitrate indicates throughput in terms of a network stack for receiving a stream within a service instance.

For example, @minimumBitrate according to the embodiments may indicate throughput in terms of a network stack for receiving a stream within a service instance. That is, the device according to the embodiments may check the minimum bit rate information for the minimum bit-rate at which the network may currently receive the DASH service.

Through the information, it may be determined whether the service instance is playable. However, in the case of the currently defined information, when multiple service instances are contained in DVBiservicetype, it is difficult for the client to select a service instance based only on the information of @minimumBitrate.

For example, it is assumed that there are two service instances as follows.

(Service instance 1) DVB-T delivery method, HD, H.264/AVC
(Service instance 2) DVB-I DASH delivery method, MinimumBitRate 1.5Mbps

For example, where there are two service instances (e.g., service instance 1 and service instance 2), a client related to the transmission/reception device according to the embodiments is an HEVC UHD capable terminal, and the network situation above the bit rate of the other comparison target can be ensured, the receiver (terminal) should request service instance 2 (e.g., HEVC UHD). However, unless the MPD is received through a request, the receiver cannot know, from the current information, an attribute indicating that a stream of better quality than instance 1 is included. Receiving and comparing all MPDs of all service instances may not only be a burden from the perspective of the receiver, but also may be an issue in rational network selection. A scheme for providing a better service between instances within DVB service scheme information is proposed below. That is, embodiments may be implemented in which the burden of the receiver parsing/analyzing all MPDs or similar signaling information is eliminated and the receiver is allowed to quickly identify and request a better service instance in response to a network situation of a specific bit rate or higher.

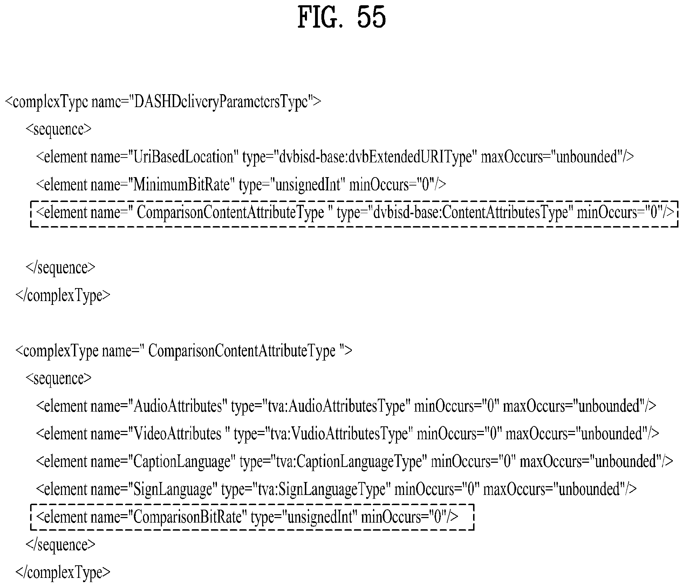

Therefore, service instances may be distinguished through the extension of information as described below. This challenge may be addressed by the embodiments described with reference to FIGS. 55 and 26.

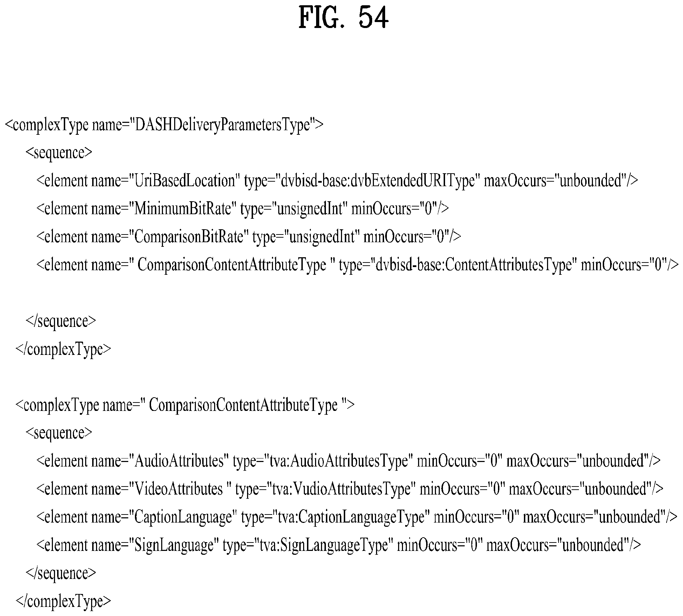

FIG. 54 shows a DASH delivery parameters type according to embodiments.

FIG. 54 shows a detailed syntax of the DASH DeliveryParametersType of FIG. 45;

As shown in FIG. 54, the DASH DeliveryParametersType may ComparisonBitRate and ComparisonContentAttributeType. The ComparisonContentAttributeType may include an AudioAttributes element, a VideoAttributes element, a CaptionLanguage element, and a SignLanguage element.

The ComparisonContentAttributeType may correspond to the ContentAttributes element included in the ServiceInstanceType 45020 of FIG. 45.

FIG. 55 shows a DASH delivery parameters type according to embodiments.

As shown in FIG. 55, the DASHDeliveryParametersType may include ComparisonContentAttributeType. In addition, the ComparisonContentAttributeType may include ComparisonBitRate along with an AudioAttributes element, a VideoAttributes element, a CaptionLanguage element, and a SignLanguage element.

Although the configurations of FIGS. 54 and 55 are different, the ComparisonBitRate and ComparisonContentAttributeType, which are common elements, may be defined as follows.

The ComparisonBitRate means what bitrate it would be able to handle for a particular IP-delivered Service Instance to be likely to provide a better user experience than any non-IP-delivered Service Instance available for that Service.

The @ComparisonContentAttributeType indicates which video characteristic would be available for a DVB-I client to provide a better user experience than any non-IP-delivered Service Instance available for that Service.

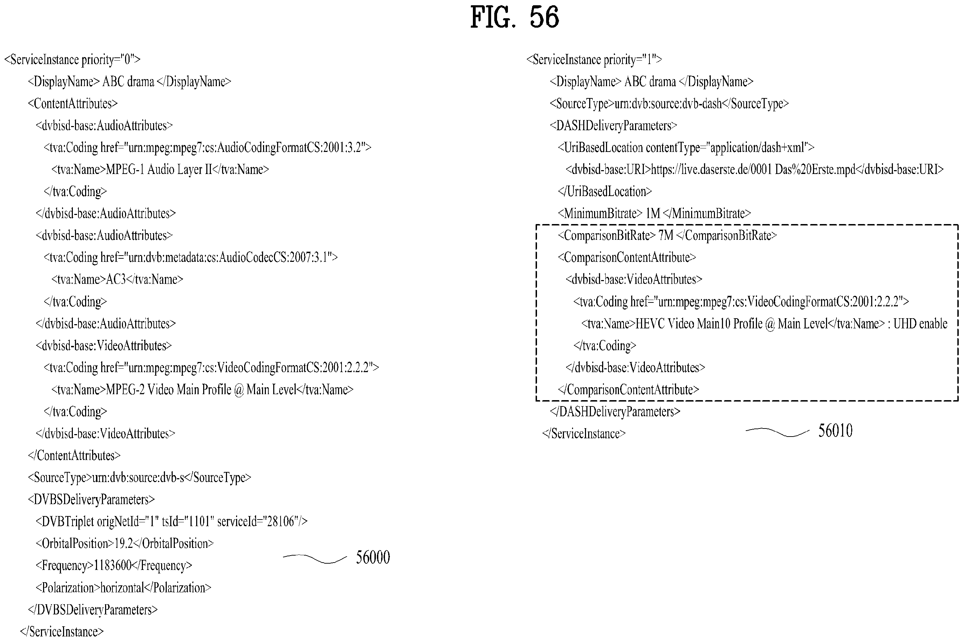

FIG. 56 illustrates signaling of a DVB-I service instance according to embodiments.

FIG. 56 illustrates an example of the DVB-I service instance of FIG. 45;

FIG. 56 shows two service instances. Part 56000 represents DVB-S ServiceInstance, and part 56010 represents DVB-I ServiceInstance.

The ServiceInstance of 56000 has priority 0, and the display name is ABC drama. As shown in FIG. 56, AudioAttributes, VideoAttributes, and the like are signaled as attributes, and the ServiceInstance includes DVBSDeliveryParameters. Here, the priority '0' may be an example value. In addition, the reception device according to the embodiments may check an additional service instance in addition to the service instance to provide, through signaling information according to embodiments, a service instance capable of providing a better service to the user in consideration of not only the priority value, but also the network status or available bandwidth and capabilities of the client.

The service instance of 56010 has priority 1, and the display name is ABC drama. DASHDeliveryParameters may signal the address of https://live.daserste.de/0001 Das%20Erste.mpd</dvbisd-base:URI for content of the application/dash+xml type through a URI-based location. The MinimumBitRate is 1M, and the ComparisonBitRate is 7M. The ComparisonContentAttribute signals VideoAttributes through "urn:mpeg:mpeg7:cs:VideoCodingFormatCS:2001:2.2.2" and HEVC Video Main10 Profile @ Main Level</tva:Name> (UHD enable). Specifically, the value of the ComparisonBitRate may be an example value. The reception device (terminal, client, etc.) according to the embodiments checks the value of ComparisonBitRate, and recognize, from the value, that a better service is provided. For example, when a better service corresponding to the value of 7M is provided, the method/device according to the embodiments may additionally define corresponding video attribute information like the ComparisonContentAttribute of FIG. 56. Accordingly, the reception device according to the embodiments may check the presence of the UHD stream and switch the stream to a service for the ComparisonContentAttribute according to the network situation.

When the receiver receives two instances within the same service (e.g., ABC drama) in the DVB-I service scheme, the DVB-I client should select an instance that may be provided for a better user experience. When the value of @ComparisonBitrate value is identified as 7 Mbps, the available bandwidth of the current network is exceeded compared to HD, and the attribute of @ComparisonContentAttribute is supportable by the terminal (receiver), an MPD may be requested and a better service may be received and provided to the user. The attribute indicates "beyond HD" based on @ComparisonBitrate (7Mbps -HD), and means that a service that is enriched compared to the broadcast service instance may be provided.

Here, the bit rates of 1M BPS and 7M BPS may be example values. These values may be bit rates applied between services with different resolutions, such as UD and UHD.

According to embodiments, a use case is expanded as follows.

Instance 1. HD broadcast
Instance 2. UHD DASH with representations from SD to UHD, 1.5 Mbps to 33 Mbps (with an HD Representation at 7 Mbps). MinimumBitRate 1.5 Mbps; ComparisonBitRate 7 Mbps.

That is, Instance 1 indicates HD broadcast, and Instance 2 indicates UHD DASH. Instance 2 may be represented from SD to UHD and may have a bandwidth from 1.5 Mbp to 33 Mbps. In this case, the HD representation is 7 Mbps, the minimum bit rate is 1.5 Mbps, and the comparison bit rate is 7 Mbps.

A player capable of supporting UHD according to the embodiments may select Instance 2 when the bit rate is 7 Mbps.

A player capable of supporting HD without HEVC support according to embodiments selects Instance 1.

A player capable of supporting UHD and having a Wi-Fi link of 5.5 Mpbs speed according to embodiments selects Instance 1.

A player capable of supporting UHD and having a 3G mobile connection of 1 Mbps, at which a broadcast report cannot be received, according to embodiments may not have a connection fast enough to play a service, but may attempt to play the service.

A player capable of supporting UHD and having a 4G mobile connection of 2 Mbps, at which broadcast cannot be received, according to embodiments may select Instance 2.

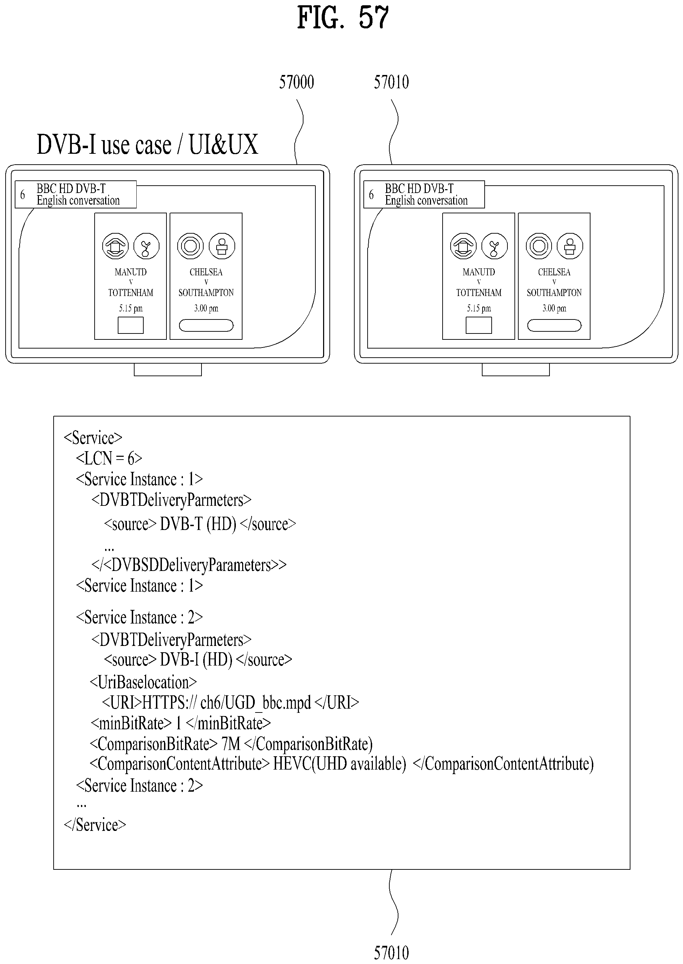

FIG. 57 shows simulcast UI/UX according to embodiments.

In the figure, part 57000 illustrates a state in which the reception device according to the embodiments displays the DVB-T broadcast service, and part 57010 illustrates a state in which the reception device according to the embodiments displays the DVB-I service. FIG. 57 illustrates that a better user experience for the same service is provided to a user according to a user's selection and/or a characteristic of the reception device, based on a signaling scheme and a UI/UX scheme according to embodiments.

Part 57020 is an example of the above-described signaling information for the aforementioned sates. The example corresponds to the service list described above with reference to FIG. 45.

The service list according to the embodiments may provide a service instance for each service. The service for parts 57000 and 57010 has logical channel number 6, and includes service instance 1 and service instance 2. Service instance 1 signals DVB-T (HD) service as shown in part 57000, and service instance 2 signals DVB-I (UHD) service as shown in part 57010.

According to embodiments, when a device capable of receiving the DVB-I service receives one or more service instances, a determination may be made such that a media service of higher quality may be provided based on the comparison bit rate value and the comparison content attribute value included. When two service instances are received as in the embodiment, a service instance that is likely to receive a better service may be quickly identified through IP/DASH. As in the embodiment, when HD and UHD are simultaneously received, a delivery type may be selected through the information.

In other words, a reception device receiving Service Instance 1 and Service Instance 2 may immediately check a better DVB-I UHD service based on the comparison bit rate value and the comparison content attribute value included in the service instance for DVB-I, without having to parse all other signaling information for all services. Based on Instance 2, the reception device may recognize through the comparison content attribute that the comparison bit rate is 7 Mbps and the resolution of the better service is UHD (HEVC). The reception device may ask the user whether to view the better service based on UI/UX. The service according to Instance 2 may be provided to the user according to the user's selection or the setting of the reception device.

The reception device according to embodiments may provide a DVB-I simulcast service UI/UX to a user. The UI/UX shown in FIG. 57 represent a UI/UX that provides a better experience to a user when a DVB-I client receives multiple service instances through the extended information according to the above-described embodiments. For a terminal capable of supporting UHD/HEVC, a DVB-I service instance capable of receiving UHD may be selected in place of the DVB-T service instance capable of receiving HD. The terminal may select a service instance of high quality only through the service list scheme without having to receive all DASH MPDs.

The signaling information according to the above-described embodiments may be referred to as various terms such as field, attribute, element, first information, second information, first value, and second value.

The above-described embodiments and the embodiments to be described below may provide the following effects.

According to embodiments, an MPEG-2 system/DVB SI-based service for Internet channel scanning for providing the same user UX as the existing linear service channel may be initialized.

According to embodiments, network/stream/service unique signaling for Internet stream identification may be performed for aggregation with an existing linear channel.

According to embodiments, a method for replacing TSID in existing system information may be extended.

According to embodiments, switching of a DVB network provided on the same dedicated channel and each bit-stream provided on a DVB-I channel may be allowed.

According to embodiments, SUHD (8k) linkage may be provided through a DVB-I channel in SD, HD, and UHD linkage services provided on an existing channel.

According to embodiments, a DVB-I service list may be acquired over the existing DVB network.

According to embodiments, in order to provide a linear IP-based TV service, a service bootstrap technology of the existing linear channel network.

According to embodiments, unique information that must be defined for Linear IP based TV service identification may be added.

According to embodiments, an IP based TV channel may be added to the existing linear channel EPG.

According to embodiments, an existing DVB stream and a DVB-I stream may be simultaneously provided on the same dedicated channel, and the streams may be dynamically changed for a predetermined period.

According to embodiments, SUHD (8k) linkage may be provided through a DVB-I channel in SD, HD, and UHD linkage services provided on an existing channel.

According to embodiments, linkage information for acquiring a DVB-I service list or a query end point over the existing DVB network may be extended.

According to embodiments, a service bootstrap scheme for an existing linear channel network may be extended to provide a linear IP based TV service.

According to embodiments, linkage between the existing DVB network and the DVB-I network may be provided at the bouquet level, service level, and event level based on DVB-SI information.

According to embodiments, content of various resolutions may be provided on the same logical channel through linkage information about the existing DVB network and the DVB-I network.

According to embodiments, a DVB-I service list location and a query may be defined through a linkage descriptor (uri_linkage_descriptor) to acquire a DVB-I service list on the existing DVB network.

According to embodiments, an open DVB-I service registry may be accessed through an end point and a service list entry list suitable for a client may be acquired.

According to embodiments, a service that is accessed by a device supporting an RF-based DVB tuner through a UI in which an existing linear service and an OTT service are aggregated may be enabled.

According to embodiments, a media service that provides the same UX as existing linear channels may be provided through the open Internet without a set-top box (STB).

According to embodiments, as the existing DVB network and the Internet channel are aggregated, a resolution that may be provided on the same channel may be extended.

According to embodiments, a DVB-I service list location may be signaled due to a linkage descriptor (uri linkage_descriptor). The reception device according to the embodiments may efficiently acquire a DVB-I service list. In addition, due to the end point according to the embodiments, the reception device according to the embodiments may efficiently acquire a service list.

Due to the above-described embodiments, the terminal (device) according to the embodiments may acquire a service list in which all channels are aggregated, as shown in FIG. 34. The aggregated service list may include an entire list, a list desired by the reception device, and the like.

A URI by which all services may be acquired may be present. Through this URI, a URI for a list of individual services may be additionally acquired. The individual list may be a list of services for each broadcaster.

.

As the service platform expands, operators may provide services through more diverse environments. From the user perspective, media services received in various app environments may be offered in an aggregated reception environment called DVB-I. Accordingly, services that are more convenient and have good accessibility may be received.

With the expansion and integration of the service platform, a service may be simulcasted over communication networks including terrestrial, cable, satellite, and 5G networks, and the receiver may receive a desired service according to the receiver capability.

This process may be implemented through ComparisonBitrate and/or ComparisonContentAttribute in FIGS. 54 to 57 and the like.

The MPD may contain multiple representations and also contain both UD related information and UHD related information.

The reception device has a large burden of parsing all the information of the MPD, which takes a lot of time.

On the other hand, when the DVB-I service list at the service instance level is used, the reception device may be allowed to selectively and quickly decode optimized services and rich media according to the capabilities of the reception device.

The reception device may recognize presence of services with different capabilities through ComparisonBitrate. ComparisonBitrate may be a concept of minimum throughput. Furthermore, the reception device may recognize a specific attribute of a switched service through ComparisonContentAttribute.

FIG. 58 shows the structure of a reception device according to embodiments.

FIG. 58 shows the structure of a device for receiving a broadcast signal to which the embodiments of FIGS. 1 to 57 are applied.

The broadcast signal reception device according to the embodiments receives a broadcast signal.

A TS packet filter 580001 processes a TS packet included in the broadcast signal. The TS packet may be an MPEG-2 transport stream packet.

A PES parser 580002 processes a stream included in the TS packet. The stream may be a packetized elementary stream. The stream may include a video stream.

A PES parser 580003 processes a stream included in the TS packet. The stream may be a packetized elementary stream. The stream may include an audio stream.

A data parser 580004 processes data included in the TS packet. The data may include content related to a broadcast program or an event related to an application.

A signaling parser 580005 processes signaling data included in the TS packet. The signaling data may include a Bouquet Association Table (BAT), a Network Information Table (NIT), an Event Information Table (EIT), a Service Description Table (SDT), and an Identification Channel Table (ICT). The signaling parser 590005 may include a BAT parser, an EIT parser, an NIT parser, an SDT parser, and an ICT parser. The signaling parser 580005 may parse signaling information according to the embodiments of FIGS. 9, 13, 20, 21, 26, 27, 30, 34, 35, 38, 42, 45, etc. from the received signal.

A video decoder 580006 decodes video data included in the TS packet.

An audio decoder 580007 decodes audio data included in the TS packet.

The control unit 580008 controls the synchronization of the decoded video data and the decoded audio data.

A controller 580009 controls an event for data except for the video data and audio data. The controller 580009 may receive signaling data from the signaling parser 580005 and control the event based on the signaling data.

A service initialization server 580010 may acquire uniform resource identifier (URI) information for service discovery from the signaling data of the signaling parser 580005. Specifically, the signaling data includes service bootstrap information for service scanning. The signaling parser 580005 may provide the service discovery information URI to the server 580010 based on specific table information in the service bootstrap information. Method A in FIG. 58 represents a process of acquiring an ICT by the broadcast signal reception device based on a service discovery URI of the NIT in the signaling data.

Specifically, the broadcast signal reception device according to the embodiments may acquire ICT information from the server based on service discovery URI information of the NIT. The ICT parser of the signaling parser 580005 processes the ICT information acquired from the server. The ICT parser of the signaling parser may correspond to the DVB-I service scheme parser.

The broadcast signal reception device according to the embodiments may acquire ICT information on a linear channel. Method B of FIG. 58 represents a process of acquiring and processing ICT information from the signaling data received on the linear channel by the broadcast signal reception device.

An EPG server 580011 may provide an EPG generator 580012 with service guide information that is based on the ICT information of the ICT parser.

A DASH server 580012 may provide bootstrap information for dynamic adaptive streaming over HTTP (DASH) data to a multicast internal server 580013 based on the ICT information.

A DASH client 590014 receives DASH data from the multicast internal server 590013. The DASH client 580014 parses MPD (media presentation description) information included in the DASH data, parses a file included in the DASH data, decodes the video data included in the DASH data, and decodes the audio data included in the DASH data.

The EPG generator 580012 may receive EPG-related signaling data from the signaling parser 580005 and receive EPG data from the EPG server 580011, and generate EPG data to be displayed.

A renderer 580015 may receive synchronized video/audio data from the controller 580008, receive DASH video/audio data from the DASH client 580014, and render the same.

A display 580016 may display the rendered data and the EPG data.

The broadcast signal reception device according to the embodiments provides a service discovery method for providing an IP service in which an existing T/S/C channel and an IP channel are integrated.

The standalone linear IP service refers to a service that may provide an aggregated service guide of the existing T/S/C channel and IP channel. The broadcast signal reception device may receive service bootstrap information for service scanning of an IP channel.

Specifically, the broadcast signal reception device may acquire a service operator URI from a specific table or a specific description in the service bootstrap information of the T/S/C channel. For example, a service operator may provide service discovery information.

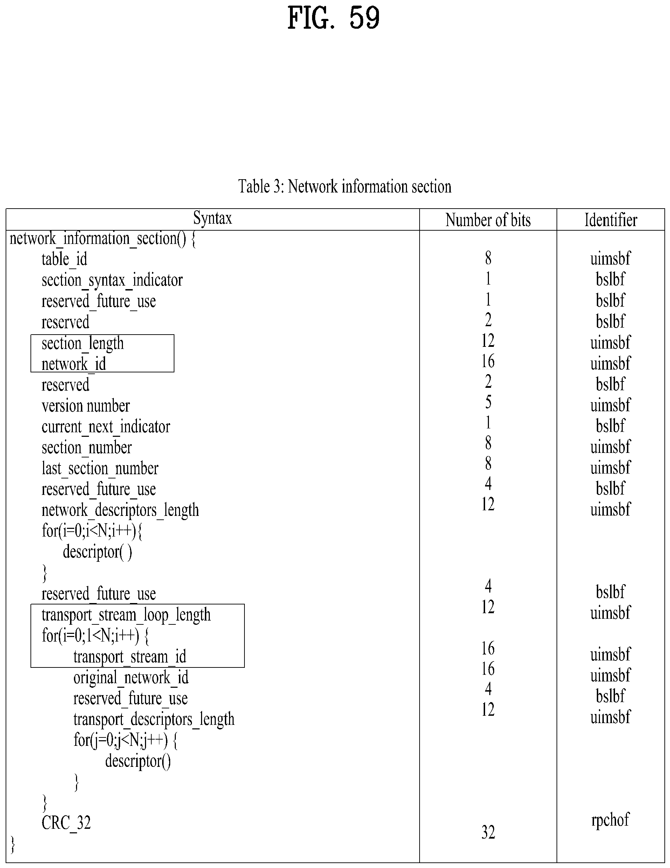

The broadcast signal reception device may acquire the service discovery information URI from a specific table or a specific description in the service bootstrap information of the T/S/C channel (see Method A in FIG. 59).

The broadcast signal reception device may acquire a service discovery information file URI transmitted on the non-real-time carousel in the same way as the service bootstrap information of the T/S/C channel.

The broadcast signal reception device may acquire the service discovery information URI based on a specific table or a specific description in the service bootstrap information in CICAM.

The broadcast signal reception device according to the embodiments may perform service discovery based on hardwired linkage URI information. Hardwired linkage URI may provide hardwired URI through an agreement between the operator and the CE. The broadcast signal reception device may acquire service discovery information through the URI.

Since the broadcast signal transmission device and the broadcast signal reception device according to the embodiments provide the service guide of the existing channel in an aggregated manner, information corresponding to the service guide information for the existing channel may be used. The broadcast signal reception device may acquire unique identification information about the service guide in the structure shown in FIG. 58. The TS packet filter 580001 filters the TS packet to distinguish between service discovery information and audio/video data. The signaling parser 580005 builds service guide data in the DB by parsing the service discovery information included in the received broadcast signal.

The broadcast signal transmission device and the broadcast signal reception device may conform to the MPEG-2 system based DVB standard. For example, DVB system information according to the DVB standard may include tables or description information such as the NIT, BAT, SDT, and EIT described above. The broadcast signal transmission device and the broadcast signal reception device may perform service discovery and generate EPG information based on such tables.

The process of acquiring the service discovery information may be performed based on the NIT, which is a table signaling receivable networks. The NIT includes service discovery information about the networks. The broadcast signal reception device may acquire the ICT by parsing the NIT (A in FIG. 58) or acquire the ICT channel through a linear channel (B in FIG. 58).

FIG. 59 shows a configuration of a network information table (NIT) according to embodiments.

The NIT of FIG. 59 is signaling information included in a broadcast signal, and may be parsed by the signaling parser 580005 of FIG. 58.

A network information section in FIG. 59 refers to the NIT. The information contained in the NIT may conform to the definition of the DVB standard.

table_id may identify the NIT.

section_syntax_indicator is a 1-bit field and may be set to a value of 1. The section_syntax_indicator includes information indicating syntax identified by the NIT.

reserved_future_use and "reserved" are fields reserved for future use.

section_length indicates the number of bytes of a section.

network_id may be used to identify a delivery system, and indicates identification information (unique identification) of a bitstream received over a network. The delivery system refers to the concept of a physical unit delivering a transport stream.

version_number indicates the version number of the sub-table.
current_next_indicator indicates whether the sub-table is currently applicable.
section_number indicates the number of the section.
last section number indicates the number of last sections.
network_descriptors_length indicates the number of bytes in length of the network descriptor.
transport_stream_loop_length indicates the total number of bytes of the TS loop.
transport_strem_id is information used for identification of a TS.
original_network_id is information identifying network identification information about the original delivery system.

The broadcast signal reception device according to the embodiments distinguishes networks currently used for reception such as, for example, networks of terrestrial, cable, and satellite channels, based on NIT. The broadcast signal reception device defines identification information (unique identification) about bitstreams being received in the network with an original network ID and a transport ID. The TSID is a unique ID for identifying a TS multiplexed in the current delivery system.

Further, the broadcast signal transmission device may separately use the actual NIT for the main stream for the S channel, the T channel, and the C channel currently being received and the NIT for the other network. Accordingly, service discovery of an Internet linear channel is possible in the table for the other network in addition to the existing NIT for the main stream. In delivery systems other than the main stream, networks may be distinguished using a network ID. Accordingly, the broadcast signal transmission device may extend and use the network ID in order to check the Internet linear channel, which is the other network.

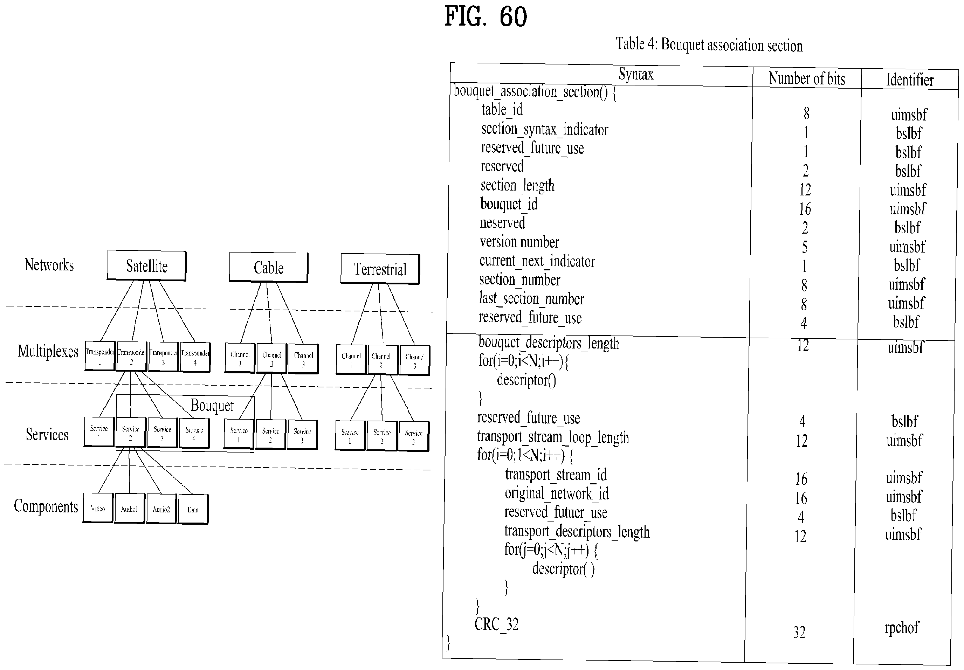

The broadcast signal reception device according to the embodiments may perform service discovery for an Internet linear channel by extending the network ID included in the NIT of FIG. 60 and using the same as service discovery URI information, as in the method A of FIG. 59.

Also, the broadcast signal transmission device according to the embodiments may transmit an XML file or a binary code in a carousel manner over a broadcast network. In this case, the broadcast signal reception device may acquire the ICT over the broadcast network as in the method B of FIG. 59.

The NIT may further include a descriptor through a sub-loop. The descriptor included in the NIT may include information about a service or a service list. A detailed configuration of the descriptor will be described below.

In the present disclosure, the NIT may be referred to as first signaling information, second signaling information, or the like.

FIG. 60 shows a configuration of a bouquet association table (BAT) according to embodiments.

The BAT of FIG. 60 is signaling information included in a broadcast signal, and may be parsed by the signaling parser 580005 of FIG. 58.

The broadcast signal transmission device according to the embodiments may generate a service bundle called a bouquet by bundling services. The BAT includes signaling information for the service bundle.

Various service scenarios may be configured by grouping multiple streams/services transmitted from other networks through such service bundling or service grouping. That is, as shown in FIG. 7, the broadcast signal transmission device may bundle services in a bouquet, regardless of a receiving network, and bundle the received TS and services.

The broadcast signal reception device according to the embodiments receives signaling information through a Bouquet Association section Table (BAT) in order to signal a grouped service.

table_id specifies information for identifying the BAT.
section syntax indicator specifies information indicating syntax signaled by the BAT.
bouquet id specifies information for identifying a service bundle.
version_number indicates the version number of the sub-table.
current_next_indicator indicates whether the sub-table is currently applicable.
section_number indicates the number of the section.
last section number indicates the number of last sections.
bouquet_description_length indicates the total number of bytes in length of a bouquet described in the BAT.
transport_strem loop length indicates the total number of bytes in length of the TS loop.
transport_stream_id specifies information for identifying a TS from other multiplexed streams in a delivery system.
original network id specifies information for identifying the network ID of the original delivery system.

Based on the bouquet ID, transport stream ID and/or original network ID included in the BAT, the broadcast signal transmission device according to the embodiments may describe and discover a bouquet formed by bundling Internet linear channel services as well as the services of the existing main stream or linear channel.

Specifically, the bouquet ID may identify a bouquet including a service of an Internet channel. The transport stream ID may identify a transport stream including a service of the Internet channel. The original network ID may be the network ID of the original delivery system, and may represent a network for a service of the Internet channel. The broadcast signal reception device according to the embodiments may discover a service of the Internet channel by parsing the BAT.

The BAT may further include a descriptor through a sub-loop. The descriptor included in the BAT may include information about a service or a service list. A detailed configuration of the descriptor will be described below.

n the present disclosure, the BAT may be referred to as first signaling information, second signaling information, or the like.

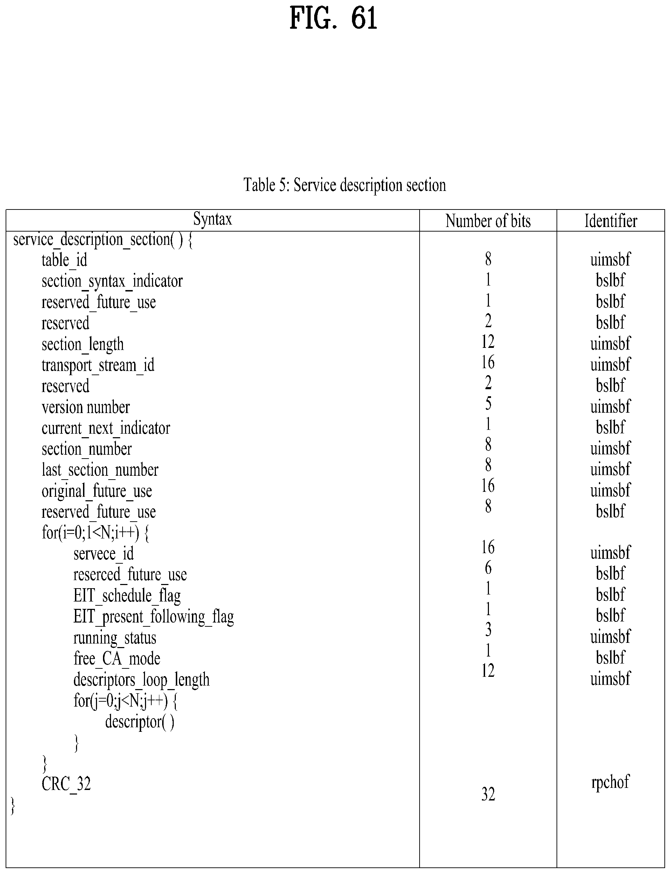

FIG. 61 shows a configuration of a service description table (SDT) according to embodiments.

The SDT of FIG. 61 is signaling information included in a broadcast signal, and may be parsed by the signaling parser580005 of FIG. 58.

A broadcast signal transmission device according to embodiments may transmit a broadcast signal including an SDT, and a broadcast signal reception device according to embodiments may receive the broadcast signal including the SDT.

table_id represents information for identifying the SDT.

section syntax indicator specifies information indicating syntax signaled by SDT.

transport_stream_id specifies information for identifying a transport stream described by the SDT in a delivery system.

version_number indicates the version number of the sub-table.

current_next_indicator indicates whether the sub-table is currently applicable.

section_number indicates the number of the section.

last section number indicates the number of last sections.

original network id specifies information for identifying the network ID of the original delivery system.

service_id specifies information for identifying a service in a transport stream.

EIT- schedule flag indicates whether EIT schedule information for a service is present in the current TS.

EIT_present_following_flag indicates whether EIT present following information for a service is present in the current TS.

running_status indicates the status of a service. The status of the service may include "running," "starts in a few seconds," "pausing," and "service off-air."

free_CA_mode indicates whether all component streams of a service are scrambled. The free_CA_mode indicates a mode of controlling one or more streams controlled by a conditional access (CA) system, which is a system configured to control a subscriber accessing a service.

The SDT is a table that defines a network over which transmission is currently in progress and defines a service description of transmitted data in the TS. Similar to the above-described NIT, the SDT may describe multiple services based on the TSID and the original network ID. The broadcast signal transmission device may distinguish one service based on the original network ID, the transport stream ID, and/or the service ID. There is no overlapping service ID on the network identified by the original network ID, and the service ID has a unique value. Also, in general, the original network ID has the same value as the network ID.

FIGS. 60 to 62 show signaling information transmitted and received by the broadcast signal transmission device and the broadcast signal reception device according to the embodiments. Fields defined in each table may conform to the definition in the DVB-SI standard. Furthermore, the broadcast signal transmission device and the broadcast signal reception device according to the embodiments further extend and define information included in a table used for service description and service discovery on an existing linear channel for service description and service discovery for an Internet channel. Accordingly, the broadcast signal reception device may provide an Internet channel service to users while providing backward compatibility with the existing linear channel. The broadcast signal reception device may provide an EPG in which the existing linear channel and the Internet channel are aggregated to users.

The broadcast signal transmission device according to the embodiments may transmit a broadcast signal including a new table. The ICT table shown in FIG. 59 may include service guide information for a service received on an actual network. Upon receiving ICT information, an EPG generator 580012 of the broadcast signal reception device provides a single channel service guide to the user in the form of an aggregated EPG.

The broadcast signal transmission device may transmit signaling data including signaling information and broadcast data including AV data other than the signaling data over a network. The broadcast signal transmission device may distinguish and process the signaling data and broadcast data based on the component type.

A data parser 58004 of the broadcast signal reception device parses Internet data and synchronization data (e.g. MPEG TEMI) transmitted for synchronization in addition to the AV data. Accordingly, the broadcast signal reception device may provide an event linkage service for an actual channel according to timing of transmission at a constant rate.

According to embodiments, the ICT may include information about media data to be received on an actual Internet channel. The broadcast signal reception device may acquire an MPD capable of receiving content based on the MPD URI of the ICT. The DASH server has a role (content origin) of receiving content. Accordingly, dynamic allocation of the multicast and/or unicast server according to the network state may be performed on the DASH server 580012 through the MPD URI. In the case of multicast, the MPD may include a multicast service address having a role of CDN close to the client, and the broadcast signal reception device may receive a unicast/multicast adaptive type service.

A DASH client 580014 receives an A/V DASH segment through the MPD and decodes the same. Further, media data such as a linear channel from the DASH client 590014 is rendered through a renderer 580015 and displayed on a display 580016.

In the present disclosure, the SDT may be referred to as first signaling information, second signaling information, or the like.

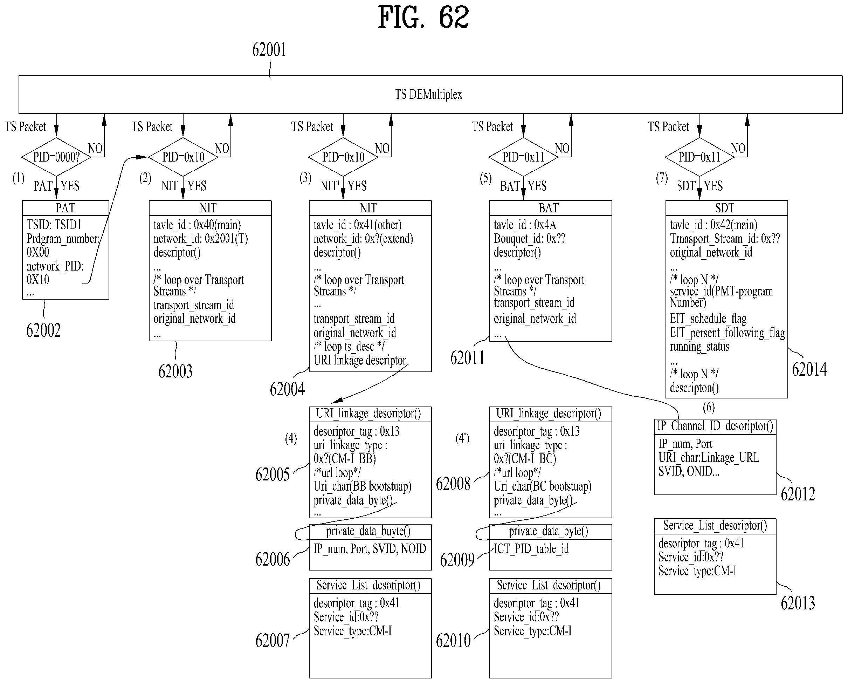

FIG. 62 illustrates a process of parsing signaling information by a broadcast signal reception device according to embodiments.

The process of parsing signaling information in FIG. 62 may be performed by the signaling parser 580005 of FIG. 58.

The broadcast signal reception device according to the embodiments may use the unique identification information necessary for integrating the service guide for the existing channel as described above. The broadcast signal reception device may parse the identification information for the service guide as follows. Thus, the method/device according to the embodiments may extend DVB network-based Internet channel scanning (Refer to the method of acquiring service discovery information URI from a specific table in T/S/C service bootstrap information, and the method of acquiring service discovery information file URI transmitted in a non-real-time carousel manner as in the case of the T/S/C service bootstrap information).

A TS demultiplexer 62001 may parse signaling information from a TS included in a broadcast signal. The TS demultiplexer may correspond to a TS packet filter 63001. The TS demultiplexer 62001 may identify a packet based on a packet identifier (PID).

When the TS packet includes information 62002 about a PAT, the broadcast signal reception device according to the embodiments parses the PAT. The PAT includes identification information (network_PID) related to a network.

When the TS packet includes information 62003 about an NIT, the broadcast signal reception device parses the NIT. The NIT includes identification information on the NIT table, identification information on the network, identification information on the transport stream, and identification information on the original network.

Further, when the TS packet includes information 62004 about an NIT, the broadcast signal reception device parses the NIT. The identification information (table_id) related to the NIT table may include information on a main or actual network, and may include information on other networks.

For example, when the service guide information conforms to the format of MPEG-2 Program Specific Information (PSI), the broadcast signal reception device receives the PAT in response to a case where the value of PID in the TS packet header is 0x00. The broadcast signal reception device receives network_PID in response to a case where the value of PID is 0x01. When table_id of the NIT is 0x40, the NIT includes information on the main network. When table_id of the NIT is 0x41, the NIT includes information on other networks. The value of table id of NIT, 0x40, is one embodiment, and table_id may have various values according to embodiments. That is, NIT table_id for DVB-I service discovery may be assigned according to the intention of the service provider.

The NIT 62003 for the main network may include network_id (NID), transport_stream_id (TSID), and original_network id (ONID), and the broadcast signal reception device may identify a currently received stream based on the include network_id (NID), transport_stream_id (TSID), and original_network_id (ONID).

The broadcast signal transmission device signals according to the embodiments may transmit a TS packet including the information 62004 about the NIT in order to bootstrap an Internet channel service.

The NIT 63004 for the other networks may include network_id. The network_id may indicate an Internet linear channel. The NIT 62004 may include original_network_id (ONID) and transport_stream_id (TSID), and the broadcast signal reception device may uniquely identify a service based on the ONID and the TSID.

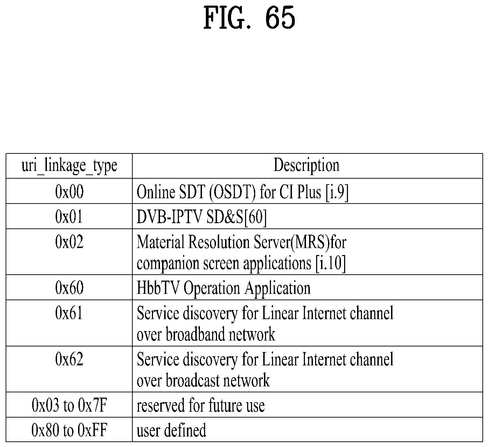

According to embodiments, a service list may be an aggregated list. The service list may include service unique information. Since DVB-I may support services for various networks, the service list according to the embodiments may include both a service list for individual services and/or an aggregated list for aggregating services. Data for the Internet channel does not include the TSID. Accordingly, information (unique _id) that may replace the TSID is required for the data for the Internet channel. The unique identification information of the TSID may be replaced by URI_linkage_descriptor 62005, 62008. URI_linkage_descriptor includes URI address information. Since each operator has a different URI string, the TSID may be replaced with the URI string. Additionally, based on the URI address information, the broadcast signal reception device may receive discovery information including ICT channel information, and MPD URI information by which an actual DASH segment may be received. A specific configuration of URI_linkage_descriptor will be described in detail with reference to FIG. 65.

The broadcast signal reception device according to the embodiments may receive service discovery information for acquiring a linear Internet channel based on broadband and/or broadcast. When the acquisition path is broadband, the descriptor is URI_linkage_descriptor 62005. When the acquisition path is broadcast, the descriptor is URI_linkage_descriptor 62005.

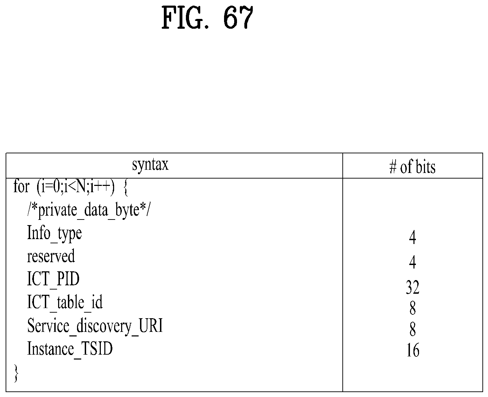

When the acquisition path is broadband, URI_linkage_descriptor 62005 includes private data 63006. A detailed configuration of the broadband-based private data 62006 will be described with reference to FIG. 67.

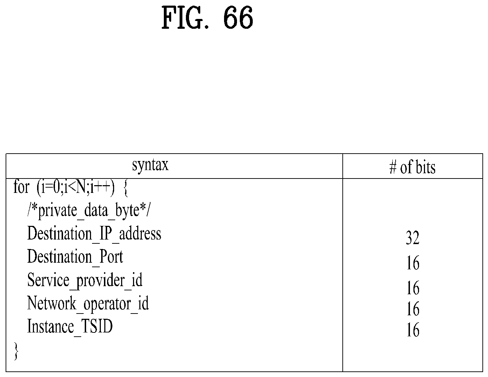

When the acquisition path is broadcast, URI_linkage_descriptor 62008 includes private data 63009. A detailed configuration of the broadcast-based private data 63009 will be described with reference to FIG. 66.

Additionally, the broadcast signal transmission device according to the embodiments may transmit information (service list descriptor) related to a service or service list as sub-configuration information of the NIT 62004 based on the broadband or broadcast. The broadband-based service list information is service list descriptor 62007, and the broadcast-based service list information is service list descriptor 62010. The service list information 63007 and 63010 provides unique identification information about a service, such as a service ID and a service type.

When the TS packet includes information about a BAT 62011, the broadcast signal reception device according to the embodiments parses the BAT 62011. The BAT 62011 includes information (bouquet id) for identifying a bouquet, which is a service bundle, and includes transport_stream_id (TSID) and original_network_id (ONID), which are service description information for a broadcast channel. In order to provide a service description for the Internet linear channel, the broadcast signal transmission device may additionally provide information that may replace the TSID for the linear channel. The BAT 62011 may additionally include a descriptor 62012 and a service list descriptor 62013 for a service discovery URI as sub-configuration information. The detailed configuration of the descriptor 62012 and the service list descriptor 62013 will be described with reference to FIG. 67.

When the TS packet includes information about an SDT 62014, the broadcast signal reception device according to the embodiments parses the SDT 62014. The detailed configuration of the SDT 62014 has been described with reference to FIG. 61.

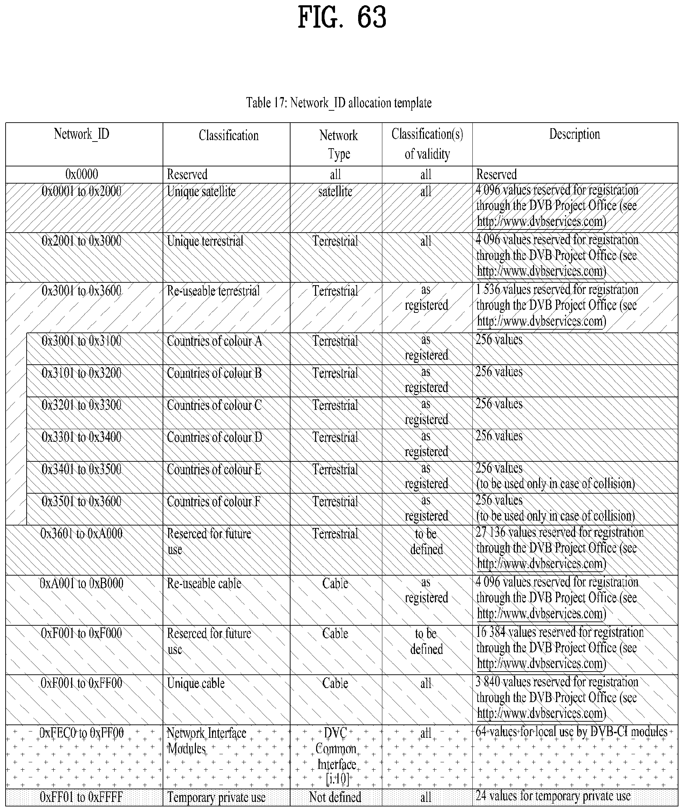

FIG. 63 shows types of networks according to embodiments.

FIG. 63 shows a template of network ID allocation in FIG. 62;

The broadcast signal transmission device and the broadcast signal reception device according to the embodiments may transmit and receive broadcast signals using various networks. A network may include an S channel, a T channel, and a C channel, and may further include an Internet channel. The NIT, which is signaling information about the network, may include network_id, and the broadcast signal transmission device may allocate an Internet channel together with the S channel, the T channel, and the C channel to the network_id.

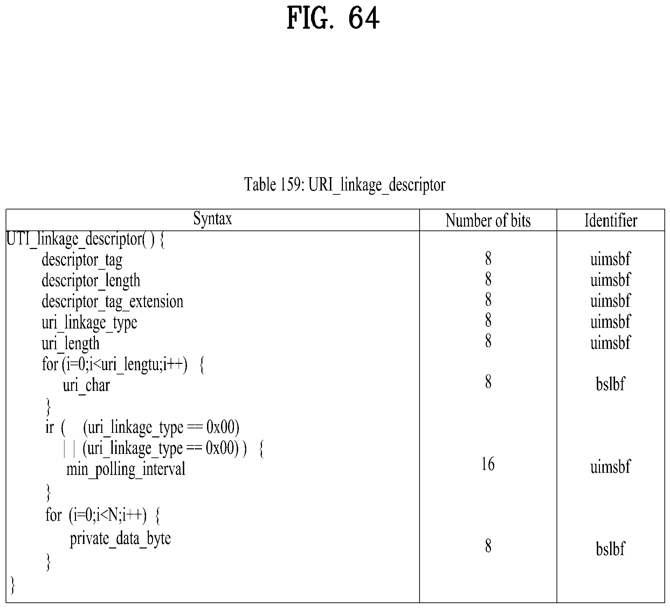

FIG. 64 shows a configuration of a URI descriptor (URI_linkage_descriptor) according to embodiments.

The URI descriptor in FIG. 64 is a specific syntax of the URI descriptor included in FIG. 62.

The URI descriptor (which may also be referred to as URI linkage descriptor, linkage descriptor, or the like) include type information (uri_linkage_type). The broadcast signal transmission device may newly allocate a value for service discovery information for the Internet channel to the type information. A detailed configuration of the type information will be described with reference to FIG. 66.

When the value of the URI linkage type of the URI descriptor is 0x00 and/or 0x01, a value of the min polling interval may be provided. According to the value of the minimum polling interval, a value of the minimum interval of polling for discovery of linkage (connected) information may be signaled.

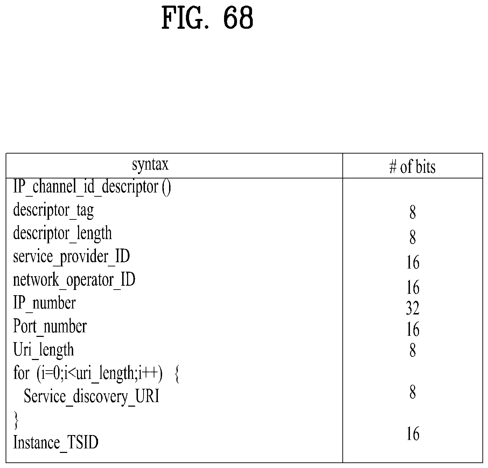

The URI descriptor contains private data. A detailed configuration of the private data according to a case where the service discovery acquisition path is broadband or broadcast will be described with reference to FIGS. 67 and 68.

FIG. 65 shows a configuration of URI linkage type information (uri_linkage_type) according to embodiments.

FIG. 65 shows a specific value of the URI linkage type of FIG. 64.

The URI linkage type information of FIG. 65 includes service discovery information for acquiring a linear Internet channel. A path through which the broadcast signal reception device acquires the linear Internet channel includes broadband and/or broadcast.

For example, when the value of uri linkage_type is 0x00, the URI linkage type information indicates online SDT (OSDT) for CI Plus. When the value of uri_linkage_type is 0x01, the URI linkage type information indicates DVB-IPTV SD&S. When the value of uri_linkage_type is 0x02, the URI linkage type information indicates Material Resolution Server (MRS) for the companion screen application. When the value of linkage_type is 0x60, the URI linkage type information indicates an HbbTV operation application.

Furthermore, the broadcast signal transmission device according to the embodiments may additionally extend and define uri_linkage_type. For example, when the value of uri_linkage_type is 0x61, the URI linkage type information indicates service discovery for a linear Internet channel over a broadband network. When the value of uri_linkage_type is 0x62, the URI linkage type information indicates service discovery information for a linear Internet channel over a broadcast network. Accordingly, when the value of uri_linkage_type is 0x61, the broadcast signal reception device may acquire service discovery information over the Internet. When the value of uri_linkage_type is 0x62, the broadcast signal reception device may acquire service discovery information while being compatible with DVB SI information on the currently received T channel, S channel and/or C channel.

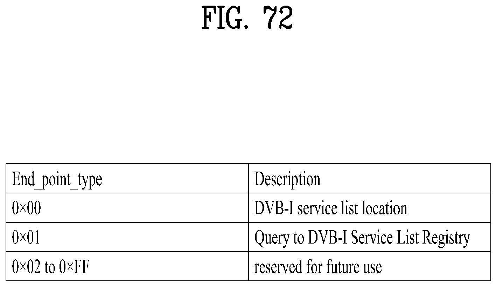

When the value of uri_linkage_type is 0x03 (or various values according to embodiments may be used), signaling of an additional service list according to embodiments as shown in FIG. 72 may be performed.

FIG. 66 shows a configuration of private data according to embodiments.

FIG. 66 shows detailed information of the private data included in FIG. 64;

Information included in the private data 63006 transmitted over broadband is described below.

Destination_IP_address is included. Destination_IP_address indicates a service discovery IP address. Destination_Port indicates a port number. Service_provider_id indicates a service provider. Network operator id indicates a network operator that provides a service. Instance_TSID indicates a temporary TSID value replacing the TSID.

The broadcast signal transmission device according to the embodiments may add URL information for service discovery instead of Destination_IP_address to the private data 62006. Since a URL is obtained by converting IP information into a string, URL information may correspond to IP information.

Similarly, the broadcast signal transmission device according to the embodiments may add URL information for service discovery instead of Destination Port to the private data 62006.

The broadcast signal transmission device according to the embodiments may transmit the private data 62006 in the URI_linkage_descriptor 63005 based on the broadband. The broadcast signal transmission device may replace Destination_IP_address, Destination_Port, Service_provider_id, Network operator id, and Instance_TSID included in the private data 63006 with URI information for service discovery for an Internet linear channel. The broadcast signal reception device may provide an aggregated EPG for a broadcast channel including the Internet channel, and may perform service discovery for the Internet channel using the URI information of URI linkage descriptor 62006.

FIG. 67 shows a configuration of private data according to the embodiments.

FIG. 67 shows detailed information of the private data included in FIG. 64.

Information included in the private data 62009 transmitted through the broadcast is described below.

Info_type indicates whether service discovery information received by the broadcast signal reception device is in XML format or binary.

ICT PID indicates the PID of a TS packet including service discovery table information.

ICT_table_id indicates the ID of a table for identifying the service discovery table.

Service_discovery_URI indicates a file URI when Info type is XML file.

instance TSID indicates a temporary TSID that replaces the TSID.

A method for acquiring, the broadcast signal reception device, service discovery information for an Internet channel has been described with reference to FIGS. 63 to 68. The broadcast signal reception device receives an NIT for the other networks and parses URI _linkage_descriptor included in the NIT based on broadband or broadcast. In addition, the broadcast signal reception device acquires an additionally extended and defined service discovery URI instead of the TSID through the private data included in each URI _linkage_descriptor.

Further, in the broadcast signal reception device according to embodiments, the sub-loop of the NIT 63004 and/or the BAT 62011 may include service list descriptor or service_descriptor 62007, 62010, 62013. The service_list_descriptor or service_descriptor 62007, 62010, 62013 includes stream_unique_id and service_id.

As described above with reference to FIG. 61, the BAT 90011 collects streams and services in the current receiver regardless of the network, and signals a service bundle called a bouquet. The BAT 62011 may provide signaling for a logical bundle of network and transport levels based on bouquet id, original network id (ONID), and transport_stream_id (TSID). Since the Internet linear channel cannot include the TSID, signaling for the Internet linear channel level is required.

The broadcast signal transmission device according to the embodiments may transmit private data in the URI_linkage_descriptor 62008 based on the broadcast. The broadcast signal transmission device may replace Info-type, ICT_PID, ICT table_id, ICT_table_id, Service_discovery_URI, and/or instance TSID with URI information for service discovery for the Internet linear channel. The broadcast signal reception device may provide an aggregated EPG for the broadcast channel including the Internet channel, and may perform service discovery for the Internet channel using the URI information of URI_linkage_descriptor 62008.

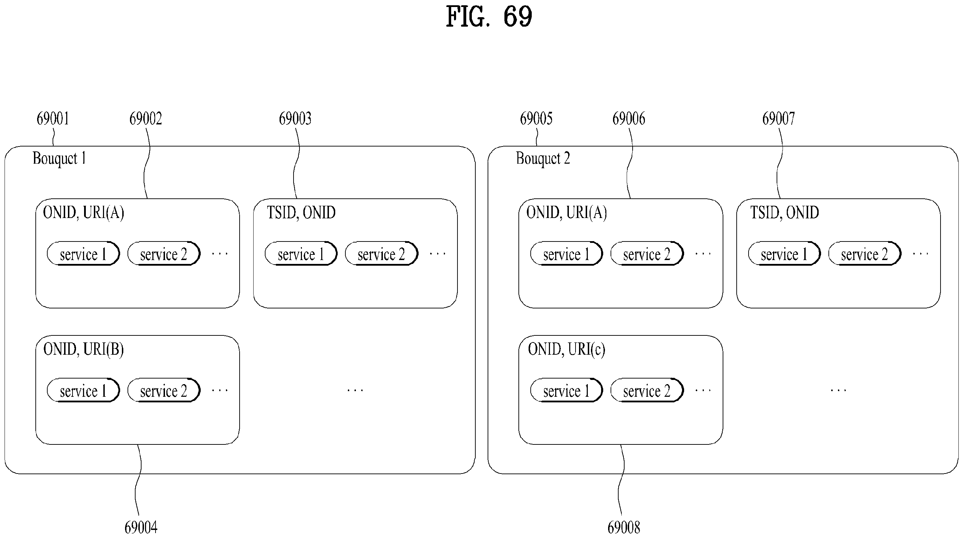

Accordingly, the broadcast signal transmission device according to the embodiments may add unique information replacing the TSID to uri_linkage_descriptor as described above, or may additionally define a descriptor in the BAT. Specifically, the BAT may include IP_channle_ID_descriptor. The configuration of IP_channel_ID_descriptor will be described in detail with reference to FIG. 69.

FIG. 68 shows the configuration of an IP channel ID descriptor (IP_channel_ID_descriptor) according to embodiments.

FIG. 68 shows IP_channel_ID descriptor of FIG. 62;

The IP_channel_ID_descriptor, 62012 includes unique information about a network and a stream. Similarly, URI_linkage_descritor 62005, 62008 also includes unique information about the network and stream.

descriptor tag and descriptor length identify a descriptor and indicate the length of the descriptor.
service_provider_ID specifies information for identifying a service provider for an IP channel.
network_operator_ID specifies information for identifying a network operator.

IP_number indicates a number for the IP channel. Specifically, IP_number may serve as an identifier and an access address, and may perform the same function as a URL for service discovery. Since IP number is an IP address, and is converted into a URL, it is used as an access address for service bootstrapping.

Port_number indicates a port number for an IP channel.

IP_channel_ID_descriptor 62012 includes service_discovery_URI for service discovery for an Internet linear channel. In addition, IP_channel_ID_descriptor 62012 includes instance TSID replacing the TSID. The instance_TSID may have a value of a temporary TSID replacing the TSID.

The service list descriptor 62013, which is information for identifying a service for the Internet linear channel, includes service_id and service_type for the service of the Internet linear channel.

Accordingly, the broadcast signal reception device may identify the network by parsing the original network id (ONID) of the BAT 62011, and acquire the service of the Internet linear channel based on the service discovery URI information by parsing IP_channel_ID_descriptor 62012. Furthermore, the broadcast signal reception device may acquire a service ID and a service type based on the service_list descriptor 62013.

The broadcast signal transmission device according to the embodiments may extend and define IP_number, Port_number, network_operator_ID, and service_provider_ID included in the IP_channel_ID_descriptor 62012 to include URI information for service discovery for an Internet linear channel. The broadcast signal reception device may receive an aggregated EPG based on the IP_channel_ID_descriptor 62012 and acquire URI information.

Also, the broadcast signal transmission device may signal service discovery by configuring a service bundle for each logical bouquet ID.

FIG. 69 illustrates a process of service discovery based on a bouquet according to embodiments.

FIG. 69 illustrates an example of service discovery based on the signaling information of FIG. 62.

The broadcast signal reception device according to the embodiments may signal a service bundle based on bouquet identification information.

Bouquet 1 69001 and Bouquet 2 69005 may be identified based on bouquet id.

Bouquet 1 69001 may include multiple service bundles 69002, 69003, and 69003. Bouquet 2 69005 may include multiple service bundles 69006, 69007, and 69008. As described above with reference to FIG. 60, a bouquet includes a group of streams or services transmitted over various networks. A service bundle may be represented by original_network_id (ONID). Services for a T channel, an S channel, and a C channel among various networks may be represented through transport_stream_id (TSID) (69003, 69007). A service for the Internet linear channel among various networks may be represented based on URIs (69002, 69004, 69006, 69008). For example, in the service bundle 69002, service discovery may be performed based on URI A. In the service bundle 69008, service discovery may be performed based on URI C. Also, as described above with reference to FIGS. 62 to 68, the URI information of FIG. 69 may be replaced by IP_number, Port_number, Service_provider_ID, Network operator id, and/or instance_TSID.

According to the above-described embodiments, the broadcast signal reception device may implement an IP based TV service that may provide the same user UX as terrestrial, satellite, and cable linear channels. Furthermore, the broadcast signal reception device may provide a channel guide aggregated with the terrestrial, satellite, and cable channels by receiving open internet-based native code rather than an application-based linear channel service. In addition, the broadcast signal reception device may perform Internet channel scanning capable of providing the same user UX as the existing linear service channel, and also perform MPEG-2 system/DVB SI based service initialization. In order to provide a service guide aggregated with the existing linear channel, the broadcast signal reception device may provide network/stream/service unique signaling for Internet stream identification through the above-described signaling information, description, or table. The broadcast signal transmission device provides a signaling method that may replace the TSID while maintaining compatibility with the TSID information in current system information, without additionally defining new information.

The broadcast signal transmission device according to the embodiments extends the service bootstrap scheme of the existing linear channel network in order to provide a linear IP based TV service. Unique additional information to be defined for linear IP based TV service identification has been described with reference to FIG. 8. Accordingly, the user may be provided with IP based TV channel information added to the existing linear channel EPG.

The broadcast signal reception device according to the embodiments may access a service through a UI in which the existing linear service and an OTT service are aggregated by a device supporting an RF-based DVB tuner. In addition, the broadcast signal reception device may support a media service that provides the same UX as the existing linear channel through the open Internet without using an STB.

For the broadcast signal transmission device according to the embodiments, the traditional IP-based linear channel service is granted authentication through subscription to a specific operator, for example, an ISP or a network operator. The broadcast signal reception device receives an IP linear service through an STB provided by the operator. Also, recently, with the advent of connectivity TV, an STB-less IP linear service is available. For example, representative standard technologies may include ATSC 3.0, IBB, and HbbTV. A client may receive various linear rich-media services by operating an application on an OS platform inside the TV. Various operators provide service applications developed by themselves such that the applications may be installed on the TV platform. In the application, APIs that enable request/reception with a server from which data for the service may be received are defined. Based on this life cycle, the client may access an application through the TV UI and receive various services through the application. The broadcast signal reception device according to the embodiments may provide the above-described various services to the user.

In addition, the broadcast signal reception device according to the embodiments may provide not only a linear TV but also an OTT channel. The OTT market increases the need for essential media applications of IP-based devices. In the OTT market, exclusive services is increasing according to independent platforms and a service ecosystem formed only by the OTT. In other words, consumption patterns of independent app-ecosystems such as codec, protocol stack, application, and browser provided only by each OTT are increasing. The broadcast signal reception device according to the embodiments may address issues such as the dependence on the operation of the exclusive platforms and applications the OTTs. Furthermore, instead of providing a UX similar to that of a linear channel service such as the T channel, S channel, or C channel, which requires execution of an application, the broadcast signal reception device provides a method of discovering a service at the receiver native level, and receiving a linear service by accessing a service server accessible by a client.

Also, the broadcast signal reception device according to the embodiments provides a method of integrating the independent platforms of OTT into one unified TV native platform and receiving and providing OTT content within a channel while eliminating the need for running of an OTT application by a user.

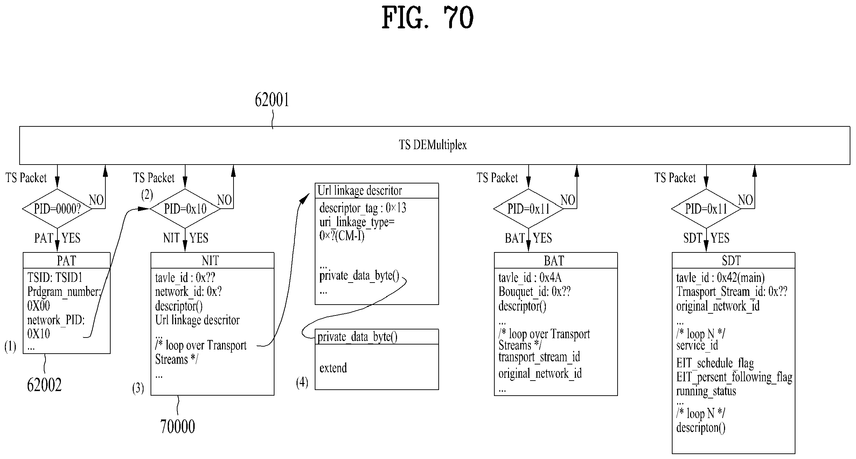

FIG. 70 illustrates a DVB-I bootstrapping method over a DVB network according to embodiments.

Signaling information (SI) of FIG. 70 may correspond to the SI of FIG. 62, and the SI of FIG. 62 may be additionally extended as shown in FIG. 70

The DVB SI may signal network information and program and event information of a stream received through an MPEG-2 system-based initialization process. An NIT 70000 may signal and discover a network of the received stream. In the present disclosure, the DVB-I service bootstrapping method is extended using the existing DVB network.

DVB-I is an internet linear channel and may be signaled through the NIT 70000. Through the URI linkage descriptor in the EN 300 468 standard, a query accessible to a discovery point at which the location of a service list for acquiring a DVB-I service list or a list of lists may be obtained must be defined. The discovery point may be a service registry of a TV manufacturer, or a central service registry accessible to a consortium such as EBU or DVB. Two methods may be used to define bootstrapping.

Regarding the bootstrapping order in the NIT 70000, a URI linkage descriptor is included in /*descriptor loop*/ or /*ts loop*/ in NIT(0×40/41), and information for bootstrapping DVB-I is included in the aforementioned information.

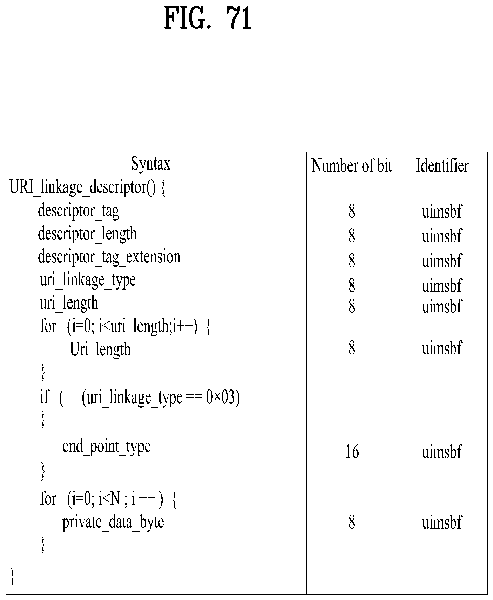

FIG. 71 shows a URI linkage descriptor according to embodiments.

The descriptor of FIG. 71 may correspond to the URI descriptor of FIG. 64. The descriptor of FIG. 64 may be expanded as shown in FIG. 71.

For elements of FIG. 71 identical to those of FIG. 64, reference may be made to the description of FIG. 64.

Linkage_type is the type of a linked service. For example, the value of Linkage_type is 0×03, it indicates that the link service is a DVB-I service, and the reception device must parse the field of end_point_type.

The URI linkage (connection) descriptor according to the embodiments may signal a type of a connection service according to a URI linkage type, and may deliver connection information (URI or query string) for a service to be signaled. For example, according to the condition of uri linkage_type = 3, end_point_type appears in syntax in the following field. Here, end_point_type indicates the type of the end point. Then, URI or query is signaled according to the bit length N coded through a For loop.

FIG. 72 shows end point types (end_point_type) according to embodiments.

FIG. 72 shows the end_point_type of FIG. 71.

The value of end_point_type may indicate the following information. The value of end_point_type may be set in various ways according to embodiments.

For example, when the value of end_point_type is 0×00, it indicates that the end point is a DVB-I service list location. When the value of end_point_type is 0x01, it indicates that the end point is a query to the DVB-I service list registry.

The integer value of end_point_type may be modified in various ways according to embodiments.

For example, the reception device according to the embodiments may check network information through teh NIT and acquire a URI linkage descriptor. The URI linkage descriptor provides the end point type. This type indicates presence of a URI, which is a location of the DVB-I service list, according to the value thereof. The reception device may quickly acquire a service list and an aggregated service list (a list of lists) through the URI, which is the location of the DVB-I service list included in the URI linkage descriptor. Also, the end point type signals presence of a query that may obtain the DVB-I service list registry, according to the value thereof. When the reception device sends a query, it may receive the URI for the list.

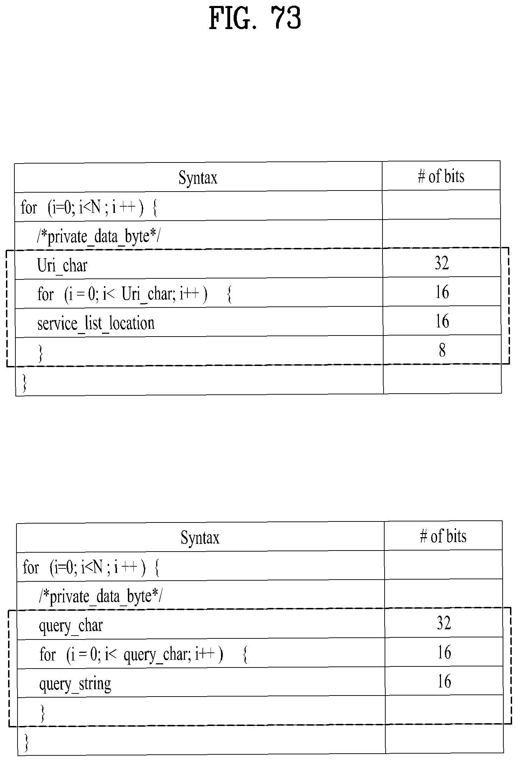

FIG. 73 shows a configuration of linkage-type private data byte according to embodiments.

FIG. 73 shows detailed information about a private data byte that may be signaled by the URI linkage descriptor of FIG. 71 according to the End_point_type of FIG. 72.

In the private data byte, a DVB-I service list location may be defined according to the End_point_type, or may provide a service list. Depending on the End_point_type, a query to DVB-I service list registry may be provided.

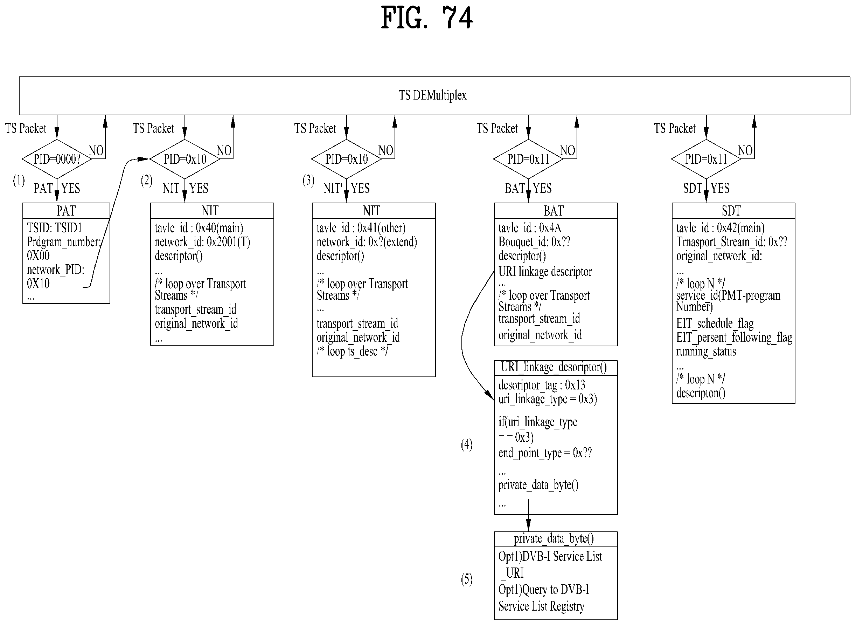

FIG. 74 shows a URI linkage descriptor of the BAT according to embodiments.

The BAT of FIG. 62 may be signaled as shown in FIG. 74.

Regarding the bootstrapping order in a BAT 74000, a URI linkage descriptor may be included in /*descriptor loop*/ in NIT(0x40/41).

The BAT 74000 may include a URI linkage descriptor in order to bootstrap DVB-I. The URI linkage descriptor may signal end point type and private data byte depending on the value of the URI linkage type (e.g., 0x3).

Depending on the end point type, address information (URI) from which the private data byte may acquire the DVB-I service list may be provided, or a query to the DVB-I service list registry may be provided.

For example, when End_point_type is 0x01, the reception device may obtain a query to service discovery or an endpoint string by parsing the DVB-I service list registry, as shown in FIG. 74.

As a result, the DVB-I client (or reception device) may acquire entry points of the service list, and may acquire a list location at which a reasonable service list may be requested according to the client's region and language criteria.

Acquiring DVB-I service list or query information, a terminal (reception device) capable of DVB-I service discovery and native code parsing parses the service list scheme containing services and stores LCN information corresponding to each service in the channel DB, as shown in FIG. 74. In this case, the reception device may manage a DB channel aggregating the existing DVB channels (C, S, T channels) and the DVB-I service instance, and provide the client with UX in which the DVB-I IP linear channel and the existing DVB channel are the same as a single list.

On the other hand, a terminal that does not support the Internet or does not support DVB-I may ignore the information of the NIT and BAT. However, a terminal capable of using the Internet and supporting the DVB-I web app may deliver information about the bootstrap to the DVB-I web app to acquire an IP linear channel.

FIG. 75 shows a reference relationship of a reception device according to embodiments.

The structure of FIG. 75 is the same as/similar to the interface of FIG. 34. For elements of the structure of FIG. 75 identical to those of FIG. 34, refer to the description of FIG. 34. Through the reference relationship of FIG. 75, the reception device as shown in FIG. 58 may discover a service desired by the reception device 75000 based on the signaling information shown in FIGS. 62, 70, and 74, and provide the service to the user.

A DVB-I client 34000 corresponds to a reception device/terminal according to embodiments. The DVB-I client 75000 transmits a content guide query to the content server(s) 75010 and receives content guide data in response thereto. The DDVB-IVB client 75000 transmits a service list query to the service list server(s) 75020, and receives an aggregated service list in response thereto. The DVB-I client 75000 makes a request for a service list discovery query to the service list discovery 75030 and acquires service list entry point(s) in response thereto. The DVB-I client 75000 makes a request for a query for a playlist to the playlist server(s) 75040 and acquires a playlist in response thereto. The DVB-I client 75000 sends a DASH MPD request to the MPD server(s) 75050 and receives a DASH MPD in response thereto. The DVB-I client 75000 makes a request for media to the stream server(s) 75060 and receives unicast DASH in response thereto. Here, the unicast DASH may be received in multicast.

The stream server(s) 75060 may provide URL information for media to the MPD server(s) 75050. The MPD server(s) 75050 may provide a URL for the MPD to a content/service provider 75070 and acquire the MPD.

The content/service provider 76070 may receive a URL for the playlist from the playlist server(s) 75040 and transmit the playlist to the address thereof. The content/service provider 75070 provides service records to the service list server(s) 75020. The service list server(s) 75020 provides entry points to the service list discovery 75030. The content/service provider 75070 receives a URL for content guide data from the content server(s) 75010 and provides the content guide data.

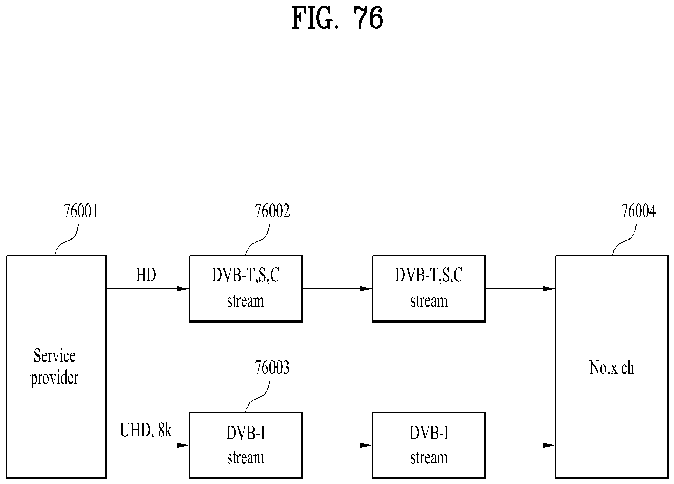

FIG. 76 shows elements to provide a hybrid service on one channel according to embodiments.

FIG. 76 shows elements to provide a hybrid service for a corresponding channel described with reference to FIGS. 1, 2, 3, 4 and the like.

The broadcast signal transmission device and the broadcast signal reception device according to the embodiments may provide a service linkage between a DVB network and a DVB-I channel.

Specifically, the same dedicated channel may provide a DVB stream and a DVB-I stream at the same time, such that the stream may be dynamically changed for a certain period of time. Content produced at different resolutions is provided on the same channel through streams delivered over different networks, and an adaptive service is provided according to network conditions. For example, suppose that HD content is received over the DVB network, and the I channel carries the same content at a different resolution. In this case, if the bandwidth of the existing channel is better than the available bandwidth of the I channel, the content of HD may be displayed for the user. If the bandwidth of the I channel is better than that of the existing channel, the content of UHD or 8k resolution may be provided. Accordingly, the broadcast signal reception device or the display device of the broadcast signal reception device according to the embodiments may provide the user with a video with various qualities in consideration of the bandwidth of the network for a specific period.

In other words, the tuner of the broadcast signal reception device receives a broadcast signal including a DVB T/S/C stream of a DVB T/S/C network and a DVB-I stream of DVB-I. The controller (or event controller) of the broadcast reception device may dynamically change the T/S/C stream and the DVB-I stream in consideration of the situation of the reception device and the network and provide the same to the user. Here, the /S/C stream and the DVB-I stream may be allocated to one channel, that is, the same dedicated channel, such that the controller may dynamically change the two streams.

DVB SI includes service and event related information. For example, the BAT includes information enabling grouping of one or more channels or services, and the SDT includes received stream information of a service or channel level. The EIT includes information on events by time corresponding to a specific service. Stream specific information may identify a received stream through MPEG-2 PSI.

A service provider 76001 may provide a DVB T, S, C stream 76002 and a DVB-I stream 76003. The DVB T, S, C stream 76002 represents streams of terrestrial, satellite, and cable channels corresponding to HD, and the DVB-I stream 76003 represents streams of an Internet channel corresponding to UHD or 8K.

The DVB T, S, C stream 76002 and DVB-I stream 76003 may be provided through the same channel number 76004. HD service data may be provided for the channel number x and UHD service data may be provided for the channel number x. Thereby, the broadcast signal reception device may display data of various qualities to the user in consideration of the network bandwidth for a specific period. The signaling information for the DVB T, S, C stream 76002 and DVB-I stream 76003 has been described above. Hereinafter, signaling information for transmitting the DVB T, S, C stream 76002 and DVB-I stream 76003 simultaneously and dynamically changing the same will be described.

FIG. 77 shows a configuration of a signal reception device according to embodiments.

The reception device of FIG. 77 corresponds to the broadcast reception device of FIG. 58, and further includes some components.

A TS packet filter receives a TS packet included in a broadcast signal. The TS packet filter delivers a packetized elementary stream (PES), data, and signaling information included in the TS packet to a PES parser, a data parser, and a signaling parser, respectively.

The signaling parser parses program specific information (PSI) and service information (SI) included in the signaling information. In addition, the signaling parser parses an identification channel table (ICT) from a service initialization server (SDN).

The broadcast signal transmission device may provide the same content of various qualities to the same channel in two networks. The DVB SI and the PSI include initialization information, and the broadcast signal reception device performs service discovery. Specifically, services for respective networks may be recognized, and the event controller 18005 may process the receiver parsing process in the form of adaptive bitrate streaming (ABR) based on the service linkage information. Based on streams including multiple DASH representations and TSs, selective content reproduction may be supported according to the network condition or the capacity of the terminal. An ABR sync controller may request/process a supportable stream to support more adaptive playback.

The event controller 77005 processes the event controller process based on the linkage information acquired from the PSI, SI, and ICT.

The event controller links streams from different networks. The linkage descriptor and extended_event_linkage_info() may be extended to support not only UHD video but also 8k resolution video. In addition, linkage information corresponding to a specific PID in the ES_info loop defining PMT elementary stream information may be newly defined. That is, linkage information corresponding to a specific PID in the ES_info loop defining the PMT elementary stream information may be used.

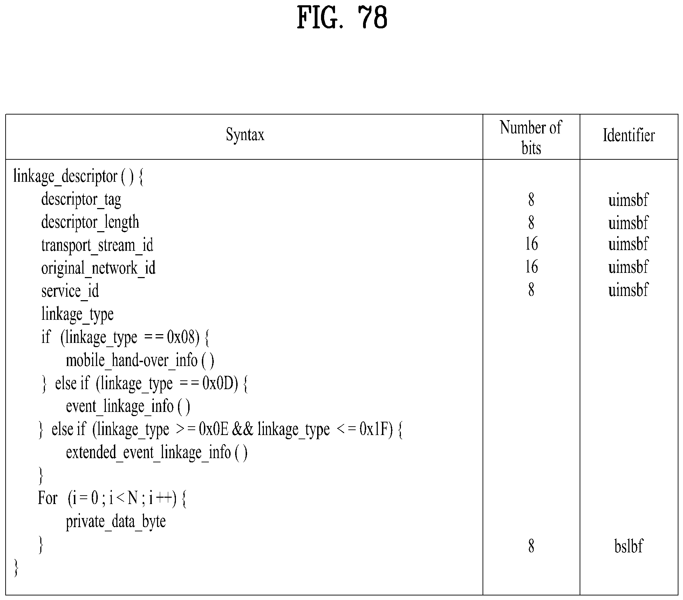

FIG. 78 shows a linkage descriptor according to embodiments.

The linkage descriptor of FIG. 78 signals information for an attribute of the linkage when compared with the URI linkage descriptor signaling a URI connection according to the URI linkage type of FIG. 64 described above.

The DVB SI includes information linking additional information to the service being received. The linkage descriptor provides location and additional information related to linkage information.

transport_stream_id indicates a TS including information indicating a service.

original_network_id indicates a network ID of an originating delivery system of the information indicating a service.
service_id indicates a service in the TS. service_id may have the same value as program_number in the corresponding program_map_section. When the value of the linkage_type field is 0x04, service_id is irrelevant and is set to 0x0000.

linkage_type indicates the type of linkage. linkage_type may include a TS having an information service, an EPG service, or complete network/bouquet SI, a TS having a service replacement service, data broadcast service, an RCS map, mobile handover, a system software update service, or SSU BAT or NIT, event linkage, and extended event linkage.

The linkage descriptor may be included in a loop in the SDT or EIT. The linkage descriptor includes link-related information. The linkage descriptor signals a current service or event based on target_transport_stream_id, original_network_id, and service_id information, and defines specific linkage information as a value of linkage_type.

A service handed over by the mobile receiver may also be indicated using mobile_hand-over_infor().

Two events may be signaled using event_linkage_info(). Linked events may be simulcast or time-offset. A target event having high quality may be signaled using event_linkage_info(). event_linkage_info() may include target_event_id, target_listed, and event_simulcast.

target event_id indicates the ID of the target event. The target event refers to an event delivered by a service represented based on original_network_id, transport_stream_id, and service_id.

target listed indicates whether a service represented based on original_network_id, transport stream_id, and service_id is included in the SDT of the TS.

event_simulcast indicates whether a target event and a source event are simulcast.

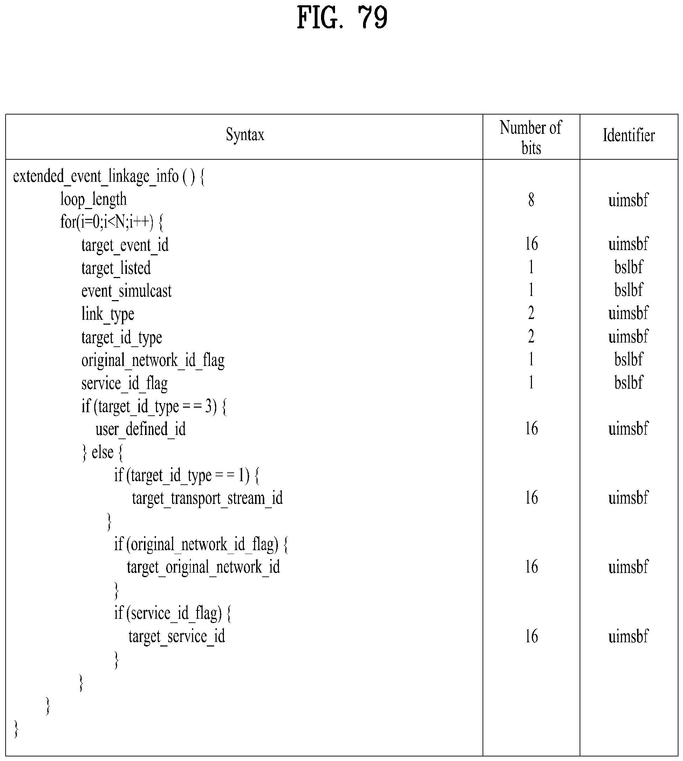

FIG. 79 shows extended event linkage according to embodiments.

FIG. 79 represents signaling information acquired by the signaling parser of FIGS. 58 and 77 from a broadcast signal.

When linkage_type in the linkage descriptor is set to a specific value, extended_event_linkage_info() may be defined.

loop_length indicates the length or size of a loop.

target_event_id indicates the event_id of the target event. The target event refers to an event delivered over a service represented based on original_network_id, transport_stream_id,and service_id.

target listed indicates whether a service represented based on original_network_id, transport stream_id, and service_id is included in the SDT. When target listed is set to a specific value, the service is included in the SDT.

event_simulcast indicates whether a target event and a source event are simulcast. When event_simulcast is set to another value, the events have an offset in chronological order.

link_type indicates the type of the target service. Depending on the combination of link_type and linkage_type, the type of the target service includes SD, HD, H.264, UHD, service compatible plano-stereoscopic MVC, and service frame compatible plano stereoscopic.

target id_type indicates a target service. A value of target id_type may indicate that transport_stream_id or target_transport_stream_id is used to indicate a single target service, indicate whether target services are in one or more transport streams, or indicate whether target services are matched using a user-defined identifier.

original network id flag indicates whether target_origianl network id is used to determine a target service.

service_id_flag indicates whether target_service_id is used to determine a target service.

user defined id indicates whether the linkage descriptor is within the scope of the private data specifier descriptor. Thereby, the receiver may determine the meaning of user_defined_id.

target transport stream_id indicates an alternate TS including an information service represented by target_id_type, original_network_id_flag, and service_id_flag.

target original_network_id means a label indicating the network_id of the delivery system of an information service represented by target_id_type, original_network_id_flag, and service_id_flag.

target service_id indicates an information service represented by target_id type, original_network_id_flag, and service_id_flag.

The extended_event_linkage_info() loop may define a specific event_id that is a target, and may signal whether an event is simulcast. A target service type may be signaled by a combination of the values of the Link_type field and linkage_type as shown in FIGS. 22 to 23 below. The broadcast signal reception device according to the embodiments may extend linkage information about 8k (SUHD) to enable adaptive service between DVB-I and the existing DVB network.

Accordingly, the controller of the broadcast signal reception device may acquire a connection relationship between content or streams for different networks based on the signaling information of FIGS. 19 and 20. The decoder (or renderer) of the broadcast signal reception device may provide high-quality content to the user by dynamically changing the content and streams of different networks allocated to one channel.

DVB-I represents MPEG-DASH/DVB-DASH-based transmission and does not correspond to information defined in the MPEG-2 system of traditional DVB. Accordingly, private_data_byte (or private data specifier descriptor) included in the linkage descriptor of FIG. 19 is to be extended as follows.

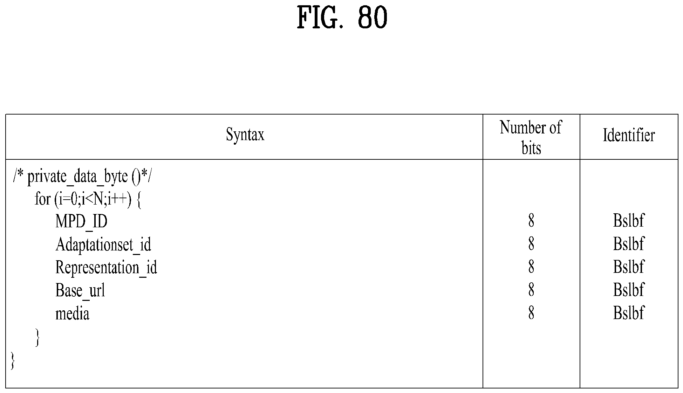

FIG. 80 shows private_data_byte according to embodiments.

FIG. 80 corresponds to the private data byte included in the linkage descriptor of FIG. 78.

The linkage descriptor in FIG. 78 includes private_data byte. private_data_byte contains the following information.

MPD_id is an identifier of a signaled MPD.

Adaptationset_id indicates an ID of an adaptation set for MPEG-DASH content.
representation id indicates a representation ID for MPEG-DASH content.

Base_url indicates a URL of a component and/or segment for DVB-I content.
media indicates a URL of a component and/or segment for DVB-I content.

Adaptationset id and representation_id are hierarchical id information for content defined in the MPD of MPEG-DASH, and information on a component and representation may be represented based on such id information. To check the information of a specific segment of Representation, the baseurl and the media in the segment template are used. That is, the baseurl and the media may indicate the component and segment url of DVB-I corresponding to a DVB network over which reception is currently performed. A target segment of a specific representation represented by target transport_stream_id,original_network_id, and service_id may be signaled through private_data_byte.

Accordingly, the broadcast signal reception device or signaling parser according to the embodiments parses the information included in private_data byte. The controller or decoder may identify an adaptation or representation included in the media stream based on Adaptationset_id and representation_id, and may acquire a component or segment included in the media stream based on Base url and media. In other words, the content included in the stream of the DVB-I network may be hierarchically identified and acquired.

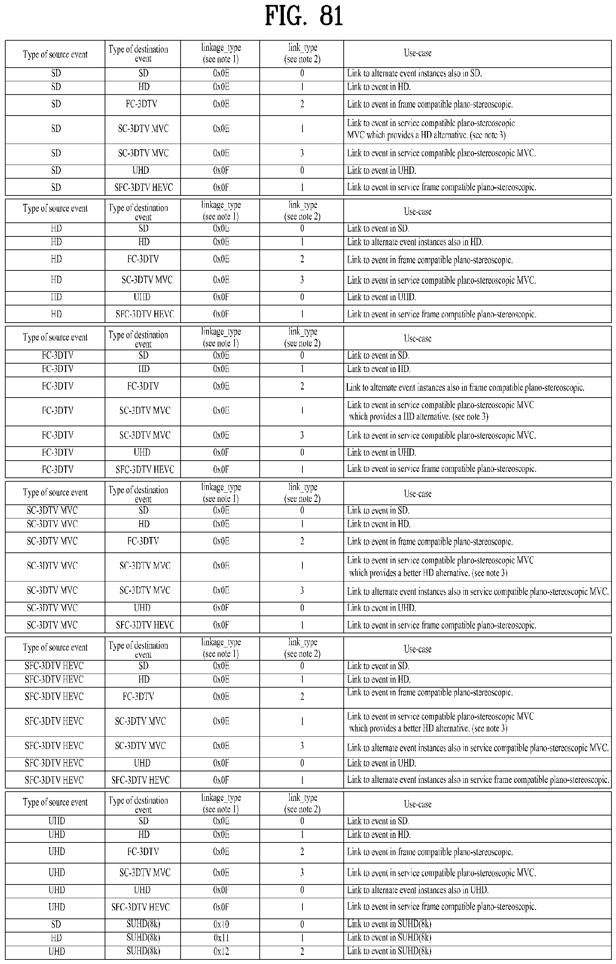

FIG. 81 shows use-cases of an extended event linkage descriptor according to embodiments.

The linkage_type included in the linkage descriptor of FIG. 78 provides extended_event_linkage_info() of FIG. 79 by extending the linkage descriptor. extended_event_linkage_info() provides an adaptive service between DVB-I and the existing DVB network using link_type.

Further, extended_event_linkage_info( ) of FIG. 79 may be used in the future for a hybrid service between a broadcast network and DVB-I. FIG. 81 shows an embodiment corresponding to an 8k scenario, which may be used for future services. In this method, when 8k is provided in the existing broadcast network, it is provided through linkage information.

According to a combination of linkage_type and link_type, the extended event linkage descriptor may signal that the type of the source event is SD and the type of the destination event is SUHD (8k), that the type of the source event is HD and the type of the destination event is SUHD (8k), or that the type of the source event is UHD and the type of the destination event is SUHD (8k).

Accordingly, the broadcast signal transmission device and the broadcast signal reception device according to the embodiments may provide an adaptive service between the DVB-I and the existing DVB network.

According to a combination of linkage_type and link_type in FIG. 81, a linkage between a source event and a destination event may be signaled.

The broadcast signal transmission device and the broadcast signal reception device according to the embodiments provide SUHD (8k) linkage based on the DVB-I channel on the SD, UD, or UHD linkage service provided by the channel.

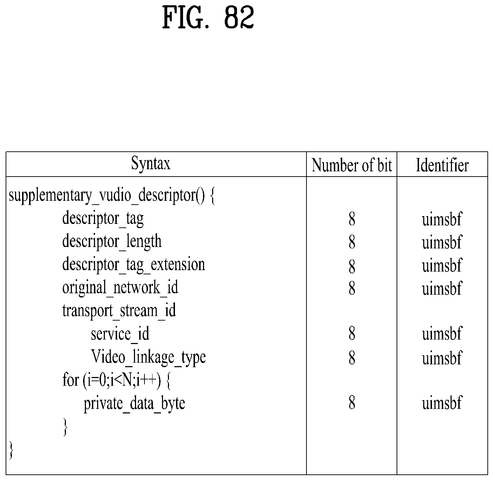

FIG. 82 shows a supplementary video descriptor according to embodiments.

The DVB-SI (signaling information) of FIGS. 62, 70, and 74 may include a program map table (PMT). Additionally, linkage information corresponding to a specific PID in the ES_Info loop or ES Info descriptor loop is newly defined. FIG. 82 shows the configuration of the linkage information defined in this way.

An extended event linkage descriptor may be used in the EIT, but the TSID and the hierarchical structure that accesses up to a specific segment in MPEG DASH do not match. The TSID is an identifier of a delivery stream in which audio, video, and subtitle components are multiplexed, and may not be suitable for linkage information.

The descriptor of FIG. 82 may include the following elements.

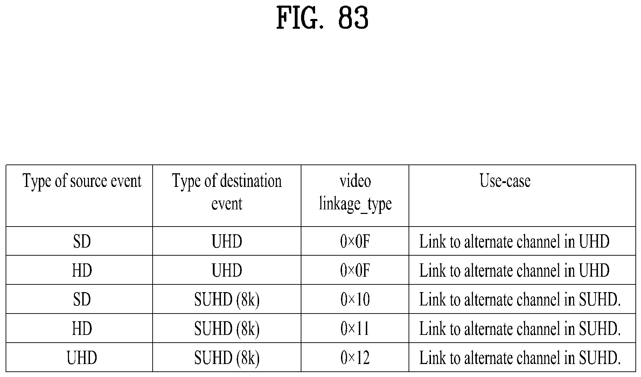

multi_stream_info_present indicates whether a currently received supplementary video stream is present.
original network_id indicates an identifier of a network type that transmits a supplementary video. For example, it may indicate DVB cable, terrestrial, or satellite, or indicate the identifier of a transmission network operator.
transport_stream_id is an identifier of the TSID through which the supplementary video is being transmitted
video_linkage_type defines possible linkage types with the supplementary video. An alternate service or ABR service may be enabled as shown in the table of FIG. 83. private_data_byte is configured as described above.

FIG. 83 illustrates an alternate service according to embodiments.

FIG. 83 shows an additional extended embodiment of signaling related to the linkage type of FIG. 81.

As described above, the link between the source event and the destination event may be signaled based on the video linkage type. Based on such signaling information, the reception device may link to an alternate channel in UHD or SUHD.

As a method that may enable an ABR service between an Internet linear channel and the traditional DVB channel according to embodiments, extending linkage service information within the existing MPEG-2 system and DVB SI service channel list configuration method has been proposed. The DVB-I function may provide a UX similar to the existing DVB channel service by performing service discovery on the IP linear channel and including a channel in the existing TV channel list, and may have an independent service channel. A linkage service between an Internet channel and the existing DVB network may also be available through service-related initialization information.

Next, extension of information for providing the linkage service in the above-described ICT (or SDLT) table in the reference architecture for supporting the DVB-I will be described.

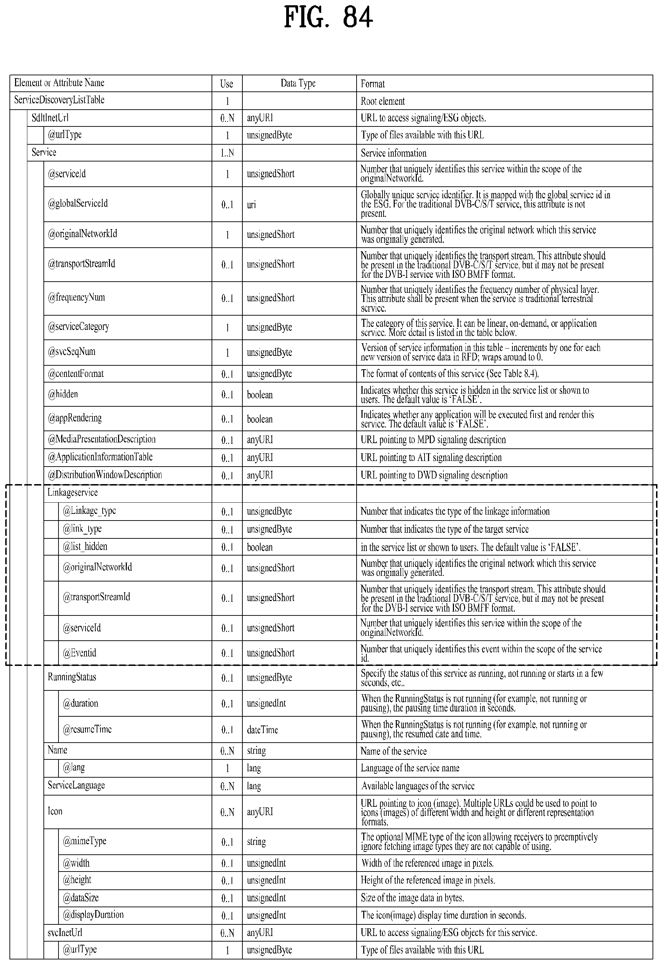

FIG. 84 shows an SDLT according to embodiments.

The SDLT of FIG. 84 may correspond to the SDLT according to the above-described embodiments, and the SDLT may be extended for a linkage service as shown in FIG. 84.

@Linkage_type indicates the value of a type of the linkage with a higher level service received through DVB-I. The value may have an attribute equivalent to linkage_type in URI_linkage_descriptor of DVB-SI, and enables a scenario equivalent to the channel list linkage service. This value indicates the type of linkage information.

@link_type is the same as the value of link_type under extended_event_linkage_info() in URI_linkage_descriptor. This value enables identification of an ABR bitstream that is possible through the linkage service. The value indicates the type of a target service (or link service).

Based on the values of the two fields, the ABR sync controller 580008 of FIG. 58 identifies a video attribute of a possible bitstreams and provides a service.

@originalNetworkId, transportStreamId, serviceId, and Eventid are linkage information for providing a service by dynamically switching a video resolution corresponding to the same channel or program among SD, HD, UHD, and SUHD (8k) within a specific time depending on the network conditions.

@list_hidden indicates whether a list is hidden or visible to the user.

@originalNetworkId identifies the original network from which this service has been originally originated.

transportStreamId identifies a transport stream. This attribute is present in the traditional DVB T/S/C service. For DVB-I services having the ISO BMFF file format, this attribute may not be present.

serviceId identifies a service within the scope of the originalNetworkId.

Eventid identifies a service within the scope of the serviceId.

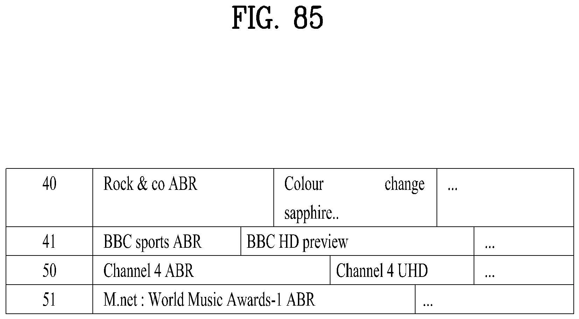

FIG. 85 shows a UI/UX for a channel list according to embodiments.

FIG. 85 shows a configuration of a channel list based on the signaling information according to the above-described embodiments and/or the ABR sync controller of FIG. 77.

A channel list shows channel numbers (e.g., 40, 41, 50, 51), and services on each channel number (e.g., Rocks & co ABR, Color change sapphire, BBC sports ABR, BBC HD preview, Channel 4 ABR, Channel 4 UHD, M.net: World Music Awards-1 ABR). Based on the above-described signaling scheme, the channel/service may further indicate the ABR.

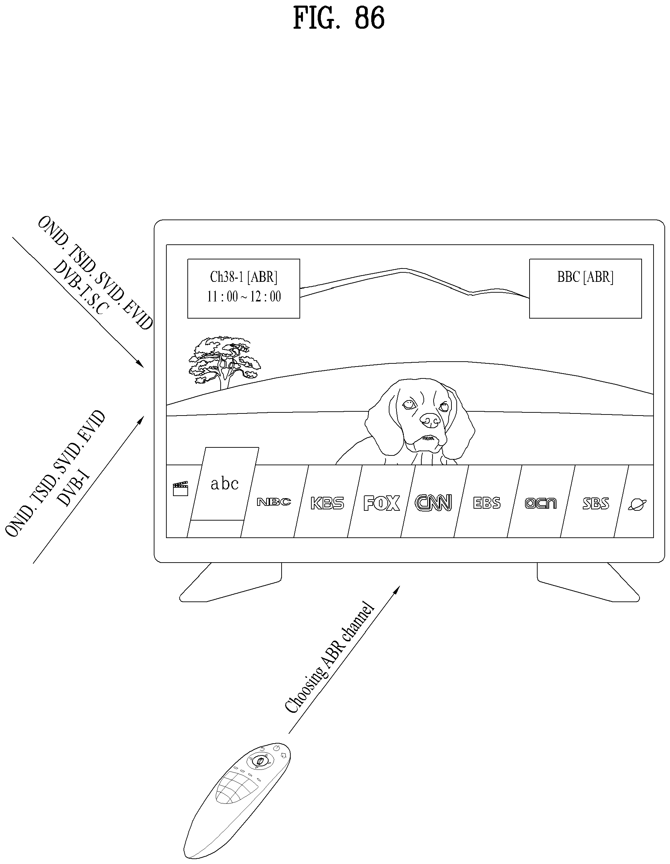

FIG. 86 shows an ABR stream and linkage service for dynamic resolution support according to embodiments.

FIG. 86 shows a display implementation on a reception device in relation to FIG. 85.

The reception device according to the embodiments receives a traditional DVB-T/S/C service based on an original network ID (ONID), a transport stream ID (TSID), a service ID (SVID), and an event ID (EVID), and receives a DVB-I service based on the ONID, TSID, SVID, and EVID. The reception device may provide the user with an indication of whether a channel number supports the ABR service through UI/UX. The user may watch the received DVB-T/S/C/I service by controlling the ABR channel through a controller or the like. The reception device may dynamically switch (change) a service of a desired resolution between DVB-T/S/C/I services. As the reception device receives the above-described linkage service and ABR stream, it may provide a dynamic service to the user.

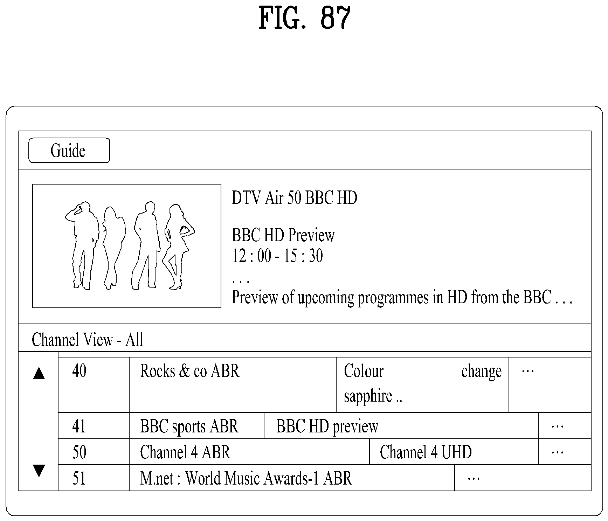

FIG. 87 shows an EPG view according to embodiments.

FIG. 87 shows an example of implementing an EPG view on the display of FIG. 86.

For example, channel numbers 41 and 50 may support ABR. The BBC Sports may be serviced in HD, or may be serviced in UHD. The reception device may display EPG guide information and additionally a preview image on the display.

The reception device may indicate that channel 50 has services of channel 4 ABR and channel 3 UHD. The EPG may be displayed based on the channel/service content/time/date.

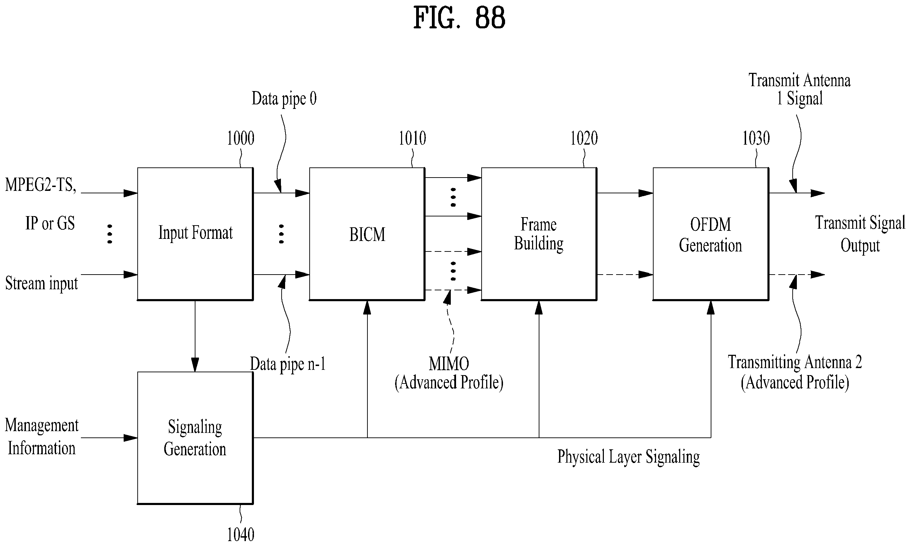

FIG. 88 shows a configuration of a transmission device according to embodiments.

A broadcast signal including data and signaling information according to the above-described embodiments is transmitted through a process as shown in FIG. 88. The transmission device of FIG. 88 is a device on the transmitting side corresponding to the reception device of FIGS. 58, 77, and 78.

A broadcast signal transmission device for a future broadcast service according to embodiments may include an input format block 1000, a bit interleaved coding & modulation (BICM) block 1010, a frame building block 1020, an orthogonal frequency division multiplexing (OFDM) generation block 1030, and a signaling generation block 1040. An operation of each block of the broadcast signal transmission device will be described.

IP stream/packet and MPEG2-TS are the main input formats, and other stream types are treated as general streams. In addition to these data inputs, management information is input. Thus, the scheduling and allocation of a bandwidth for each input stream are controlled. One or multiple TS streams, IP streams and/or general streams are allowed to be input simultaneously.

The input format block 1000 may demultiplex the input streams into one or multiple data pipes to which independent coding and modulation are applied. A data pipe is a basic unit for robustness control, which affects Quality of Service (QoS). One or multiple services or service components may be carried by a data pipe.

A data pipe is a logical channel of a physical layer that carries service data or related metadata that may carry one or more services or service components. The data pipe may correspond to a physical layer pipe (PLP).

Also, a data pipe unit is a basic unit for allocating a data cell to a data pipe in one frame.

In the input format block 1000, parity data is added for error correction, and the encoded bitstream is mapped to a complex-valued constellation symbol. The symbol is interleaved over a specific interleaving depth used for the data pipe. For an advanced profile, MIMO encoding is performed in the BICM block 1010 and an additional data path is added to the output for MIMO transmission.

The frame building block 1020 may map data cells of the input data pipe to OFDM symbols within one frame. After the mapping, frequency interleaving is used for frequency domain diversity, in particular to avoid frequency selective fading channels.

After inserting a preamble at the beginning of each frame, the OFDM Generation block 1030 may apply conventional OFDM modulation, which has a cyclic prefix as a guard interval. For antenna space diversity, a distributed MISO scheme is applied across the transmitters. In addition, a Peak-to-Average Power Reduction (PAPR) scheme is performed in the time domain. For a flexible network configuration, this proposal provides a set of various FFT sizes, guard interval lengths and corresponding pilot patterns.

The signaling generation block 1040 may generate physical layer signaling information used for the operation of each functional block. The signaling information is also transmitted such that a service of interest is properly recovered at the receiver side.

FIG. 89 shows a configuration of a reception device according to embodiments.

The broadcast signal including data and signaling information according to the above-described embodiments is received through the process shown in FIG. 89. The reception device of FIG. 89 may correspond to the reception device of FIGS. 58, 77, and 78.

The broadcast signal reception device for a future broadcast service according to the embodiments may correspond to the broadcast signal transmission device for the future broadcast service described with reference to FIG. 1.

The broadcast signal reception device for the further broadcast service according to the embodiments may include a synchronization & demodulation module 9000, a frame parsing module 9010, a demapping & decoding module 9020, an output processor 9030 and a signaling decoding module 9040. A description will be given of operation of each module of the broadcast signal reception device.

The synchronization & demodulation module 9000 may receive input signals through m reception antennas, perform signal detection and synchronization for a system corresponding to the broadcast signal reception device and perform demodulation corresponding to a reverse procedure of the procedure performed by the broadcast signal transmission device.

The frame parsing module 9010 may parse an input signal frame and extract data through which a service selected by a user is transmitted. When the broadcast signal transmission device executes interleaving, the frame parsing module 9010 may execute deinterleaving, which corresponds to a reverse procedure of interleaving. In this case, the positions of a signal and data that need to be extracted may be acquired by decoding data output from the signaling decoding module 9040 to restore scheduling information generated by the broadcast signal transmission device.

The demapping & decoding module 9020 may convert the input signals into bit-domain data and then deinterleave the same as necessary. The demapping & decoding module 9020 may perform demapping for mapping applied for transmission efficiency and correct, through decoding, an error generated on a transmission channel. In this case, the demapping & decoding module 9020 may acquire transmission parameters necessary for demapping and decoding by decoding the data output from the signaling decoding module 9040.

The output processor 9030 may perform reverse procedures of various compression/signal processing procedures which are applied by the broadcast signal transmission device to improve transmission efficiency. In this case, the output processor 9030 may acquire necessary control information from the data output from the signaling decoding module 9040. The output of the output processor 8300 may correspond to a signal input to the broadcast signal transmission device and may be an MPEG-TS, IP stream (v4 or v6) and GS.

The signaling decoding module 9040 may acquire PLS information from the signal demodulated by the synchronization & demodulation module 9000. As described above, the frame parsing module 9010, the demapping & decoding module 9020 and the output processor 9030 may execute functions thereof using the data output from the signaling decoding module 9040.

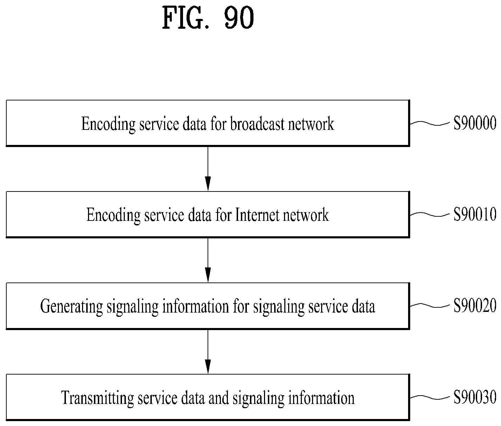

FIG. 90 illustrates a broadcast signal transmission method according to embodiments.

S90000: The broadcast signal transmission method according to the embodiments includes encoding service data for a broadcast network.

S90010: The broadcast signal transmission method further includes encoding service data for an Internet network.

The service data for the broadcast network and/or the service data for the Internet network may be the same service data and/or different service data. In addition, the encoding of the respective service data may be performed individually or together.

For example, the encoding according to the embodiments may include the DVB-I transmission in FIG. 1, the encoding of terrestrial, multicast, and DVB-I data in FIG. 2, the encoding of satellite, cable, terrestrial or Internet-based data according to the protocol in FIG. 3, the encoding of service data according to the service category in FIG. 10, the encoding of a service including content according to the format in FIG. 11, and/or the input formatting, BICM encoding, frame building, and OFDM modulating in FIG. 88.

S90020: The broadcast signal transmission method further includes generating signaling information for signaling the service data. The generating of the signaling information may include encoding the signaling information (FIG. 88). The operation of generating the signaling information may include the operation of generating the signaling information in FIGS. 5, 6, 9, 10, 9 to 15, 18, 20 to 22, 26, 27, 30, 31, 35 to 40, 42, 47 to 56, 60 to 74, 78 to 85, and the like.

S90030: The broadcast signal transmission method further includes transmitting the service data and the signaling information. The transmitting of the broadcast signal including the service data and the signaling information may include the transmission and the like in FIGS. 2, 3 and 88.

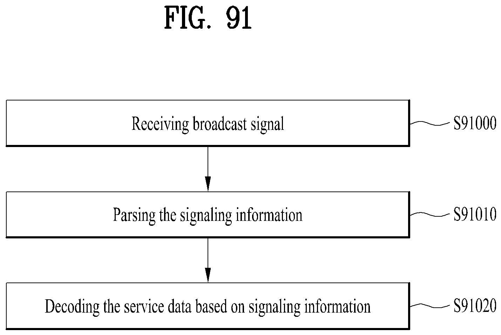

FIG. 91 illustrates a broadcast signal reception method according to embodiments.

S91000: The broadcast signal reception method according to the embodiments includes receiving a broadcast signal. The receiving of a broadcast signal including service data and signaling information may include the reception operations in FIGS. 1 to 4, 6 to 8, 16, 17, 19, 23 to 25, 28, 29, 32 to 34, 41, 44, 57, 58, 62, 70, 74 to 77, 86, 87, and 89.

S91010: The broadcast signal reception method according to the embodiments further includes parsing the signaling information. The parsing of the signaling information may include the operation of parsing and acquiring signaling information in FIGS. 5, 6, 9 to 15, 18, 20 to 22, 26, 27, 30, 31, 35 to 40, 42, 47 to 56, 60 to 74, 78 to 85, and the like.

S91020: The broadcast signal reception method further includes decoding the service data based on the signaling information. The decoding operation may include decoding the service data and/or signaling information and providing the service data to a user based on the signaling information illustrated in FIGS. 1, 2, 4, 6, 7, 16, 17, 19, 23, 24, 25, 28, 32, 33, 41, 44, 57, 58, 76, 77 86, 87 and 89.

The broadcast signal reception method of FIG. 91 may follow a reverse process of the operations of the broadcast signal transmission method of FIG. 90.

Each part, module, or unit described above may be software, a processor, or a hardware part that executes successive procedures stored in a memory (or storage unit). The respective operations described in the embodiments above may be performed by software, processors or hardware parts. Each module/block/unit described in the examples above may operate as a processor, software, or hardware. In addition, the methods proposed in the embodiments may be realized by code. The code may be written in a recoding medium readable by a processor so that the code may be read by the processor provided by the apparatus.

Although the description of the present disclosure is made with reference to each of the accompanying drawings for clarity, it is possible to design new examples by merging the examples shown in the accompanying drawings with each other. If a recording medium readable by a computer, in which programs for executing the examples mentioned in the foregoing description are recorded, is designed by those skilled in the art, it may fall within the scope of the appended claims and their equivalents.

The devices and methods according to the embodiments may not be limited by the configurations and methods of the examples mentioned in the foregoing description. The examples mentioned in the foregoing description may be configured in a manner of being selectively combined with one another entirely or in part to enable various modifications.

In addition, the proposed methods according to the embodiments may be implemented with processor-readable code in a processor-readable recording medium provided to a network device. The processor-readable medium may include all kinds of recording devices capable of storing data readable by a processor. The processor-readable medium may include one of ROM, RAM, CD-ROM, magnetic tapes, floppy disks, optical data storage devices, and the like and also include carrier-wave type implementation such as a transmission via Internet. Furthermore, as the processor-readable recording medium is distributed to a computer system connected via a network, processor-readable code may be saved and executed in a distributed manner.

Although the disclosure has been described with reference to the exemplary examples, those skilled in the art will appreciate that various modifications and variations may be made in the embodiments without departing from the spirit or scope of the disclosure described in the appended claims. Such modifications are not to be understood individually from the technical idea or viewpoint of the present disclosure

It will be appreciated by those skilled in the art that various modifications and variations may be made in the embodiments without departing from the spirit or scope of the disclosures. Thus, it is intended that the present disclosure covers the modifications and variations of this disclosure provided they come within the scope of the appended claims and their equivalents.

In the present disclosure, both an apparatus disclosure and a method disclosure are mentioned, and the descriptions of both the apparatus and method disclosures may be applied to complement each other.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C."

Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Terms such as first and second may be used to describe various elements of the embodiments. However, various elements according to the embodiments should not be limited by the above terms. These terms are only used to distinguish one element from another.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition.

[Mode for Disclosure]

A detailed description has been made in the best mode.

[Industrial Applicability]

It is apparent to those skilled in the art that various changes and modifications are possible in the present disclosure without departing from the spirit or scope of the present disclosure. Accordingly, the present disclosure is intended to cover modifications and changes of the present disclosure provided within the appended claims and their equivalents.

**Claims**

1. A broadcast signal reception device comprising:

   a receiver configured to receive a broadcast signal, the broadcast signal including service data for a broadcast network and service data for an Internet network, wherein the broadcast signal further includes signaling information for signaling the service data;

a signaling parser configured to parse the signaling information; and
a decoder configured to decode the service data based on the signaling information.

2. The device of claim 1, wherein the signaling information includes a URI linkage descriptor for signaling an address of a query to a service list or service list registry for the Internet network.

3. The device of claim 2, wherein the URI linkage descriptor includes an end point type.

4. The device of claim 3, wherein, on a basis that the end point type has a first value, the end point type indicates that the signaling information signals a URI indicating a location of a list of services for the Internet network.

5. The device of claim 3, wherein, on a basis that the end point type has a second value, the end point type indicates that the signaling information signals a URI including the query to the service list registry.

6. The device of claim 3, wherein, in response to a first value of the end point type, the URI linkage descriptor includes a service list location indicating a location of a list of services for the Internet network.

7. The device of claim 3, wherein, in response to a second value of the end point type, the URI linkage descriptor includes a query string including the query to the service list registry for the Internet network.

8. A broadcast signal reception method comprising:

   receiving a broadcast signal, the broadcast signal including service data for a broadcast network and service data for an Internet network, wherein the broadcast signal further includes signaling information for signaling the service data;
   parsing the signaling information; and
   decoding the service data based on the signaling information.

9. The method of claim 8, wherein the signaling information includes a URI linkage descriptor for signaling an address of a query to a service list or service list registry for the Internet network.

10. The method of claim 9, wherein the URI linkage descriptor includes an end point type.

11. The method of claim 10, wherein, on a basis that the end point type has a first value, the end point type indicates that the signaling information signals a URI indicating a location of a list of services for the Internet network.

12. The method of claim 10, wherein, on a basis that the end point type has a second value, the end point type indicates that the signaling information signals a URI including the query to the service list registry.

13. The method of claim 10, wherein, in response to a first value of the end point type, the URI linkage descriptor includes a service list location indicating a location of a list of services for the Internet network.

14. The method of claim 10, wherein, in response to a second value of the end point type, the URI linkage descriptor includes a query string including the query to the service list registry for the Internet network.

15. A broadcast signal transmission method comprising:

   encoding service data for a broadcast network;
   encoding service data for an Internet network;
   generating signaling information for signaling the service data; and
   transmitting the service data and the signaling information.

16. The method of claim 15, wherein the signaling information includes a URI linkage descriptor for signaling an address of a query to a service list or service list registry for the Internet network.

17. The method of claim 16, wherein the URI linkage descriptor includes an end point type.

18. A broadcast signal transmission device comprising:

an encoder configured to encode service data for a broadcast network and encoding service data for an Internet network;

a signaling generator configured to generate signaling information for signaling the service data; and

a transmitter configured to transmit the service data and the signaling information.

19. The device of claim 18, wherein the signaling information includes a URI linkage descriptor for signaling an address of a query to a service list or service list registry for the Internet network.

20. The method of claim 19, wherein the URI linkage descriptor includes an end point type.

# FIG. 1

# FIG. 2

| Terrestrial Headend | — | Terrestrial Network |
|---|---|---|

| Multicast Headend | Broadband Network | Home Gateway | IPTV STB | HDMI | TV |

DVB-I Source

CDN

20000

Hybrid IPTV / DTT network adding DVB-I

# FIG. 3

30040

| Application (Native app, Pre-installed app, User-selected app) |
|---|

| SI | MP2TS (video / audio / caption) | Data | SI (MPD) | DASH | Data |
|---|---|---|---|---|---|

| MPEG - 2 System | HTTP |
|---|---|
| | TCP |
| | IP |

| GSE | MPEG-2 Transport Stream | Data Link |
|---|---|---|

| S2 / C2 / T2 | IEEE and/or 3GPP PHY Layers |
|---|---|

Satellite Broadcast
30010

Cable Broadcast
30000

Terrestrial Broadcast
30020

Internet
30030

# FIG. 4

40010

40000

Broadband Server

https://ccc.com/..

https://aaa.com/..

https://bbb.com/..

40020

40030

App

App

App    Native App

App

40040

40050

App Store

40060

40070

# FIG. 5

| Terms | Meaning |
|-------|---------|
| C | ServiceDiscoveryListTable including services delivered via Cable |
| S | ServiceDiscoveryListTable including services delivered via Satellite |
| T | ServiceDiscoveryListTable including services delivered via Terrestrial |
| I | ServiceDiscoveryListTable including services delivered via Internet |
| IPTV | ServiceDiscoveryListTable including services delivered via IPTV |
| ALL | ServiceDiscoveryListTable including all services delivered via C\|S\|T\|I |

# FIG. 6

# FIG. 7

70030

Broadband Server
https://bb1.com

70000

② Requesting SDLT to the address
of the broadband server in the app

SDLT

③ Response with a service discovery
list having terrestrial, cable,
satellite,and Internet services

70010

70040  70050

70060

| 7-1 | Marry Me Now (Ep.42) |
| 7-100 ① BB HD | KBS Sports (LG:DOOSAN) |
| 11-1 | The Rich Son (Ep.74) |
| 11-100 ① BB HD | MBC Sports (KIA:HANHWA) |

70070

① Selecting native
app or downloaded app

70020

④ Internet service may be shown in a list along
with terrestrial, cable, and satellite servicesby
utilizing service information subscribed to SDLT

# FIG. 8

```
                    ┌──────────────┐
                    │  Receiver ON  │
                    └──────┬───────┘
                           │
                           ▼
                      ╱─────────────╲                No
              ╱──────────────────────────╲──────────────────────┐
              ╲   Broadband connected?    ╱                      │
                      ╲─────────────╱                            │
                           │ Yes                                 │
                           ▼                                     ▼
       Yes          ╱─────────────╲                        ╱──────────────────╲         No
   ┌────────────────────────────────────╲            ╱──────────────────────────╲────────────┐
   │           ╲   Client Embedded App Present?  ╱    ╲  DVB-T/S/C Tuner Embedded?  ╱          │
   │                 ╲─────────────╱                        ╲──────────────────╱              │
   │                       │ No                                   │ Yes                       │
   │                       ▼                                      ▼                           ▼
   │          ┌─────────────────────────┐            ┌────────────────────┐      ┌────────────────────┐
   │          │ App Download from App Store │          │  DVB-T/S/C Service  │      │ No Available Service│
   │          └───────────┬─────────────┘            └────────────────────┘      └────────────────────┘
   │                      │
   └──────────────────────┤
                          ▼
               ┌──────────────────┐    ┌──────────────────┐    ┌──────────────────┐
               │  SDLT Request to  │───▶│  SDLT Response    │───▶│  SDLT Response    │
               │ Broadband Server  │    │ from Broadband    │    │ from Broadband    │
               │                   │    │ Server Parsing    │    │ Server Parsing    │
               └──────────────────┘    └──────────────────┘    └────────┬─────────┘
                                                                         │
                                                                         ▼
                                                                ╱──────────────────╲      No
                                                          ╱──────────────────────────╲────────────┐
                                                          ╲  DVB-T/S/C Tuner Embedded?  ╱          │
                                                                ╲──────────────────╱              │
                                                                      │ Yes                       ▼
                                                                      ▼             ┌────────────────────┐
                                                          ┌────────────────────┐    │  DVB-I Service Only │
                                                          │  DVB-T/S/C/I Service │    └────────────────────┘
                                                          └────────────────────┘
```

# FIG. 9

| Element or Attribute Name | Use | Data Type | Format |
|---|---|---|---|
| ServiceDiscoveryListTable | 1 | | Root element |
| Service | 1..N | | |
| serviceId | 1 | unsignedShort | Number that uniquely identifies this service within the scope of the originalNetworkId. |
| globalServiceId | 0..1 | uri | Globally unique service identifier. It is mapped with the global service id in the ESG. For the traditional DVB-C/S/T service, this attribute is not present. |
| originalNetworkId | 1 | unsignedShort | Number that uniquely identifies the original network which this service was originally generated. |
| transportStreamId | 0..1 | unsignedShort | Number that uniquely identifies the transport stream. This attribute should be present in the traditional DVB-C/S/T service, but it may not be present for the DVB-I service with ISO BMFF format. |
| serviceCategory | 1 | unsignedByte | The category of this service. It can be linear, on-demand, or application service. More detail is listed in the table below. |
| SvcSeqNum | 1 | unsignedByte | Version of service information in this table – increments by one for each new version of service data in RFD; wraps around to 0. |
| contentFormat | 0..1 | unsignedByte | The format of contents of this service |
| svcInetUrl | 0..N | anyURI | URL to access signaling/ESG objects. |
| urlType | 1 | unsignedShort | Type of files available with this URL (See ) |

# FIG. 10

| serviceCategory | Meaning |
|---|---|
| 0 | Not used |
| 1 | Linear TV Service |
| 2 | Linear Radio Service |
| 3 | VoD Service |
| 4 | App Service |
| 5 | ESG Service |
| 6 | Data Service |
| 7-255 | Reserved for the future use |

# FIG. 11

| contentFormat | Meaning |
|---|---|
| 0 | Not used |
| 1 | TS |
| 2 | ISO BMFF |
| 3 | CMAF |
| 4-255 | Reserved for the future use |

# FIG. 12

| urlType | Meaning |
|---|---|
| 0 | Not used |
| 1 | URL of Service Signaling Server |
| 2 | URL of ESG server (providing access to the ESG data) |
| Other values | Reserved for the future use |

# FIG. 13

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| urlType | 1 | unsignedByte | Type of files available with this URL |
| Service | 1..N | | Service information |
| serviceId | 1 | unsignedShort | Number that uniquely identifies this service within the scope of the originalNetworkId. |
| globalServiceId | 0..1 | uri | Globally unique service identifier. It is mapped with the global service id in the ESG. For the traditional DVB-C/S/T service, this attribute is not present. |
| originalNetworkId | 1 | unsignedShort | Number that uniquely identifies the original network which this service was originally generated. |
| transportStreamId | 0..1 | unsignedShort | Number that uniquely identifies the transport stream. This attribute should be present in the traditional DVB-C/S/T service, but it may not be present for the DVB-I service with ISO BMFF format. |
| serviceType | 1 | unsignedByte | The category of this service. It can be linear, on-demand, or application service. More detail is listed in the table below. |
| SvcSeqNum | 1 | unsignedByte | Version of service information in this table – increments by one for each new version of service data in RFD; wraps around to 0. |
| contentFormat | 0..1 | unsignedByte | The format of contents of this service(See Table 8.4) |
| svcInetUrl | 0..N | anyURI | URL to access signaling/ESG objects for this service. |
| urlType | 1 | unsignedByte | Type of files available with this URL |

# FIG. 14

| Terms | Meaning |
|---|---|
| <service_id> | Identifies desired service |
| normal\|diff\|template | Identifies desired mode of files |
| current\|next | Identifies desired current/next version |
| list_of_signaling_object_types | space separated string of string tokens defined in Table 8.8. |

# FIG. 15

| object_type value | Description |
| --- | --- |
| ALL | All metadata objects for requested service(s) |
| USBD | USBD for requested service(s) |
| MPD | DASH MPD for requested service(s) |
| NIT | Network Information Table |
| BAT | Bouquet Association Table |
| SDT | Service Description Table |
| AIT | Application Information Table |
| DWD | Distribution Window Description |
| ------ | All other values DVB Reserved. |

# FIG. 16

16030

16050

Broadband Server
https://bb1.com

/I/sldt
/T/sldt
/S/sldt

Broadband Server
https://aaa.bbb.com/

0x2107
0x2108
...

16020

16040

16070

④ 0x2107
Signaling object

① https://bb1.com/I/sldt

②

16060

```
<SDLT>
<SdltInetUrl @ urlType=1>
http://aaa.bbb.com/
</SdltInetUrl>
<Service@serviced=0x2107/>
<Service@serviced=0x2108/>
...
</SDLT>
```

③ https://aaa.bbb.com/0x2107/ALL

App
https://bb1.com/[?query]/sldt

16010

16000

# FIG. 17

Broadband Server
https://bb1.com

⑤ Requesting Service Id
0x2107 signaling using
SdltInetURL type=1

⑥ Response with service signaling
value corresponding to service 33-7

This receiver does not support terrestrial,
cable or satellite services

Would you like to see a list of Internet services?

| Yes | No |

③ Showing
Internet service
list using
SDLT

33-7 ⓘ BB HD
KBS Sports (LG:DOOSAN)

33-8 ⓘ BB HD
MBC Sports (KIA:HANHWA)

④ Selecting service 33-7

② Selecting Channel List Icon

① SDLT example including only Internet
services that the receiver has

```
<SDLT>
    <SdltInetUrl @ urlType=1>
        http://bb1.com/
    </SdltInetUrl>
    <Service@serviced=0x2107/>
    <Service@serviced=0x2108/>
    ...
</SDLT>
```

# FIG. 18

```
<xs:complexType name="metadataEnvelopeType">
    <xs:sequence>
        <xs:element name="item" type="metadataEnvelopeItemType" maxOccurs="unbounded"/>
    </xs:sequence>
</xs:complexType>

<xs:complexType name="metadataEnvelopeItemType">
    <xs:sequence>
            <xs:element name="metadataFragment" type="xs:string" minOccurs="0"/>
            <xs:any namespace="##other" processContents="lax" minOccurs="0" maxOccurs="unbounded"/>
    </xs:sequence>
    <xs:attribute name="metadataURI" type="xs:anyURI" use="required"/>
    <xs:attribute name="version" type="xs:positiveInteger" use="required"/>
    <xs:attribute name="validFrom" type="xs:dateTime" use="optional"/>
    <xs:attribute name="validUntil" type="xs:dateTime" use="optional"/>
    <xs:attribute name="contentType" type="xs:string" use="optional"/>
    <xs:attribute name="nextUrlAvailableTime" type="xs:dateTime" use="optional"/>
    <xs:attribute name="nextUrl" type="xs:anyURI" use="optional"/>
    <xs:anyAttribute processContents="skip"/>
</xs:complexType>
```

# FIG. 19

19030

Broadband Server
https://aaa.bbb.com

0x2107

0x2108

....

① https://aaa.bbb.com
/0x2107/ALL

② 0x2107
Signaling object

19000

19040

19010

```
<SDLT>
  <SdltlnetUrl@urlType=1>
    https://aaa.bbb.com/
  <SdltlnetUrl>
  <Service@serviceId=0x2107/>
  <Service@serviceId=0x2108/>
  ....
<SDLT>
```

```
<metadataEnvelope>
    <item @metadataURI = USBD.xml
        @version = 10
        @validUntil = 2018-08-10T12:00:00Z
        @nextUrl=http://aaa.bbb.com/0x2107/nextUSBD.xml
        @nextUrlAvailableTime=2018-08-10T00:00:00Z>
      <metadataFragment>
        <UserServiceBundleDescription>...
      </metadataFragment>
    </item>
    <item @metadataURI=MPD.xml
        @version = 7
    ...
</metadataEnvelope>
```

# FIG. 20

# FIG. 21

| Element or Attribute Name | Use | Data Type | Format |
|---|---|---|---|
| UserServiceBundleDescription | | | Root element of the User Service Bundle Description for DVB-I. |
| UserServiceDescription | 1 | | A single instance of a DVB-I Service. |
| @serviceId | 1 | unsignedShort | Reference to corresponding service entry in the SDLT. |
| @globalServiceId | 0..1 | anyURI | Globally unique service identifier. Reference to corresponding service entry in the ESG (Electronic Service Guide) information. |
| @serviceCategory | 1 | unsignedByte | The category of this service. It can be linear TV, linear Radio, on-demand, or application service. More detail is listed in the table below. |
| @hidden | 0..1 | boolean | Indicates whether this service is hidden in the service list or shown to users. The default value is 'FALSE'. |
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| DeliveryMethod | 0..N | | Container of transport-related information pertaining to the contents of the service over broadcast and (optionally) broadband modes of access. |
| BroadcastAppService | 0..N | | A DASH Representation delivered over broadcast containing the corresponding media component(s) belonging to the DVB-I Service. |
| BasePattern | 1..N | string | A character pattern for use by the DVB-I receiver to match against any portion of the Segment URL used by the DASH Client to request DASH Media Segments of a parent DASH Representation. |
| UnicastAppService | 0..N | | A DASH Representation delivered over broadband containing the constituent media content component(s) belonging to the DVB-I Service. |
| BasePattern | 1..N | string | A character pattern for use by the DVB-I receiver to match against any portion of the Segment URL used by the DASH Client to request DASH Media Segments of a parent DASH Representation. |

# FIG. 22

| RunningStatus | Meaning |
|---|---|
| 0 | Not used |
| 1 | Running |
| 2 | Not Running |
| 3 | Pausing |
| 4 | Starts in a few seconds |
| 5 | Service off-air |
| 6-255 | Reserved for the future use |

# FIG. 23

Broadband Server
https://bb1.com

③ Requesting USBD of Service Id 0x2107 using SdltInetURL type=1

④ USBD response corresponding to service 33-7

```
<USBD>
    <USD @serviceCategory=Linear A/V
        @serviceId = 0x2107
        @globalServiceId = "urn:dvb-i : 0x2107 : KBSSports"
        @MediaPresentationDescription =
            "http://bb1.com/KBSsports33-7.mpd">
    <Name @lang=eng> KBS Sports </name>
    ...
    <DeliveryMethod>
        <UnicastAppService>
            <BasePattern>http://bb1.com/33-7/sports/
        </UnicastAppService>
    </DeliveryMethod>
    ...
    </USD>
</USBD>
```

⑤ 33-7 MPD Request/Response

| 33-7 | ⓘ BB HD KBS Sports (LG:DOOSAN) |
| 33-8 | ⓘ BB HD MBC Sports (KIA:HANHWA) |

SDLT example including only Internet services that the receiver has

① Showing Internet service list using SDLT

② Selecting service 33-7

```
<SDLT>
    <SdltInetUrl @ urlType=1>
        http://bb1.com/
    </SdltInetUrl>
    <Service@serviced=0x2107/>
    <Service@serviced=0x2108/>
    ...
</SDLT>
```

```
<MPD>
    <period>
        ...
        <AdaptationSet>
            <Representation>
                <BaseURL>http://bb1.com/33-7/sports/
            </Representation>
        </AdaptationSet>
        ...
    </period>
</MPD>
```

EP 4 002 856 A1

# FIG. 24

Broadband Server
https://bb1.com

① 33-7 ① BB HD
KBS Sports (LG:DOOSAN)

② USBD response
corresponding to
service 33-7

③ Providing userwith information related
to service running status and start time

The broadcast starts in 30 seconds.

```
<USBD>
    <USD @serviceCategory=Unear A/V
        @serviceId = 0x2107
        @globalServiceId = "urn:dvb-i : 0x2107 : KBSSports"
        @MediaPresentationDescription =
                "http://bb1.com/KBSsports33-7.mpd">
    ...
        <RunningStatus @duration=30>Pausing</RunningStatus>
    ...
        <DeliveryMethod>
            <UnicastAppService>
                <BasePattern>http://bb1.com/33-7/sports/
            </UnicastAppService>
        </DeliveryMethod>

    ...
    </USD>
</USBD>
```

④ USBD response
corresponding to
service 33-7

```
<MPD>
    <period>

        ...
        <AdaptationSet>
            <Representation>
                <BaseURL>http://bb1.com/33-7/sports/
            </Representation>
        </AdaptationSet>

    ...
    </period>
</MPD>
```

VS
LG          SK

⑤ Playing service in 30 seconds

# FIG. 25

```
           ( Receiver ON )
                 │
                 │  25000
                 ▼
         ◇ Broadband connected? ◇ ──── No ──────────────────┐
                 │                                            │
                Yes                                           │
                 │  25020                                     ▼  25010
                 ▼                                  ◇ DVB-T/S/C Tuner Embedded? ◇ ── No ──┐
 Yes ──◇ Stored service discovery ◇                         │                            │
        │        list present?   │ ◄──┐                    Yes                           │
        │         │                   │                      │                            ▼
        │        No                   │                      ▼                    ┌──────────────────┐
        │         ▼                   │              ┌──────────────────┐        │ No Available     │
        │  ┌─────────────────────┐    │              │ DVB-T/S/C Service│        │    Service       │
        │  │ Perform procedure    │───┘              └──────────────────┘        └──────────────────┘
        │  │ for receiving        │
        │  │ service discovery list│
        │  └─────────────────────┘
        │         │
        ▼         ▼
   ┌──────────────────┐
   │ Selecting service │
   │     by user       │
   └──────────────────┘
            │  25030
            ▼
   ┌──────────────────┐      ┌──────────────┐
   │ USBD request to  │ ───► │ USBD Parsing │
   │ signaling server │      └──────────────┘
   │ indicated by SDLT│              │
   └──────────────────┘              ▼
                         ◇ Service Category=Linear? ◇ ── Yes ──► ┌──────────────┐ ──► ┌──────────────┐
                                     │                            │ MPD request/  │    │ Linear A/V   │
                                    No                            │     get       │    │ Service Play │
                                     ▼                            └──────────────┘    └──────────────┘
                         ◇ appRendering=true? ◇ ── Yes ──► ┌──────────────┐ ──► ┌──────────────┐
                                     │                       │ AIT request/  │    │ Application   │
                                    No                       │     get       │    │    Play       │
                                     ▼                        └──────────────┘    └──────────────┘
                              ┌──────────────┐
                              │ Native App   │
                              │    Play      │
                              └──────────────┘
```

# FIG. 26

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-I service with ISO BMFF format. |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service (See Table 8.4). |
| @hidden | 0..1 | boolean | Indicates whether this service is hidden in the service list or shown to users. The default value is 'FALSE'. |
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 27

| Element or Attribute Name | Use | Data Type | Description |
|---|---|---|---|
| UserServiceBundleDescription | | | Root element of the User Service Bundle Description for DVB-I. |
| UserServiceDescription | 1 | | A single instance of a DVB-I Service. |
| @serviceId | 1 | unsignedShort | Reference to corresponding service entry in the SDLT. |
| @globalServiceId | 0..1 | anyURI | Globally unique service identifier. Reference to corresponding service entry in the ESG (Electronic Service Guide) information. |
| DeliveryMethod | 0..N | | Container of transport-related information pertaining to the contents of the service over broadcast and (optionally) broadband modes of access. |
| BroadcastAppService | 0..N | | A DASH Representation delivered over broadcast containing the corresponding media component(s) belonging to the DVB-I Service. |
| BasePattern | 1..N | string | A character pattern for use by the DVB-I receiver to match against any portion of the Segment URL used by the DASH Client to request DASH Media Segments of a parent DASH Representation. |
| UnicastAppService | 0..N | | A DASH Representation delivered over broadband containing the constituent media content component(s) belonging to the DVB-I Service. |
| BasePattern | 1..N | string | A character pattern for use by the DVB-I receiver to match against any portion of the Segment URL used by the DASH Client to request DASH Media Segments of a parent DASH Representation. |

# FIG. 28

```
      ┌──────────────────────────────────────┐
      │         ┌──────┐┌──────┐              │
      │  33-7   │  BB  ││  HD  │ KBS Sports (LG:DOOSAN) │
      │         └──────┘└──────┘              │
      │         ① This broadcast starts in 30 seconds.●│
      │         ┌──────┐┌──────┐              │
      │  33-8   │  BB  ││  HD  │              │
      │         └──────┘└──────┘   KBS Drama  │
      │                                       │
      │  ///////////////////////////////      │
      └──────────────────────────────────────┘
```

④ Selecting 33-7 by user in 30 seconds

② Providing information related to service running status and start time to the use

⑤ Playing service

```
┌────────────────────────────────────────┐
│ <SDLT>                  ① Providing service │
│   <SdltlnetUrl @urlType=1>    list to user  │
│     http://bb1.com/         using SDLT  │
│   </SdltlnetUrl>                        │
│   </Sernice @serviceId=0×2107           │
│           @serviceCategory=Linear A/V   │
│           @MediaPresentationDesmription =│
│             "http://bb1.com/KBSsports33-7.mpd">│
│       ...                               │
│       ┌ <RunningStatus @duration=30>Pausing</RunningStatus>┐│
│       ...                               │
│   </Sernice>                            │
│   </Sernice @serviceId=0×2108/>         │
│     ...                                 │
│ </SDLT>                                 │
└────────────────────────────────────────┘
```

③ 33-7 Request/ response of MPDand USBD

Broadband Server https://bb1.com

```
              ┌──────────────────────────────────────┐
              │ <MPD>                                │
              │   <period>                           │
┌──────────────────────────┐ ...                    │
│ <USBD>          │         │   <AdaptationSet>      │
│   <USD @serviceId = 0x21  │     <Representation>   │
│       @globalServiceId=   │       <BaseURL>http://bb1.com/33-7/sports/│
│     <DeliveryMethod>      │     </Representation>  │
│       </UnicastAppService │   </AdaptationSet>     │
│       <BasePattern>http   │ ...                    │
│     </UnicastAppService   │   </period>            │
│     <DeliveryMethod>      │ </MPD>                 │
│     ...                   └──────────────────────────────────────┘
│   </USD>                  │
│ </USBD>                   │
└──────────────────────────┘
```

# FIG. 29

```
                    ┌──────────────┐
                    │  Receiver ON │
                    └──────┬───────┘
                           │         29000
                           ▼
              ╱─────────────────────╲        No
             ╱  Stored Service Discovery ╲──────────┐
             ╲   List Present?        ╱              │
              ╲─────────────────────╱               │
                     │ Yes                           │
                     ▼                               ▼
        ┌──────────────┐    ┌──────────────────┐
        │   Selecting  │◄───│ Perform Procedure│    ╱─────────────────────────╲   No
        │ Service by   │    │ for Receiving    │───▶│ DVB-T/S/C Tuner Embedded? ╲──────┐
        │    User      │    │ Service Discovery│    ╲─────────────────────────╱       │
        └──────┬───────┘    │     List         │            │ Yes                     │
               │            └──────────────────┘            ▼                         ▼
               │  29010                          ┌──────────────────┐   ┌──────────────────┐
               ▼                                 │  DVB-T/S/C Service│   │ No Available     │
      ╱─────────────────╲           No           └──────────────────┘   │    Service       │
     ╱ Internet-based    ╲──────────────────────────────                └──────────────────┘
     ╲    Service?       ╱
      ╲─────────────────╱
               │ Yes
               │  29020
               ▼
      ╱─────────────────╲      Yes    ┌──────────────┐    ┌──────────────┐
     ╱ Service Category   ╲──────────▶│ MPD request/ │───▶│  Linear A/V  │
     ╲    =Linear?        ╱           │     get      │    │ Service Play │
      ╲─────────────────╱             └──────────────┘    └──────────────┘
               │ No
               │  29030
               ▼
      ╱─────────────────╲      Yes    ┌──────────────┐    ┌──────────────┐
     ╱ appRendering=true? ╲──────────▶│ AIT request/ │───▶│ Application  │
     ╲                    ╱           │     get      │    │     Play     │
      ╲─────────────────╱             └──────────────┘    └──────────────┘
               │ No
               ▼
        ┌──────────────┐
        │ Native App   │
        │    Play      │
        └──────────────┘
```

# FIG. 30

| Element or Attribute Name | | | Use | Data Type | Format |
|---|---|---|---|---|---|
| LocationInfo | | | 0..N | LocationInfoType | An element that may indicate various types of location information |
| | Region | | 0..N | RegionType | Providing location information about a region by indicating country name and city name to |
| | | @isoCountryCode | 1 | string | This is an alphabet character value in 2 bytes representing the country name and must have a value defined in ISO 3166-1 |
| | | City | 0..N | string | Indicates the name of a city registered in the country. If the value of this element is not present, the entire country is indicated. |
| | | @lang | 1 | lang | Indicates the language in which the city name is displayed |
| | Circle | | 0..N | | Location information represented by circle |
| | | @lat | 1 | string | Represents a character string indicating a latitude from -90 (South) to 90 (North). It can be indicated in decimal degrees. |
| | | @lng | 1 | string | Represents a character string indicating a longitude from Greenwich Meridian. -180 (West) to 180 (East). It can be indicated in decimal degrees. |
| | | @radius | 1 | unsignedInt | Indicates the radius of a circle in meters |
| | Square | | 0..N | | Location information represented by a rectangle |
| | | @swLat | 1 | string | Southwest latitude |
| | | @swLng | 1 | string | Southwest longitude |
| | | @neLat | 1 | string | Northeast latitude |
| | | @neLng | 1 | string | Northeast longitude |
| | PolyGone | | 0..N | listOfString | Location information represented by a polygon. It is composed of a (latitude, longitude) string list as many as the value of @numOfPoints. Each position represents the vertex of the polygon. |
| | | @numOfPoints | 1 | unsignedByte | Number of vertices of polygon |
| | IPaddressScope | | 0..N | | Indicates the scope of region information allocated as an IP address value. |
| | | @version | 1 | unsignedByte | Version of IP address value. 4 or 6. |
| | | @startIpAddr | 1 | string | An IP address value that matches the version. This value represents the IP address value of the start of the scope. |
| | | @endIpAddr | 1 | string | An IP address value that matches the version. This value represents the IP address value of the end of the scope. |

# FIG. 31

31000

| Element or Attribute Name | Use | Data Type | Format |
|---|---|---|---|
| ServiceDiscoveryListTable | 1 | | Root element |
| ... (omitted) | | | |
| LocationInfo | 0..N | LocationInfoType | An element value that may indicate various types of location information. It indicates location information corresponding to all services included in SDLT. |
| Service | | | |
| @serviceId | 1 | unsignedShort | Number that uniquely identifies this service |
| ... (omitted) | | | |
| LocationInfo | 0..N | LocationInfoType | An element value that may indicate various types of location information. It indicates location information related to this service. |
| ... (omitted) | | | |

31010

# FIG. 32

③ User selects
selectable service in
filtered service list

② A service list
may be configured by
comparing the location
information about the receiver
as indicated by the
LocationInfo element

| 33-7 | Paris News |
|---|---|
| 33-8 | Versailles News<br>This broadcast is only available<br>in Versailles. |

```
<SDLT>
  <LocationInfo>
    <Region@isoCountryCode=FR/>
  </LocationInfo>
  <Service@serviceId=0x2107 ...>
...
    <LocationInfo>
      <Region@isoCountryCode=FR>
        <City @lang=fra>Paris</City>
      </Region>
    </LocationInfo>
...
  </Service>
  <Service@serviceId=0x2108 ...>
...
    <LocationInfo>
      <Region@isoCountryCode=FR>
        <City @lang=fra>Versailles</City>
      </Region>
    </LocationInfo>
...
  </Service>
</SDLT>
```

① Providing service
list to user using
SDLT

| 33-7 | Paris News<br>This broadcast is only available in Paris. |
|---|---|
| 33-8 | Versailles News |

③ User selects
selectable service in
filtered service list

② A service list may be configured
by comparing the location
information about the receiver as
indicated by the LocationInfo element.

# FIG. 33

```
                    ⬭ Receiver ON ⬭
                          │
                          ▼              330000
                    ╱─────────────╲
                  ╱  Stored Service  ╲        No
                 ⟨ Discovery List Present? ⟩──────────┐
                  ╲                 ╱                   │
                    ╲─────────────╱                     │
                          │                             │
                         Yes                            │
                          │                             ▼
           ┌──────────────────────┐      ┌──────────────────────┐
           │   Acquire Region     │      │   Perform Procedure   │
           │    Information       │◄─────│ for Receiving Service │
           │ for Each SDLT Service│      │   Discovery List      │
           └──────────────────────┘      └──────────────────────┘
                          │
                          ▼              330010
                    ╱─────────────╲                ┌──────────────┐   ┌─────────────────────────┐
                  ╱  Receiver Region ╲     No       │ All Services │   │  Select Service That    │
                 ⟨ Information Extractable? ⟩───────►│Are Selectable│──►│ Does Not Match Local    │
                  ╲                 ╱                └──────────────┘   │Information Provided by SDLT│
                    ╲─────────────╱                                     └─────────────────────────┘
                          │                                                        │
                         Yes                                                       │
                          │              330020                                    │
                          ▼                              ┌──────────────┐          ▼
                    ╱─────────────╲                      │Disallow User to│  ┌──────────────────┐
                  ╱   Included in   ╲        No           │Select Service in│  │Notification that the│
                 ⟨ SDLT Region Information? ⟩────────────►│  Service List  │  │Service is Unavailable│
                  ╲                 ╱                     └──────────────┘  └──────────────────┘
                    ╲─────────────╱
                          │
                         Yes
                          │
                   ┌──────────────┐
                   │ Allow User to │
                   │Select Service in│
                   │ Service List  │
                   └──────────────┘
                          │
                          ▼              38010
                    ⬭ Service Play ⬭
```

# FIG. 34

B1: Content Guide Data

C1: Content Guide Query

Content Guide Server(s)

B2: URLs for guide server

C2: Content Guide Data

A2: Aggregated Service List

Service List Server(s)

D: Service List Fragments

Broad caster(s)

A1: Service List Query

34010

E1: URLs for MPDs

DVB-I Player

F1: Request for DASH MPD

MPD Server(s)

F2: DASH MPD

34020

G: URLs for media

H1: Request for Media

Stream Server(s)

H2: Unicast DASH

Z1: Unicast DASH

34030

Stream Server(s)

Y1: Multicast

Stream Server(s)

Y2: Unicast Repair

34000

FIG. 35

| Metadata Envelope | | | | | | | |
|---|---|---|---|---|---|---|---|

| Metadata Envelope (XML) | | | | | | | |
|---|---|---|---|---|---|---|---|
| | MultiPart container | service list #1 | MultiPart container | service list #2 | MultiPart container | service list #3 | MultiPart container | service list #4 |

# FIG. 36

```
<xs:complexType name="metadataEnvelopeType">
    <xs:sequence>
        <xs:element name="item" type="metadataEnvelopeItemType" maxOccurs="unbounded"/>
    </xs:sequence>
</xs:complexType>
<xs:complexType name="metadataEnvelopeItemType">
    <xs:sequence>
            <xs:element name="metadataFragment" type="xs:string" minOccurs="0"/>
            <xs:any namespace="##other" processContents="lax" minOccurs="0" maxOccurs="unbounded"/>
    </xs:sequence>
    <xs:attribute name="metadataURI" type="xs:anyURI" use="required"/>
    <xs:attribute name="version" type="xs:positiveInteger" use="required"/>
    <xs:attribute name="validFrom" type="xs:dateTime" use="optional"/>
    <xs:attribute name="validUntil" type="xs:dateTime" use="optional"/>
    <xs:attribute name="contentType" type="xs:string" use="optional"/>
    <xs:attribute name="nextUrlAvailableTime" type="xs:dateTime" use="optional"/>
    <xs:attribute name="nextUrl" type="xs:anyURI" use="optional"/>
    <xs:anyAttribute processContents="skip"/>
</xs:complexType>
```

# FIG. 37

multipart / related container

```
--DVB_DITS_servicecediscovery_fragment_boundary
Content-Location : 1041_9_envelope.xml
Content-ID : <DVB_DITS_servicediscovery_metadata_envelope>
Content-Type : application / DITS-servicediscovery_medataenvelope + xml ; charset = UTF-8
```

Service list metadata envelop

```
<?xml version="1.0" encoding="UTF-8" standalone="no"?>
<metadataEnvelope><item metadataURI = "1041_9_SDIT.xml" version="3" contentType="application/DITS-1-2-3+xml"/>
<item metadataURI="1041_9_SDIT.xml" version="171" contentType="application/DITS-4-5-6+xml"/>
<item metadataURI="1041_9_SDIT.xml" version="63" contentType="application/DITS-3-6-9+xml"/>
<item metadataURI="1041_9_SDIT.xml" version="0" contentType="application/DITS-10-20-30+xml"/></metadataEnvelope>
```

# FIG. 38

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-I service with ISO BMFF format. |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service(See Table 8.4). |
| @hidden | 0..1 | boolean | Indicates whether this service is hidden in the service list or shown to users. The default value is 'FALSE'. |
| @selectable | 0..1 | boolean | |
| @hidden(visible)_guide | 1 | unsignedByte | |
| @hidden(visible)_presentation | 0..1 | anyURI | |
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the service. |
| @lang | 1 | lang | Language of the service name. |
| ServiceLanguage | 0..N | lang | Available languages of the service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 39

|  | Hidden (=0) | Hidden (=1) |
|---|---|---|
| hide_guide (=0) | - When Hidden=0, the hide_guide flag is ignored.<br>- Logical channel visible<br>- Visible even in EPG/ESG | - Logical channel is skipped during channel surfing.<br>- It is indicated as if it is not defined even when the direct channel entry is accessed.<br>- Logical channel information may be indicated in the EPG according to the value of hide_guide (=0). |
| hide_guide (=1) | - When Hidden=0, the hide_guide flag is ignored.<br>- Logical channel visible<br>- Visible even in EPG/ESG | - Logical channel is skipped during channel surfing.<br>- It is indicated as if it is not defined even when the direct channel entry is accessed.<br>- It can be processed as test signal.<br>- Logical channel information may be indicated in the EPG according to the value of hide_guide (=0).<br>- (New) However, access is allowed in app service. |

# FIG. 40

| Type | Values | hidden(visible)_presentation |
|---|---|---|
| 0x0000 | Rendering by device | |
| 0x0001 | Alternative link of Service provider | www.bbc.co.kr/alternative/music |
| 0x0002 | Linked service(alternative channel) | DVB triplet : /DITS-(OriginalNetworkID) -(TransportStreamID)-(serviceID)<br><br>Ex) Application/DITS-11-20-06 |
| 0x0003 | Stereoscopic channel guide | DVB triplet : /DITS-(OriginalNetworkID) -(TransportStreamID)-(serviceID)<br><br>Ex) Application/DITS-11-20-06 |
| 0x0004 | ESG, BCG(Broadband Content Guide) link | loginformDB.html |
| 0x0005 | Alternative app service | Dedicated channel forapp e.g.) Access to app using AIT |

# FIG. 41

# FIG. 42

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-I service with ISO BMFF format. |
| @LCN | 0..1 | positiveInteger | Logical Channel Number |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service (See Table 8.4). |
| @hidden | 0..1 | boolean | Indicates whether this service is hidden in the service list or shown to users. The default value is 'FALSE'. |
| @selectable | 0..1 | boolean | |
| @hidden(visible)_guide | 1 | unsignedByte | |
| RelatedMaterial | | | |
| @HowRelated:href | | | element with an @href attribute carrying the value |
| MediaLocator | | | |
| MediaURI | 0..1 | anyURI | whose value contains a URI to the XML AIT file or image and whose @contentType attribute carries the value. |

| Element or Attribute Name | Use | Data Type | Format |
|---|---|---|---|
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| Availability | 0..1 | unsignedByte | Specify the status of this service as running, not running or starts in a few seconds, etc.. |
| @ValidFrom | 0..1 | dateTime | The time and date that this service will become or became available. If not specified, it is assumed that the service is already available. |
| @ValidTo | 0..1 | dateTime | The time and date that this service will cease to be available. If not specified, it is assumed that the service will be available indefinitely. |
| @Days | 0..1 | ServiceDaysList | Defines which days of the week the service is available. If not specified then the service is available on all days (e.g. ServiceDays="1 4 7" means that the service is only available on Monday, Thursday and Sunday) |
| @Recurrence | 0..1 | unsignedInt | Specifies the weekly cadence of the scheduled availability for the service. If not specified then the recurrence occurs every week. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 43

```
<RelatedMaterial xsi:type="tva2:ExtendedRelatedMaterialType">
    <!-- 19: Promotional still image -->
    <HowRelated href="urn:tva:metadata:cs:HowRelatedCS:2012:19"/>
    <MediaLocator>
        <MediaUri contentType="image/png">
            http://img-ctv.digitaluk.co.uk/channel7/service_a_linear.png
        </MediaUri>
    </MediaLocator>
    <!-- Alt text -->
    <PromotionalText>Service A</PromotionalText>
</RelatedMaterial>
<RelatedMaterial>
    <HowRelated href="urn:tva:metadata:cs:HowRelatedCS:2012:10.5"/>
    <MediaLocator>
        <MediaUri contentType="application/vnd.dvb.ait+xml">
            http://www.channel9.co.uk/player/ait.aitx?channel=channela
        </MediaUri>
    </MediaLocator>
</RelatedMaterial>
```

# FIG. 44

44000

| Today | | 9:00 | 9:30 | 10:00 | 10:30 |
|---|---|---|---|---|---|
| Ch 4 | Channel 4 HD | | Evening news | | |
| Ch 5 | BBC ONE HD | | This week | | |
| Ch 6 | BBC Two UHD | No Service | Perspectives : the magic of Houdini | | |
| Ch 7 | ITV HD | | Dementiaville | | |
| Ch 8 | BBC three HD | | Family Guy | | |
| Ch 9 | Discovery channel | | Life of bear | | |
| . . . | | | | | |
| Ch 1001 | Kingdom | | Kingdom #18 | | |

No Service

6

■ Push the green button in the remote

44010

EP 4 002 856 A1

# FIG. 45

**DVBI Service List Type**
+ Name: mpeg7:TextualType
+ ProviderName: mpeg7:TextualType
+ Name: mpeg7:TextualType

— Service —

**DVBI Service List Type**
+ Uniqueidentifier: dvbisd:ServiceidentifierType
+ ServiceName: mpeg7:TextualType
+ ProviderName:mpeg7:textualType
+ RelatedMaterial: tva:RelatedMaterialType
+ ServiceGenre: dvbisd-base:genre
+ ServiceType: dvbisd-base:ServiceType
(deleted)
+ GuideSource: dvbisd-basd:BCGOffering

Serviceinstance

**ServiceinstanceType**
+ DisplayNate:dvbisd:TextualType
+ RelatedMaterial:tva:RelatedMaterialType
+ DRMSystemid:string
+ ContentAttributes:dvbisd-base:ContentAttributesType
+ Availabillty:dvbisd:ServiceAvailalltyType
+ SubscriptionPackage[]:string
+ SourceType:xc:anyUrl(for a URN)
+ priority:Integer

**Proposed SourceType URNs:**
um:dvb:source:dvb_t
um:dvb:source:dvb_s
um:dvb:source:dvb_c
um:dvb:source:dvb_iptv
um:dvb:source:dvb_dash

A source type of dvb_t requlres DVBTDeliveryParameters. RTSP or MulticastTS delivery parameters could be provided in addition. Similarly for dvb_s and dvb_c.
A source type of dvb_iptv requlres RTSP and/or MuilicastTS delivery parameters.
A source type of dvb_dash requlres DASHDeliveryParameters and in future could have multicast ABR delivery parameters.

**LCNTableListType**

Guide data source could alternatively be ilsted in the ServiceList and referenced from here

**LCNTableListType**
+ SubscriptionPackage[]:string
+ LCN[]

Can link to zero or more subscription packages

Reference regions by the same method as in other cases

At least one of

**DVBTDeliveryParametersType**
+ DVBTriplet: dvbisd:DVBTriplet
etc. (stuff to add here for linkage)

**DVBTDeliveryParametersType**
+ DVBTriplet: dvbisd:DVBTriplet
etc. (stuff to add here for linkage)

**DVBTDeliveryParametersType**
+ DVBTriplet: dvbisd:DVBTriplet
etc. (stuff to add here for linkage)

**RTSPDeliveryParametersType**
+ DVBTriplet: dvbisd:DVBTriplet
+ RTSPURL:dvbisd-base:RTSPUR
+ MinimumBitRate:unsignedint

**MulticastTSDeliveryParametersType**
+ DVBTriplet: dvbisd:DVBTriplet
+ IPMulticastAddress: dvbisd-base:i
+ MinimumBitRate:unsignedint

**DASHDeliveryParametersType**
+ UrlBasedLocation:dvbisd-base:dv
+ MinimumBitRate:unsignedint

**xs:any**

extensibility- can use other types here for future delivery mechanisms

**region**
+ RegionName:mpeg7: etc.

Service Instances no longer have target regions. Editoriaily different regional varla nts are diffenrent services.

Can have an LCNTable covering many Regions

Elements In pink have been renamed to match their purpse
Other changes in blue

FIG. 46

```
<element name="ServiceList" type="dvbisd:DVBiServiceListType"/>
<complexType name="DVBiServiceListType">
  <sequence>
    <element name="Name" type="mpeg7:TextualType" maxOccurs="unbounded"/>
    <element name="ProviderName" type=" mpeg7:TextualType " maxOccurs="unbounded"/>
    <element name="RelatedMaterial" type="tva:RelatedMaterialType" minOccurs="0" maxOccurs="unbounded"/>
    <element name="RegionList" type="dvbisd:RegionListType" minOccurs="0"/>
    <element name="TargetRegion" type="dvbisd:RegionIdRefType" minOccurs="0" maxOccurs="unbounded"/>
    <element name="LCNTableList" type="dvbisd:LCNTableListType" minOccurs="0"/>
    <element name="Service" type="dvbisd:DVBiServiceType" minOccurs="0" maxOccurs="unbounded"/>
    <any namespace="##other" processContents="lax" minOccurs="0" maxOccurs="unbounded"/>
  </sequence>
  <attribute name="version" type="positiveInteger" use="required"/>
</complexType>
```

# FIG. 47

| Name | Semantic Definition | Constraints |
|---|---|---|
| ServiceList | A list of the details and locations of IP services offered by the service provider. A service provider can divide their services into multiple service lists for administrative convenience. | Mandatory |
| Name | The name of this service list in a human readable form. Multiple service list names can be specified as long as they have different xml:lang values. | Mandatory 1 .. ∞ |
| ProviderName | The name of the provider of this service list in a human readable form. Multiple values for the provider name can be specified as long as they have different xml:lang values. | Mandatory 1 .. ∞ |
| RelatedMaterial | Additional material related to the service. Use to signal the following<br>  • Service list logos, see clause 5.2.5.1 | Optional 0 .. ∞ |
| RegionList | A list of geographic regions with logical identifiers that are used to provide regionalization of the service list or services in the service list. | Optional |
| TargetRegion | The identifiers of those regions specified in the RegionList for which this service list is targeted. | Optional 0 .. ∞ |
| LCNTableList | The list of tables that define regionalized and packaged logical channel numbers for the services in this service list. | Optional |
| Service | The services that are part of this service list. | Optional 0 .. ∞ |
| @version | The version number of the service list. Must be incremented for every published change. | Mandatory |

# FIG. 48

```
<complexType name="DVBiServiceType">
  <sequence>
    <element name="UniqueIdentifier" type="dvbisd:ServiceIdentifierType"/>
    <element name="ServiceInstance" type="dvbisd:ServiceInstanceType" minOccurs="0" maxOccurs="unbounded"/>
    <element name="TargetRegion" type="dvbisd:RegionIdRefType" minOccurs="0" maxOccurs="unbounded"/>
    <element name="ServiceName" type="mpeg7:TextualType" maxOccurs="unbounded"/>
    <element name="ProviderName" type="mpeg7:TextualType" maxOccurs="unbounded"/>
    <element name="RelatedMaterial" type="tva:RelatedMaterialType" minOccurs="0" maxOccurs="unbounded "/>
    <element name="ServiceGenre" type="dvbisd-base:Genre" minOccurs="0"/>
    <element name="ServiceType" type="dvbisd-base:ServiceType" minOccurs="0"/>
    <element name="RecordingInfo" type="tva:ControlledTermType" minOccurs="0"/>
    <element name="GuideSource" type="dvbisd-base:BCGOffering" minOccurs="0"/>
  </sequence>
  <attribute name="version" type="positiveInteger" use="required"/>
</complexType>
```

# FIG. 49

| Name | Semantic Definition | Constraints |
|---|---|---|
| UniqueIdentifier | The unique ID of the service. This ID should never be changed for a service, even if all other parameters of the service are changed. Refer to clause 5.2.2 for the suitable formats of the service identifier. | Mandatory |
| ServiceInstance | The instances(s) where the A/V content for the service may be found. If multiple elements of this type are present and available (refer to clause 5.2.4), the one with the lowest value of the @priority attribute has the highest priority. All ServiceInstances for a given Service carry the same editorial content. | Optional 0 .. ∞ |
| TargetRegion | The name of the service. Multiple service names can be specified as long as they have different xml:lang values. | Optional 0 .. ∞ |
| ServiceName | The unique ID of the service. This ID should never be changed for a service, even if all other parameters of the service are changed. Refer to clause 5.2.2 for the suitable formats of the service identifier. | Mandatory 1 .. ∞ |
| ProviderName | The name of the provider of this service in a human readable form. This element should include an xml:lang attribute to identify the language being used. | Mandatory 1 .. ∞ |
| RelatedMaterial | Additional material related to the service. Use to signal the following<br>· Out of service banners, see clause 5 .2.4.3<br>· Service related applications, see clause 5 .2.3<br>· Service logos, see clause 5 .2.5.2 | Optional 0 .. ∞ |
| ServiceGenre | The genre of the service. | Optional 0 .. 1 |
| ServiceType | The service type, as defined in ETSI EN 300 468 [6]. | Optional 0 .. 1 |
| RecordingInfo | In some territories this signalling may help a DVB-I client determine whether or not the content from this service may be recorded, time-shifted and/or redistributed. How clients make use of this signalling is not defined by the present document. The value for this element should be taken from the RecordingInfoCS defined in cause 8.3.3. | Optional 0 .. 1 |
| GuideSource | The details of a broadband content guide carrying metadata for this service.The service type, as defined in ETSI EN 300 468 [6]. | Optional 0 .. 1 |
| @version | The version number of the service. Must be incremented for every published change. | Mandatory |

# FIG. 50

```
<complexType name="ServiceInstanceType">
  <sequence>
    <element name="DisplayName" type="mpeg7:TextualType" minOccurs="0" maxOccurs="unbounded"/>
    <element name="RelatedMaterial" type="tva:RelatedMaterialType" minOccurs="0" maxOccurs="unbounded"/>
    <element name="DRMSystemId" type="string" minOccurs="0" maxOccurs="unbounded"/>
    <element name="ContentAttributes" type="dvbisd-base:ContentAttributesType" minOccurs="0"/>
    <element name="Availability" type="dvbisd-base:ServiceAvailabilityType" minOccurs="0"/>
    <element name="SubscriptionPackage" type="string" minOccurs="0" maxOccurs="unbounded"/>
    <element name="FTAContentManagement" type="dvbisd:FTAContentManagementType" minOccurs="0"/>
    <element name="SourceType" type="anyURI"/>
    <choice minOccurs="0" maxOccurs="unbounded">
        <element name="DVBTDeliveryParameters" type="dvbisd:DVBTDeliveryParametersType"/>
        <sequence>
          <element name="DVBSDeliveryParameters" type="dvbisd:DVBSDeliveryParametersType"/>
          <element name="SATIPDeliveryParameters" type="dvbisd:SATIPDeliveryParametersType" minOccurs="0"/>
        </sequence>
        <element name="DVBCDeliveryParameters" type="dvbisd:DVBCDeliveryParametersType"/>
        <element name="RTSPDeliveryParameters" type="dvbisd:RTSPDeliveryParametersType"/>
        <element name="MulticastTSDeliveryParameters" type="dvbisd:MulticastTSDeliveryParametersType"/>
        <sequence>
          <element name="DASHDeliveryParameters" type="dvbisd:DASHDeliveryParametersType"/>
          <element name="MulticastTSDeliveryParameters" type="dvbisd:MulticastTSDeliveryParametersType"
            minOccurs="0"/>/>
        </sequence>
        <any namespace="##other" processContents="lax"/>
    </choice>
  </sequence>
  <attribute name="priority" type="integer" default="0"/>
</complexType>
```

# FIG. 51

| Name | Semantic Definition | Constraints |
|------|---------------------|-------------|
| DisplayName | Human-readable name of the service associated to this specific Service Location. Multiple service names may be provided as long as they all have different xml:lang attributes. When not present, ServiceName is used. | Optional 0 .. ∞ |
| RelatedMaterial | Additional material related to the service. Use to signal the following<br>· Out of service banners, see clause 5.2.4.3<br>· Service related applications, see clause 5.2.3<br>· Service logos, see clause 5.2.5.2<br>Any related material with a particular value of HowRelated that is provided within a ServiceInstance element supersedes any corresponding related material with that value of HowRelated that is provided within a Service element. | Optional 0 .. ∞ |
| DRMSystemId | Denotes any content protection schemes being used for this service. The value shall be the same as the @schemeIdURI defined in clause 8.4 of DVB A168 [10] | Optional 0 .. ∞ |
| ContentAttributes | Refer to Annex D.1.3.2 of ETSI TS 103 205 [2] for semantic definition.a | Optional 0 .. 1 |
| Availability | Indicates the period(s) in time when this service location is expected to be active. | Optional 0 .. 1 |
| Subscription Package | Identifies the subscription packages in which this service is included. | Optional 0 .. ∞ |
| FTAContent Management | DVB-I service instances not using DRM may carry a FTAContentManagement element to define the content management policy for the ServiceInstance. The semantics of each attribute are those defined for the correspondingly named fields of the FTA_content_management_descriptor defined in clause 6.2.18.0 of ETSI EN 300 468 [6]. | Optional 0 .. 1 |
| SourceType | Identifies the primary delivery source for this service instance and thus determines the required delivery parameters according to Table 13. | Optional 0 .. 1 |
| DVBTDelivery Parameters | Delivery parameters for DVB-T services. | To be specified in accordance with SourceType as described in Table 13 |
| DVBTDelivery Parameters | Delivery parameters for DVB-S services. | |
| DVBTDelivery Parameters | Delivery parameters for DVB-C services. | |
| RTSPDelivery Parameters | Delivery parameters for RTSP services. | |
| MulticastTSDeli very Parameters | Delivery parameters for services delivered using multicast UDP. | |
| DASHDelivery Parameters | Delivery parameters for services using DVB DASH [10] delivery. | |
| SATIPDelivery Parameters | Provides parameters that a DVB-I client supporting SAT>IP as a "thin client" can use to receive the service instance from a SAT>IP server | |
| @priority | The priority of this service instance relative to the other services instances of the service. | Optional |

FIG. 52

```
[DASHDeliveryParameters]
  <complexType name="DASHDeliveryParametersType">
    <sequence>
      <element name="UriBasedLocation" type="dvbisd-base:dvbExtendedURIType" maxOccurs="unbounded"/>
      <element name="MinimumBitRate" type="unsignedInt" minOccurs="0"/>
    </sequence>
  </complexType>
```

# FIG. 53

| Name | Semantic Definition | Constraints |
|------|---------------------|-------------|
| UriBased Location | Refer to Annex D.1.3.2 of ETSI TS 103 205 [2] for semantic definition. | Mandatory 1 .. ∞ |
| Minimum BitRate | Threshold bit-rate under which an alternative source for the same service should be preferred, if available. | Optional |

# FIG. 54

```
<complexType name="DASHDeliveryParametersType">
    <sequence>
        <element name="UriBasedLocation" type="dvbisd-base:dvbExtendedURIType" maxOccurs="unbounded"/>
        <element name="MinimumBitRate" type="unsignedInt" minOccurs="0"/>
        <element name="ComparisonBitRate" type="unsignedInt" minOccurs="0"/>
        <element name=" ComparisonContentAttributeType " type="dvbisd-base:ContentAttributesType" minOccurs="0"/>

    </sequence>
</complexType>


<complexType name=" ComparisonContentAttributeType ">
    <sequence>
        <element name="AudioAttributes" type="tva:AudioAttributesType" minOccurs="0" maxOccurs="unbounded"/>
        <element name="VideoAttributes " type="tva:VudioAttributesType" minOccurs="0" maxOccurs="unbounded"/>
        <element name="CaptionLanguage" type="tva:CaptionLanguageType" minOccurs="0" maxOccurs="unbounded"/>
        <element name="SignLanguage" type="tva:SignLanguageType" minOccurs="0" maxOccurs="unbounded"/>
    </sequence>
</complexType>
```

# FIG. 55

```
<complexType name="DASHDeliveryParametersType">
    <sequence>
        <element name="UriBasedLocation" type="dvbisd-base:dvbExtendedURIType" maxOccurs="unbounded"/>
        <element name="MinimumBitRate" type="unsignedInt" minOccurs="0"/>
        <element name=" ComparisonContentAttributeType " type="dvbisd-base:ContentAttributesType" minOccurs="0"/>

    </sequence>
</complexType>


<complexType name=" ComparisonContentAttributeType ">
    <sequence>
        <element name="AudioAttributes" type="tva:AudioAttributesType" minOccurs="0" maxOccurs="unbounded"/>
        <element name="VideoAttributes " type="tva:VudioAttributesType" minOccurs="0" maxOccurs="unbounded"/>
        <element name="CaptionLanguage" type="tva:CaptionLanguageType" minOccurs="0" maxOccurs="unbounded"/>
        <element name="SignLanguage" type="tva:SignLanguageType" minOccurs="0" maxOccurs="unbounded"/>
        <element name="ComparisonBitRate" type="unsignedInt" minOccurs="0"/>
    </sequence>
</complexType>
```

# FIG. 56

```
<ServiceInstance priority="0">
    <DisplayName> ABC drama </DisplayName>
    <ContentAttributes>
        <dvbisd-base:AudioAttributes>
            <tva:Coding href="urn:mpeg:mpeg7:cs:AudioCodingFormatCS:2001:3.2">
                <tva:Name>MPEG-1 Audio Layer II</tva:Name>
            </tva:Coding>
        </dvbisd-base:AudioAttributes>
        <dvbisd-base:AudioAttributes>
            <tva:Coding href="urn:dvb:metadata:cs:AudioCodecCS:2007:3.1">
                <tva:Name>AC3</tva:Name>
            </tva:Coding>
        </dvbisd-base:AudioAttributes>
        <dvbisd-base:VideoAttributes>
            <tva:Coding href="urn:mpeg:mpeg7:cs:VideoCodingFormatCS:2001:2.2.2">
                <tva:Name>MPEG-2 Video Main Profile @ Main Level</tva:Name>
            </tva:Coding>
        </dvbisd-base:VideoAttributes>
    </ContentAttributes>
    <SourceType>urn:dvb:source:dvb-s</SourceType>
    <DVBSDeliveryParameters>
        <DVBTriplet origNetId="1" tsId="1101" serviceId="28106"/>
        <OrbitalPosition>19.2</OrbitalPosition>
        <Frequency>1183600</Frequency>
        <Polarization>horizontal</Polarization>
    </DVBSDeliveryParameters>
</ServiceInstance>
```
～～ 56000

```
<ServiceInstance priority="1">
    <DisplayName> ABC drama </DisplayName>
    <SourceType>urn:dvb:source:dvb-dash</SourceType>
    <DASHDeliveryParameters>
        <UriBasedLocation contentType="application/dash+xml">
            <dvbisd-base:URI>https://live.daserste.de/0001 Das%20Erste.mpd</dvbisd-base:URI>
        </UriBasedLocation>
        <MinimumBitrate> 1M </MinimumBitrate>
        <ComparisonBitRate> 7M </ComparisonBitRate>
        <ComparisonContentAttribute>
            <dvbisd-base:VideoAttributes>
                <tva:Coding href="urn:mpeg:mpeg7:cs:VideoCodingFormatCS:2001:2.2.2">
                    <tva:Name>HEVC Video Main10 Profile @ Main Level</tva:Name> : UHD enable
                </tva:Coding>
            </dvbisd-base:VideoAttributes>
        </ComparisonContentAttribute>
    </DASHDeliveryParameters>
</ServiceInstance>
```
～～ 56010

EP 4 002 856 A1

# FIG. 57

57000    57010

## DVB-I use case / UI&UX

```
<Service>
  <LCN = 6>
  <Service Instance : 1>
    <DVBTDeliveryParmeters>
      <source> DVB-T (HD) </source>

      ...
    </<DVBSDDeliveryParameters>>
  <Service Instance : 1>

  <Service Instance : 2>
    <DVBTDeliveryParmeters>
      <source> DVB-I (HD) </source>
    <UriBaselocation>
      <URI>HTTPS:// ch6/UGD_bbc.mpd </URI>
    <minBitRate> 1 </minBitRate>
    <ComparisonBitRate> 7M </ComparisonBitRate)
    <ComparisonContentAttribute> HEVC(UHD available) </ComparisonContentAttribute)
  <Service Instance : 2>
  ...
</Service>
```

57010

# FIG. 58

# FIG. 59

Table 3: Network information section

| Syntax | Number of bits | Identifier |
|---|---|---|
| network_information_section() { | | |
| table_id | 8 | uimsbf |
| section_syntax_indicator | 1 | bslbf |
| reserved_future_use | 1 | bslbf |
| reserved | 2 | bslbf |
| section_length | 12 | uimsbf |
| network_id | 16 | uimsbf |
| reserved | 2 | bslbf |
| version number | 5 | uimsbf |
| current_next_indicator | 1 | bslbf |
| section_number | 8 | uimsbf |
| last_section_number | 8 | uimsbf |
| reserved_future_use | 4 | bslbf |
| network_descriptors_length | 12 | uimsbf |
| for(i=0;i<N;i++){ | | |
| descriptor( ) | | |
| } | | |
| reserved_future_use | 4 | bslbf |
| transport_stream_loop_length | 12 | uimsbf |
| for(i=0;1<N;i++) { | | |
| transport_stream_id | 16 | uimsbf |
| original_network_id | 16 | uimsbf |
| reserved_future_use | 4 | bslbf |
| transport_descriptors_length | 12 | uimsbf |
| for(j=0;j<N;j++) { | | |
| descriptor() | | |
| } | | |
| } | | |
| CRC_32 | 32 | rpchof |
| } | | |

# FIG. 60

Networks: Satellite | Cable | Terrestrial

Multiplexes: (Transponder 1, Transponder 2, Transponder 3, Transponder 4) | (Channel 1, Channel 2, Channel 3) | (Channel 1, Channel 2, Channel 3)

Services: (Service 1, Service 2, Service 3, Service 4) — Bouquet | (Service 1, Service 2, Service 3) | (Service 1, Service 2, Service 3)

Components: Video, Audio1, Audio2, Data

Table 4: Bouquet association section

| Syntax | Number of bits | Identifier |
|---|---|---|
| bouquet_association_section() { | | |
| table_id | 8 | uimsbf |
| section_syntax_indicator | 1 | bslbf |
| reserved_future_use | 1 | bslbf |
| reserved | 2 | bslbf |
| section_length | 12 | uimsbf |
| bouquet_id | 16 | uimsbf |
| neserved | 2 | bslbf |
| version number | 5 | uimsbf |
| current_next_indicator | 1 | bslbf |
| section_number | 8 | uimsbf |
| last_section_number | 8 | uimsbf |
| reserved_future_use | 4 | bslbf |
| bouquet_descriptors_length | 12 | uimsbf |
| for(i=0;i<N;i++){ | | |
| descriptor() | | |
| } | | |
| reserved_future_use | 4 | bslbf |
| transport_stream_loop_length | 12 | uimsbf |
| for(i=0;1<N;i++) { | | |
| transport_stream_id | 16 | uimsbf |
| original_network_id | 16 | uimsbf |
| reserved_futuer_use | 4 | bslbf |
| transport_descriptors_length | 12 | uimsbf |
| for(j=0;j<N;j++) { | | |
| descriptor( ) | | |
| } | | |
| } | | |
| CRC_32 | 32 | rpchof |
| } | | |

# FIG. 61

Table 5: Service description section

| Syntax | Number of bits | Identifier |
|---|---|---|
| service_description_section( ) { | | |
|     table_id | 8 | uimsbf |
|     section_syntax_indicator | 1 | bslbf |
|     reserved_future_use | 1 | bslbf |
|     reserved | 2 | bslbf |
|     section_length | 12 | uimsbf |
|     transport_stream_id | 16 | uimsbf |
|     reserved | 2 | bslbf |
|     version number | 5 | uimsbf |
|     current_next_indicator | 1 | bslbf |
|     section_number | 8 | uimsbf |
|     last_section_number | 8 | uimsbf |
|     original_future_use | 16 | uimsbf |
|     reserved_future_use | 8 | bslbf |
|     for(i=0;1<N;i++) { | | |
|         servece_id | 16 | uimsbf |
|         reserced_future_use | 6 | bslbf |
|         EIT_schedule_flag | 1 | bslbf |
|         EIT_present_following_flag | 1 | bslbf |
|         running_status | 3 | uimsbf |
|         free_CA_mode | 1 | bslbf |
|         descriptors_loop_length | 12 | uimsbf |
|         for(j=0;j<N;j++) { | | |
|             descriptor( ) | | |
|         } | | |
|     } | | |
|     CRC_32 | 32 | rpchof |
| } | | |

# FIG. 62

# FIG. 63

Table 17: Network_ID allocation template

| Network_ID | | Classification | Network Type | Classification(s) of validity | Description |
|---|---|---|---|---|---|
| 0x0000 | | Reserved | all | all | Reserved |
| 0x0001 to 0x2000 | | Unique satellite | satellite | all | 4 096 values reserved for registration through the DVB Project Office (see http://www.dvbservices.com) |
| 0x2001 to 0x3000 | | Unique terrestrial | Terrestrial | all | 4 096 values reserved for registration through the DVB Project Office (see http://www.dvbservices.com) |
| 0x3001 to 0x3600 | | Re-useable terrestrial | Terrestrial | as registered | 1 536 values reserved for registration through the DVB Project Office (see http://www.dvbservices.com) |
| | 0x3001 to 0x3100 | Countries of colour A | Terrestrial | as registered | 256 values |
| | 0x3101 to 0x3200 | Countries of colour B | Terrestrial | as registered | 256 values |
| | 0x3201 to 0x3300 | Countries of colour C | Terrestrial | as registered | 256 values |
| | 0x3301 to 0x3400 | Countries of colour D | Terrestrial | as registered | 256 values |
| | 0x3401 to 0x3500 | Countries of colour E | Terrestrial | as registered | 256 values (to be used only in case of collision) |
| | 0x3501 to 0x3600 | Countries of colour F | Terrestrial | as registered | 256 values (to be used only in case of collision) |
| 0x3601 to 0xA000 | | Reserced for future use | Terrestrial | to be defined | 27 136 values reserved for registration through the DVB Project Office (see http://www.dvbservices.com) |
| 0xA001 to 0xB000 | | Re-useable cable | Cable | as registered | 4 096 values reserved for registration through the DVB Project Office (see http://www.dvbservices.com) |
| 0xF001 to 0xF000 | | Reserced for future use | Cable | to be defined | 16 384 values reserved for registration through the DVB Project Office (see http://www.dvbservices.com) |
| 0xF001 to 0xFF00 | | Unique cable | Cable | all | 3 840 values reserved for registration through the DVB Project Office (see http://www.dvbservices.com) |
| 0xFEC0 to 0xFF00 | | Network Interface Modules | DVC Common Interface [i.10] | all | 64 values for local use by DVB-CI modules |
| 0xFF01 to 0xFFFF | | Temporary private use | Not defined | all | 24 values for temporary private use |

# FIG. 64

Table 159: URI_linkage_descriptor

| Syntax | Number of bits | Identifier |
|---|---|---|
| UTI_linkage_descriptor( ) { | | |
|    descriptor_tag | 8 | uimsbf |
|    descriptor_length | 8 | uimsbf |
|    descriptor_tag_extension | 8 | uimsbf |
|    uri_linkage_type | 8 | uimsbf |
|    uri_length | 8 | uimsbf |
|    for (i=0;i<uri_lengtu;i++) { | | |
|       uri_char | 8 | bslbf |
|    } | | |
|    ir (  (uri_linkage_type == 0x00) | | |
|      \| \| (uri_linkage_type == 0x00) ) { | | |
|       min_polling_interval | 16 | uimsbf |
|    } | | |
|    for (i=0;i<N;i++) { | | |
|       private_data_byte | 8 | bslbf |
|    } | | |
| } | | |

# FIG. 65

| uri_linkage_type | Description |
|---|---|
| 0x00 | Online SDT (OSDT) for CI Plus [i.9] |
| 0x01 | DVB-IPTV SD&S[60] |
| 0x02 | Material Resolution Server(MRS)for companion screen applications [i.10] |
| 0x60 | HbbTV Operation Application |
| 0x61 | Service discovery for Linear Internet channel over broadband network |
| 0x62 | Service discovery for Linear Internet channel over broadcast network |
| 0x03 to 0x7F | reserved for future use |
| 0x80 to 0xFF | user defined |

# FIG. 66

| syntax | # of bits |
|---|---|
| for (i=0;i<N;i++) {<br>  /*private_data_byte*/<br>  Destination_IP_address<br>  Destination_Port<br>  Service_provider_id<br>  Network_operator_id<br>  Instance_TSID<br>} | <br><br>32<br>16<br>16<br>16<br>16 |

# FIG. 67

| syntax | # of bits |
|---|---|
| for (i=0;i<N;i++) { | |
| /*private_data_byte*/ | |
| Info_type | 4 |
| reserved | 4 |
| ICT_PID | 32 |
| ICT_table_id | 8 |
| Service_discovery_URI | 8 |
| Instance_TSID | 16 |
| } | |

# FIG. 68

| syntax | # of bits |
|---|---|
| IP_channel_id_descriptor () | |
| descriptor_tag | 8 |
| descriptor_length | 8 |
| service_provider_ID | 16 |
| network_operator_ID | 16 |
| IP_number | 32 |
| Port_number | 16 |
| Uri_length | 8 |
| for (i=0;i<uri_length;i++) { | |
| Service_discovery_URI | 8 |
| } | |
| Instance_TSID | 16 |

# FIG. 69

**Bouquet 1** — 69001

- **ONID, URI(A)** — 69002
  - service 1   service 2   · · ·
- **TSID, ONID** — 69003
  - service 1   service 2   · · ·
- **ONID, URI(B)** — 69004
  - service 1   service 2   · · ·

· · ·

**Bouquet 2** — 69005

- **ONID, URI(A)** — 69006
  - service 1   service 2   · · ·
- **TSID, ONID** — 69007
  - service 1   service 2   · · ·
- **ONID, URI(c)** — 69008
  - service 1   service 2   · · ·

· · ·

EP 4 002 856 A1

# FIG. 70

62001

<table>
<tr><td colspan="7">TS DEMultiplex</td></tr>
</table>

**TS Packet** → PID=0000? → NO / PAT YES

**TS Packet (2)** → PID=0x10 → NO / NIT YES

Url linkage descritor
descriptor_tag : 0×13
uri_linkage_type=
0×?(CM-I)

....
private_data_byte()
...

**TS Packet** → PID=0x11 → NO / BAT YES

**TS Packet** → PID=0x11 → NO / SDT YES

**PAT**
TSID: TSID1
Prdgram_number:
0X00
network_PID:
0X10
(1) ...

62002

**NIT**
tavle_id : 0x??
network_id: 0x?
descriptor()
Url linkage descritor

...
/* loop over Transport
Streams */
...

(3)

70000

private_data_byte()

extend

(4)

**BAT**
tavle_id : 0x4A
Bouquet_id: 0x??
descriptor()

...
/* loop over Transport
Streams */
transport_stream_id
original_network_id
...

**SDT**
tavle_id : 0x42(main)
Trnasport_Stream_id: 0x??
original_network_id

...
/* loop N */
service_id

EIT_schedule_flag
EIT_persent_following_flag
running_status
...
/* loop N */
descripton()

EP 4 002 856 A1

# FIG. 71

| Syntax | Number of bit | Identifier |
|---|---|---|
| URI_linkage_descriptor() { | | |
|     descriptor_tag | 8 | uimsbf |
|     descriptor_length | 8 | uimsbf |
|     descriptor_tag_extension | 8 | uimsbf |
|     uri_linkage_type | 8 | uimsbf |
|     uri_length | 8 | uimsbf |
|     for (i=0; i<uri_length;i++) { | | |
|         Uri_length | 8 | uimsbf |
|     } | | |
|     if (  (uri_linkage_type == 0×03) | | |
|     } | | |
|       end_point_type | 16 | uimsbf |
|     } | | |
|     for (i=0; i<N ; i++) { | | |
|       private_data_byte | 8 | uimsbf |
|     } | | |
| } | | |

# FIG. 72

| End_point_type | Description |
| --- | --- |
| 0×00 | DVB-I service list location |
| 0×01 | Query to DVB-I Service List Registry |
| 0×02 to 0×FF | reserved for future use |

# FIG. 73

| Syntax | # of bits |
|---|---|
| for (i=0; i<N ; i ++ ) { | |
| /*private_data_byte*/ | |
| Uri_char | 32 |
| for (i = 0; i< Uri_char; i++ ) { | 16 |
| service_list_location | 16 |
| } | 8 |
| } | |

| Syntax | # of bits |
|---|---|
| for (i=0; i<N ; i ++ ) { | |
| /*private_data_byte*/ | |
| query_char | 32 |
| for (i = 0; i< query_char; i++ ) { | 16 |
| query_string | 16 |
| } | |
| } | |

# FIG. 74

TS DEMultiplex

TS Packet → PID=0000? — NO →
(1) PAT ↓ YES

**PAT**
TSID: TSID1
Prdgram_number:
0X00
network_PID:
0X10
...

TS Packet → PID=0x10 — NO →
(2) NIT ↓ YES

**NIT**
tavle_id : 0x40(main)
network_id: 0x2001(T)
descriptor()
...
/* loop over Transport Streams */
transport_stream_id
original_network_id
...

TS Packet → PID=0x10 — NO →
(3) NIT' ↓ YES

**NIT**
tavle_id : 0x41(other)
network_id: 0x?(extend)
descriptor()
...
/* loop over Transport Streams */
...
transport_stream_id
original_network_id
/* loop ts_desc */

TS Packet → PID=0x11 — NO →
BAT ↓ YES

**BAT**
tavle_id : 0x4A
Bouquet_id: 0x??
descriptor()
URI linkage descriptor
...
/* loop over Transport Streams */
transport_stream_id
original_network_id

**URI_linkage_desoriptor()**
desoriptor_tag : 0x13
uri_linkage_type = 0x3)

if(uri_linkage_type
== 0x3)
end_point_type = 0x??
...
private_data_byte()
...

(4)

**private_data_byte()**
Opt1)DVB-I Service List
_URI
Opt1)Query to DVB-I
Service List Registry

(5)

TS Packet → PID=0x11 — NO →
SDT ↓ YES

**SDT**
tavle_id : 0x42(main)
Trnasport_Stream_id: 0x??
original_network_id:
...
/* loop N */
service_id(PMT-program
Number)
EIT_schedule_flag
EIT_persent_following_flag
running_status
...
/* loop N */
descripton()

EP 4 002 856 A1

# FIG. 75

# FIG. 76

76001

76002

76004

Service
provider

HD →

DVB-T,S,C
stream

→

DVB-T,S,C
stream

→

No.x ch

76003

UHD, 8k →

DVB-I
stream

→

DVB-I
stream

→

# FIG. 77

EP 4 002 856 A1

# FIG. 78

| Syntax | Number of bits | Identifier |
|---|---|---|
| linkage_descriptor ( ) { | | |
|     descriptor_tag | 8 | uimsbf |
|     descriptor_length | 8 | uimsbf |
|     transport_stream_id | 16 | uimsbf |
|     original_network_id | 16 | uimsbf |
|     service_id | 8 | uimsbf |
|     linkage_type | | |
|     if (linkage_type == 0x08) { | | |
|         mobile_hand-over_info ( ) | | |
|     } else if (linkage_type == 0x0D) { | | |
|         event_linkage_info ( ) | | |
|     } else if (linkage_type >= 0x0E && linkage_type <= 0x1F) { | | |
|         extended_event_linkage_info ( ) | | |
|     } | | |
|     For (i = 0 ; i < N ; i++) { | | |
|         private_data_byte | | |
|     } | 8 | bslbf |
| } | | |

# FIG. 79

| Syntax | Number of bits | Identifier |
|---|---|---|
| extended_event_linkage_info ( ) { | | |
|     loop_length | 8 | uimsbf |
|     for(i=0;i<N;i++) { | | |
|         target_event_id | 16 | uimsbf |
|         target_listed | 1 | bslbf |
|         event_simulcast | 1 | bslbf |
|         link_type | 2 | uimsbf |
|         target_id_type | 2 | uimsbf |
|         original_network_id_flag | 1 | bslbf |
|         service_id_flag | 1 | bslbf |
|         if (target_id_type = = 3) { | | |
|           user_defined_id | 16 | uimsbf |
|         } else { | | |
|            if (target_id_type = = 1) { | | |
|              target_transport_stream_id | 16 | uimsbf |
|           } | | |
|            if (original_network_id_flag) { | | |
|              target_original_network_id | 16 | uimsbf |
|           } | | |
|            if (service_id_flag) { | | |
|              target_service_id | 16 | uimsbf |
|           } | | |
|         } | | |
|     } | | |
| } | | |

# FIG. 80

| Syntax | Number of bits | Identifier |
|---|---|---|
| /* private_data_byte ()*/<br>    for (i=0;i<N;i++) {<br>        MPD_ID<br>        Adaptationset_id<br>        Representation_id<br>        Base_url<br>        media<br>    }<br>} | <br><br>8<br>8<br>8<br>8<br>8 | <br><br>Bslbf<br>Bslbf<br>Bslbf<br>Bslbf<br>Bslbf |

# FIG. 81

| Type of source event | Type of destination event | linkage_type (see note 1) | link_type (see note 2) | Use-case |
|---|---|---|---|---|
| SD | SD | 0x0E | 0 | Link to alternate event instances also in SD. |
| SD | HD | 0x0E | 1 | Link to event in HD. |
| SD | FC-3DTV | 0x0E | 2 | Link to event in frame compatible plano-stereoscopic. |
| SD | SC-3DTV MVC | 0x0E | 1 | Link to event in service compatible plano-stereoscopic MVC which provides a HD alternative. (see note 3) |
| SD | SC-3DTV MVC | 0x0E | 3 | Link to event in service compatible plano-stereoscopic MVC. |
| SD | UHD | 0x0F | 0 | Link to event in UHD. |
| SD | SFC-3DTV HEVC | 0x0F | 1 | Link to event in service frame compatible plano-stereoscopic. |

| Type of source event | Type of destination event | linkage_type (see note 1) | link_type (see note 2) | Use-case |
|---|---|---|---|---|
| HD | SD | 0x0E | 0 | Link to event in SD. |
| HD | HD | 0x0E | 1 | Link to alternate event instances also in HD. |
| HD | FC-3DTV | 0x0E | 2 | Link to event in frame compatible plano-stereoscopic. |
| HD | SC-3DTV MVC | 0x0E | 3 | Link to event in service compatible plano-stereoscopic MVC. |
| HD | UHD | 0x0F | 0 | Link to event in UHD. |
| HD | SFC-3DTV HEVC | 0x0F | 1 | Link to event in service frame compatible plano-stereoscopic. |

| Type of source event | Type of destination event | linkage_type (see note 1) | link_type (see note 2) | Use-case |
|---|---|---|---|---|
| FC-3DTV | SD | 0x0E | 0 | Link to event in SD. |
| FC-3DTV | HD | 0x0E | 1 | Link to event in HD. |
| FC-3DTV | FC-3DTV | 0x0E | 2 | Link to alternate event instances also in frame compatible plano-stereoscopic. |
| FC-3DTV | SC-3DTV MVC | 0x0E | 1 | Link to event in service compatible plano-stereoscopic MVC which provides a HD alternative. (see note 3) |
| FC-3DTV | SC-3DTV MVC | 0x0E | 3 | Link to event in service compatible plano-stereoscopic MVC. |
| FC-3DTV | UHD | 0x0F | 0 | Link to event in UHD. |
| FC-3DTV | SFC-3DTV HEVC | 0x0F | 1 | Link to event in service frame compatible plano-stereoscopic. |

| Type of source event | Type of destination event | linkage_type (see note 1) | link_type (see note 2) | Use-case |
|---|---|---|---|---|
| SC-3DTV MVC | SD | 0x0E | 0 | Link to event in SD. |
| SC-3DTV MVC | HD | 0x0E | 1 | Link to event in HD. |
| SC-3DTV MVC | FC-3DTV | 0x0E | 2 | Link to event in frame compatible plano-stereoscopic. |
| SC-3DTV MVC | SC-3DTV MVC | 0x0E | 1 | Link to event in service compatible plano-stereoscopic MVC which provides a better HD alternative. (see note 3) |
| SC-3DTV MVC | SC-3DTV MVC | 0x0E | 3 | Link to alternate event instances also in service compatible plano-stereoscopic MVC. |
| SC-3DTV MVC | UHD | 0x0F | 0 | Link to event in UHD. |
| SC-3DTV MVC | SFC-3DTV HEVC | 0x0F | 1 | Link to event in service frame compatible plano-stereoscopic. |

| Type of source event | Type of destination event | linkage_type (see note 1) | link_type (see note 2) | Use-case |
|---|---|---|---|---|
| SFC-3DTV HEVC | SD | 0x0E | 0 | Link to event in SD. |
| SFC-3DTV HEVC | HD | 0x0E | 1 | Link to event in HD. |
| SFC-3DTV HEVC | FC-3DTV | 0x0E | 2 | Link to event in frame compatible plano-stereoscopic. |
| SFC-3DTV HEVC | SC-3DTV MVC | 0x0E | 1 | Link to event in service compatible plano-stereoscopic MVC which provides a better HD alternative. (see note 3) |
| SFC-3DTV HEVC | SC-3DTV MVC | 0x0E | 3 | Link to alternate event instances also in service compatible plano-stereoscopic MVC. |
| SFC-3DTV HEVC | UHD | 0x0F | 0 | Link to event in UHD. |
| SFC-3DTV HEVC | SFC-3DTV HEVC | 0x0F | 1 | Link to alternate event instances also in service frame compatible plano-stereoscopic. |

| Type of source event | Type of destination event | linkage_type (see note 1) | link_type (see note 2) | Use-case |
|---|---|---|---|---|
| UHD | SD | 0x0E | 0 | Link to event in SD. |
| UHD | HD | 0x0E | 1 | Link to event in HD. |
| UHD | FC-3DTV | 0x0E | 2 | Link to event in frame compatible plano-stereoscopic. |
| UHD | SC-3DTV MVC | 0x0E | 3 | Link to event in service compatible plano-stereoscopic MVC. |
| UHD | UHD | 0x0F | 0 | Link to alternate event instances also in UHD. |
| UHD | SFC-3DTV HEVC | 0x0F | 1 | Link to event in service frame compatible plano-stereoscopic. |
| SD | SUHD(8k) | 0x10 | 0 | Link to event in SUHD(8k) |
| HD | SUHD(8k) | 0x11 | 1 | Link to event in SUHD(8k) |
| UHD | SUHD(8k) | 0x12 | 2 | Link to event in SUHD(8k) |

# FIG. 82

| Syntax | Number of bit | Identifier |
|---|---|---|
| supplementary_vudio_descriptor() { | | |
| descriptor_tag | 8 | uimsbf |
| descriptor_length | 8 | uimsbf |
| descriptor_tag_extension | 8 | uimsbf |
| original_network_id | 8 | uimsbf |
| transport_stream_id | | |
| service_id | 8 | uimsbf |
| Video_linkage_type | 8 | uimsbf |
| for (i=0;i<N;i++) { | | |
| private_data_byte | 8 | uimsbf |
| } | | |
| } | | |

# FIG. 83

| Type of source event | Type of destination event | video linkage_type | Use-case |
|---|---|---|---|
| SD | UHD | 0×0F | Link to alternate channel in UHD |
| HD | UHD | 0×0F | Link to alternate channel in UHD |
| SD | SUHD (8k) | 0×10 | Link to alternate channel in SUHD. |
| HD | SUHD (8k) | 0×11 | Link to alternate channel in SUHD. |
| UHD | SUHD (8k) | 0×12 | Link to alternate channel in SUHD. |

# FIG. 84

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-1 service with ISO BMFF format. |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service (See Table 8.4). |
| @hidden | 0..1 | boolean | Indicates whether this service is hidden in the service list or shown to users. The default value is 'FALSE'. |
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| Linkageservice | | | |
| @Linkage_type | 0..1 | unsignedByte | Number that indicates the type of the linkage information |
| @link_type | 0..1 | unsignedByte | Number that indicates the type of the target service |
| @list_hidden | 0..1 | boolean | in the service list or shown to users. The default value is 'FALSE'. |
| @originalNetworkId | 0..1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-1 service with ISO BMFF format. |
| @serviceId | 0..1 | unsignedShort | Number that uniquely identifies this service within the scope of the originalNetworkId. |
| @Eventid | 0..1 | unsignedShort | Number that uniquely identifies this event within the scope of the service id. |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the service |
| @lang | 1 | lang | Language of the service name |
| ServiceLanguage | 0..N | lang | Available languages of the service |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 85

| 40 | Rock & co ABR | Colour change sapphire.. | ... | |
|----|----|----|----|----|
| 41 | BBC sports ABR | BBC HD preview | | ... |
| 50 | Channel 4 ABR | | Channel 4 UHD | ... |
| 51 | M.net : World Music Awards-1 ABR | | ... | |

# FIG. 86

# FIG. 87

| | | | | | |
|---|---|---|---|---|---|
| **Guide** | | | | | |

DTV Air 50 BBC HD

BBC HD Preview
12 : 00 - 15 : 30

. . .
Preview of upcoming programmes in HD from the BBC . . .

Channel View - All

| | | | | | |
|---|---|---|---|---|---|
| ▲ | 40 | Rocks & co ABR | Colour          change sapphire .. | ⋯ | |
| | 41 | BBC sports ABR | BBC HD preview | | ⋯ |
| | 50 | Channel 4 ABR | Channel 4 UHD | | ⋯ |
| ▼ | 51 | M.net : World Music Awards-1 ABR | ⋯ | | |

## FIG. 88

# FIG. 89

EP 4 002 856 A1

# FIG. 90

| Encoding service data for broadcast network | S90000 |

| Encoding service data for Internet network | S90010 |

| Generating signaling information for signaling service data | S90020 |

| Transmitting service data and signaling information | S90030 |

# FIG. 91

| Receiving broadcast signal | S91000 |

| Parsing the signaling information | S91010 |

| Decoding the service data based on signaling information | S91020 |

## INTERNATIONAL SEARCH REPORT

| International application No. |
| --- |
| **PCT/KR2020/008840** |

### A. CLASSIFICATION OF SUBJECT MATTER

**H04N 21/2381**(2011.01)i; **H04N 21/2343**(2011.01)i; **H04N 21/236**(2011.01)i; **H04N 21/235**(2011.01)i;
**H04N 21/438**(2011.01)i; **H04N 21/4402**(2011.01)i; **H04N 21/435**(2011.01)i; **H04N 21/434**(2011.01)i;
**H04N 21/4725**(2011.01)i

According to International Patent Classification (IPC) or to both national classification and IPC

### B. FIELDS SEARCHED

Minimum documentation searched (classification system followed by classification symbols)

H04N 21/2381; H04J 3/16; H04L 12/28; H04N 21/2343; H04N 21/2362; H04N 21/4405; H04N 21/235; H04N 21/438; H04N 21/4402; H04N 21/435; H04N 21/434; H04N 21/4725

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인터넷망(internet network), 방송 신호(broadcast signal), 서비스 데이터(service data), 시그널링(signalling), 디스크립터(descriptor)

### C. DOCUMENTS CONSIDERED TO BE RELEVANT

| Category* | Citation of document, with indication, where appropriate, of the relevant passages | Relevant to claim No. |
| --- | --- | --- |
| Y | US 8503447 B2 (LEE, Joon Hui et al.) 06 August 2013. See column 9, lines 64-67; column 15, lines 14-67; column 18, lines 21-26; claim 1; and figures 10A-10B and 24-25. | 1-20 |
| Y | KR 10-1814404 B1 (LG ELECTRONICS INC.) 04 January 2018. See paragraphs [0454]-[0457], [0508] and [0865]; and figures 18 and 22. | 1-20 |
| Y | Digital Video Broadcasting (DVB); Guidelines on implementation and usage of Service Information (SI). ETSI TS 101 211 V1.12.1. December 2013. See section 4.2.1.1.6. | 4-7,11-14 |
| A | KR 10-2016-0068740 A (SONY CORPORATION) 15 June 2016. See paragraphs [0214]-[0217]; claim 1; and figure 26. | 1-20 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 October 2020** | **15 October 2020** |

| Name and mailing address of the ISA/KR | Authorized officer |
| --- | --- |
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/008840**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2017-0107580 A (SAMSUNG ELECTRONICS CO., LTD.) 25 September 2017. See paragraphs [0059]-[0073]; claim 1; and figures 3-4. | 1-20 |

Form PCT/ISA/210 (second sheet) (July 2019)

**INTERNATIONAL SEARCH REPORT**
Information on patent family members

International application No.

**PCT/KR2020/008840**

| Patent document cited in search report | | | Publication date (day/month/year) | Patent family member(s) | | | Publication date (day/month/year) |
|---|---|---|---|---|---|---|---|
| US | 8503447 | B2 | 06 August 2013 | CN | 101399623 | A | 01 April 2009 |
| | | | | EP | 2040401 | A2 | 25 March 2009 |
| | | | | EP | 2040401 | A3 | 04 April 2012 |
| | | | | US | 2009-0086731 | A1 | 02 April 2009 |
| KR | 10-1814404 | B1 | 04 January 2018 | CN | 106464395 | B | 05 July 2019 |
| | | | | CN | 106105150 | A | 09 November 2016 |
| | | | | CN | 106464395 | A | 22 February 2017 |
| | | | | CN | 107210828 | A | 26 September 2017 |
| | | | | EP | 3247111 | A4 | 20 June 2018 |
| | | | | EP | 3267689 | A4 | 20 June 2018 |
| | | | | EP | 3267691 | A4 | 20 June 2018 |
| | | | | EP | 3247111 | A1 | 22 November 2017 |
| | | | | EP | 3267689 | A1 | 10 January 2018 |
| | | | | EP | 3267689 | B1 | 14 August 2019 |
| | | | | EP | 3267691 | A1 | 10 January 2018 |
| | | | | KR | 10-2016-0116335 | A | 07 October 2016 |
| | | | | KR | 10-2016-0116336 | A | 07 October 2016 |
| | | | | KR | 10-2018-0016622 | A | 14 February 2018 |
| | | | | KR | 10-2018-0072842 | A | 29 June 2018 |
| | | | | KR | 10-2016-0116334 | A | 07 October 2016 |
| | | | | KR | 10-1827277 | B1 | 08 February 2018 |
| | | | | KR | 10-1871727 | B1 | 27 June 2018 |
| | | | | KR | 10-1853670 | B1 | 02 May 2018 |
| | | | | KR | 10-1975343 | B1 | 07 May 2019 |
| | | | | US | 10362345 | B2 | 23 July 2019 |
| | | | | US | 10412443 | B2 | 10 September 2019 |
| | | | | US | 10609103 | B2 | 31 March 2020 |
| | | | | US | 10645203 | B2 | 05 May 2020 |
| | | | | US | 2018-0103286 | A1 | 12 April 2018 |
| | | | | US | 2018-0159644 | A1 | 07 June 2018 |
| | | | | US | 2018-0295167 | A1 | 11 October 2018 |
| | | | | US | 2018-0295399 | A1 | 11 October 2018 |
| | | | | US | 2019-0149641 | A1 | 16 May 2019 |
| | | | | US | 2019-0253746 | A1 | 15 August 2019 |
| | | | | US | 2019-0373305 | A1 | 05 December 2019 |
| | | | | US | 9872063 | B2 | 16 January 2018 |
| | | | | US | 10009639 | B2 | 26 June 2018 |
| | | | | US | 10015220 | B2 | 03 July 2018 |
| | | | | US | 10070162 | B2 | 04 September 2018 |
| | | | | US | 10200513 | B2 | 05 February 2019 |
| | | | | US | 10356132 | B2 | 16 July 2019 |
| | | | | US | 10412132 | B2 | 10 September 2019 |
| | | | | US | 10469919 | B2 | 05 November 2019 |
| | | | | US | 10499095 | B2 | 03 December 2019 |
| | | | | US | 10582274 | B2 | 03 March 2020 |
| | | | | US | 10637595 | B2 | 28 April 2020 |
| | | | | US | 10687121 | B2 | 16 June 2020 |
| | | | | US | 10721538 | B2 | 21 July 2020 |
| | | | | US | 10728590 | B2 | 28 July 2020 |
| | | | | US | 10749917 | B2 | 18 August 2020 |

Form PCT/ISA/210 (patent family annex) (July 2019)

**INTERNATIONAL SEARCH REPORT**
Information on patent family members

International application No.

**PCT/KR2020/008840**

| Patent document cited in search report | Publication date (day/month/year) | Patent family member(s) | | | Publication date (day/month/year) |
|---|---|---|---|---|---|
| | | US | 2016-0255394 | A1 | 01 September 2016 |
| | | US | 2016-0277198 | A1 | 22 September 2016 |
| | | US | 2016-0277778 | A1 | 22 September 2016 |
| | | US | 2016-0285933 | A1 | 29 September 2016 |
| | | US | 2017-0013028 | A1 | 12 January 2017 |
| | | US | 2017-0373918 | A1 | 28 December 2017 |
| | | US | 2017-0374429 | A1 | 28 December 2017 |
| | | US | 2018-0026733 | A1 | 25 January 2018 |
| | | US | 2018-0034870 | A1 | 01 February 2018 |
| | | US | 2018-0035153 | A1 | 01 February 2018 |
| | | US | 2018-0041556 | A1 | 08 February 2018 |
| | | US | 2018-0041782 | A1 | 08 February 2018 |
| | | US | 2018-0048695 | A1 | 15 February 2018 |
| | | US | 2018-0048854 | A1 | 15 February 2018 |
| | | US | 2018-0063561 | A1 | 01 March 2018 |
| | | US | 2018-0063598 | A1 | 01 March 2018 |
| | | US | 2018-0070111 | A1 | 08 March 2018 |
| | | US | 2018-0070152 | A1 | 08 March 2018 |
| | | US | 2018-0091836 | A1 | 29 March 2018 |
| | | US | 2018-0115796 | A1 | 26 April 2018 |
| | | WO | 2016-114559 | A1 | 21 July 2016 |
| | | WO | 2016-133296 | A1 | 25 August 2016 |
| | | WO | 2016-140477 | A1 | 09 September 2016 |
| | | WO | 2016-140478 | A1 | 09 September 2016 |
| | | WO | 2016-140479 | A1 | 09 September 2016 |
| | | WO | 2016-140483 | A1 | 09 September 2016 |
| | | WO | 2016-140486 | A1 | 09 September 2016 |
| | | WO | 2016-140500 | A1 | 09 September 2016 |
| | | WO | 2016-144031 | A1 | 15 September 2016 |
| | | WO | 2016-144072 | A1 | 15 September 2016 |
| | | WO | 2016-144083 | A1 | 15 September 2016 |
| | | WO | 2016-144118 | A1 | 15 September 2016 |
| | | WO | 2016-144142 | A1 | 15 September 2016 |
| | | WO | 2016-148489 | A2 | 22 September 2016 |
| | | WO | 2016-148489 | A3 | 01 December 2016 |
| | | WO | 2016-148497 | A1 | 22 September 2016 |
| | | WO | 2016-148537 | A1 | 22 September 2016 |
| | | WO | 2016-148547 | A1 | 22 September 2016 |
| | | WO | 2016-148551 | A1 | 22 September 2016 |
| | | WO | 2016-153241 | A1 | 29 September 2016 |
| | | WO | 2016-153273 | A1 | 29 September 2016 |
| | | WO | 2016-153274 | A1 | 29 September 2016 |
| | | WO | 2016-153326 | A1 | 29 September 2016 |
| | | WO | 2016-163772 | A2 | 13 October 2016 |
| | | WO | 2016-163772 | A3 | 01 December 2016 |
| KR 10-2016-0068740 A | 15 June 2016 | CA | 2925088 | A1 | 16 April 2015 |
| | | CN | 105594218 | B | 14 June 2019 |
| | | CN | 105594218 | A | 18 May 2016 |
| | | EP | 3055967 | A1 | 17 August 2016 |
| | | JP | 6151152 | B2 | 21 June 2017 |

International application No.

**PCT/KR2020/008840**

| Patent document cited in search report | Publication date (day/month/year) | Patent family member(s) | | Publication date (day/month/year) |
|---|---|---|---|---|
| | | JP | 2015-076860 A | 20 April 2015 |
| | | MX | 364571 B | 02 May 2019 |
| | | MX | 2016004210 A | 16 June 2016 |
| | | US | 10084832 B2 | 25 September 2018 |
| | | US | 10362076 B2 | 23 July 2019 |
| | | US | 10567455 B2 | 18 February 2020 |
| | | US | 2016-0197970 A1 | 07 July 2016 |
| | | US | 2019-0007471 A1 | 03 January 2019 |
| | | US | 2019-0268391 A1 | 29 August 2019 |
| | | WO | 2015-052899 A1 | 16 April 2015 |
| | | WO | 2015-052899 A9 | 19 November 2015 |
| KR 10-2017-0107580 A | 25 September 2017 | CN | 107211200 B | 17 April 2020 |
| | | CN | 107211200 A | 26 September 2017 |
| | | US | 10271094 B2 | 23 April 2019 |
| | | US | 10701437 B2 | 30 June 2020 |
| | | US | 2018-0027278 A1 | 25 January 2018 |
| | | US | 2019-0253750 A1 | 15 August 2019 |
| | | WO | 2016-129981 A1 | 18 August 2016 |

Form PCT/ISA/210 (patent family annex) (July 2019)